(19) Europäisches Patentamt
European Patent Office
Office européen des brevets

(11) **EP 3 598 214 B1**

(12) **EUROPÄISCHE PATENTSCHRIFT**

(45) Veröffentlichungstag und Bekanntmachung des Hinweises auf die Patenterteilung:
**28.05.2025 Patentblatt 2025/22**

(21) Anmeldenummer: **19187068.2**

(22) Anmeldetag: **19.01.2018**

(51) Internationale Patentklassifikation (IPC):
**G02C 7/06** *(2006.01)* **G02C 7/02** *(2006.01)*

(52) Gemeinsame Patentklassifikation (CPC):
**G02C 7/024; G02C 7/022; G02C 7/061; G02C 7/068;** G02C 2202/12

(54) **GLEITSICHT-BRILLENGLAS MIT VARIABLEM BRECHUNGSINDEX UND VERFAHREN ZU DESSEN ENTWURF UND HERSTELLUNG**

OPHTHALMIC SPECTACLE LENS HAVING A VARIABLE REFRACTIVE INDEX AND METHOD OF DESIGNING AND PRODUCING SAME

VERRE DE LUNETTE À FOYER PROGRESSIF AYANT UN INDICE DE RÉFRACTION VARIABLE ET SON PROCÉDÉ DE CONCEPTION ET DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.01.2017 EP 17152384**

(43) Veröffentlichungstag der Anmeldung:
**22.01.2020 Patentblatt 2020/04**

(62) Dokumentnummer(n) der früheren Anmeldung(en) nach Art. 76 EPÜ:
**18708326.6 / 3 555 695**

(73) Patentinhaber: **Carl Zeiss Vision International GmbH**
**73430 Aalen (DE)**

(72) Erfinder:
• **Kelch, Gerhard**
**73434 Aalen (DE)**
• **Menke, Christoph**
**73447 Oberkochen (DE)**
• **Wietschorke, Helmut**
**73433 Aalen (DE)**

(74) Vertreter: **Glawe, Delfs, Moll**
**Partnerschaft mbB**
**Postfach 13 03 91**
**20103 Hamburg (DE)**

(56) Entgegenhaltungen:
EP-A1- 0 318 035       EP-A1- 0 347 917
EP-A1- 2 177 943       WO-A1-99/13361
US-A1- 2010 238 400

• YUKI SHITANOKI ET AL: "Application of Graded-Index for Astigmatism Reduction in Progressive Addition Lens", APPLIED PHYSICS EXPRESS, vol. 2, 1 March 2009 (2009-03-01), JP, pages 032401, XP055392139, ISSN: 1882-0778, DOI: 10.1143/APEX.2.032401

**Beschreibung**

Die Erfindung betrifft ein Erzeugnis umfassend ein Gleitsicht-Brillenglas oder auf einem Datenträger befindliche Darstellung des Gleitsicht-Brillenglases nach dem Oberbegriff der Patentansprüche 1 und 8, ein computerimplementiertes Verfahren zum Entwerfen eines Gleitsicht-Brillenglases nach dem Oberbegriff der Patentansprüche 16, 17 und 18 sowie ein Verfahren zum Herstellen eines Gleitsicht-Brillenglases nach dem Anspruch 24 sowie ein Computerprogramm nach dem Patentanspruch 22 und ein computerlesbares Medium nach dem Patentanspruch 23.

Gleitsicht-Brillengläser sind seit Jahrzehnten in der Brillenoptik bekannt und verbreitet. Wie Mehrstärken-Brillengläser (i.A. Zwei- und Dreistärken-Brillengläser) stellen sie dem Alterssichtigen (Presbyopen) eine zusätzliche optische Wirkung im unteren Teil des Glases zum Betrachten naher Objekte, z.B. beim Lesen, zur Verfügung. Diese wird benötigt, da die Augenlinse mit zunehmendem Alter ihre Eigenschaft, auf nahe Objekte fokussieren zu können, mehr und mehr einbüßt. Gleitsichtgläser bieten gegenüber diesen Mehrstärkengläsern den Vorteil, eine stufenlose Zunahme der optischen Wirkung vom Fernteil zum Nahteil bereitzustellen, so dass nicht nur in Ferne und Nähe, sondern auch in allen Zwischenentfernungen ein scharfes Sehen gewährleistet ist.

Das Fernteil ist nach Abschnitt 14.1.1 der DIN EN ISO 13666:2013-10 das Teil eines Mehrstärken- oder Gleitsicht-Brillenglases, das die dioptrische Wirkung für das Sehen in die Ferne besitzt. Entsprechend ist das Nahteil nach Abschnitt 14.1.3 dieser Norm das Teil eines Mehrstärken- oder Gleitsicht-Brillenglases, das die dioptrische Wirkung für das Sehen in die Nähe besitzt.

Gleitsicht-Brillengläser werden bisher üblicherweise aus einem Material mit einheitlicher konstanter Brechzahl hergestellt. Das bedeutet, dass die dioptrische Wirkung des Brillenglases ausschließlich durch entsprechende Formgebung der beiden an Luft grenzenden Flächen (Vorder- bzw. objektseitige Fläche, sowie Rück- bzw. augenseitige Fläche entsprechend den in den Abschnitten 5.8 und 5.9 der DIN EN ISO 13666:2013-10 bereitgestellten Definitionen) des Brillenglases festgelegt ist. Unter dioptrischer Wirkung ist nach der Definition des Abschnitts 9.3 der DIN EN ISO 13666:2013-10 der Sammelbegriff für die fokussierende und die prismatische Wirkung eines Brillenglases zu verstehen.

Um die stufenlose Zunahme der fokussierenden Wirkung in einem Gleitsicht-Brillenglas aus einem Material mit einheitlicher konstanter Brechzahl zu erzeugen, muss auf mindestens einer der beiden Brillenglasflächen eine entsprechende kontinuierliche Änderung der Flächenkrümmung vorhanden sein, wie dies auch Abschnitt 8.3.5 der Norm DIN EN ISO 13666:2013-10 reflektiert, welcher den Begriff "Gleitsicht-Brillenglas" als "Brillenglas mit mindestens einer Gleitsichtfläche und einer zunehmenden (positiven) Wirkung, wenn der Brillenträger nach unten blickt" definiert. Eine Gleitsichtfläche ist nach Abschnitt 7.7 eine nichtrotationssymmetrische Fläche mit einer kontinuierlichen Änderung der Krümmung über die gesamte Gleitsichtfläche oder einen Teil davon, die im Allgemeinen dazu dient, einen zunehmenden Nahzusatz oder eine Degressionswirkung bereitzustellen.

Die WO 89/04986 A1 geht zunächst von Gleitsicht-Brillengläsern (in diesem Dokument wird der Ausdruck "progressive Brillengläser" verwendet) der vorstehend beschriebenen Art aus. Dem Dokument entnimmt man auf Seite 1, 2. und 3. Abschnitt, dass "der Herstellvorgang und insbesondere das Polieren" von Gleitsichtflächen von Gleitsicht-Brillengläsern aufgrund deren "sehr stark von der sphärischen Form abweich[enden]" Flächengestaltung "schwierig" sei und dass die hergestellte Fläche stark von der berechneten Soll-Form abweiche. "Darüber hinaus" sei "es - zumindest mit einer progressiven Fläche - nicht möglich, die Abbildungsfehler und insbesondere den Astigmatismus und die Verzeichnung über das gesamte Glas klein zu halten."

Die WO 89/04986 A1 führt weiter auf Seite 2 aus, dass zwar Brillengläser mit sich änderndem Brechungsindex bekannt seien, die Realisierung von progressiven Brillengläsern durch Ersatz der komplizierten Flächengestaltung der Gleitsichtfläche durch einen variierenden Brechungsindex in der Vergangenheit vermutlich an dessen erwarteter ähnlich komplizierter Brechungsindex-Funktion gescheitert sei.

Die WO 89/04986 A1 behauptet, "bei vergleichbaren Abbildungseigenschaften eine vereinfachte Herstellung" zu erreichen, "wenn [...] ein sich wenigstens längs der Hauptblicklinie im Zwischenteil ändernder Brechungsindex des Glasmaterials zumindest teilweise zur Zunahme des Brechwerts beiträgt." Dies wird allerdings unter der Zielsetzung realisiert, dass "die Unterschiede der Krümmungsradien zwischen Fernteil und Nahteil abgebaut [werden], so dass zum einen die Bearbeitung eines Rohlings mit sphärischen Begrenzungsflächen zur Herstellung einer progressiven Fläche verkürzt wird" und "zum anderen [...] der Poliervorgang, der bei progressiven Brillengläsern gemäß dem Stand der Technik wesentlichen dem eines sphärischen Glases entspricht, vereinfacht und das Ergebnis des Poliervorgangs verbessert [wird]". Zum Zeitpunkt des Anmeldetags der WO 89/04986 A1 war es nämlich üblich, großflächige Polierwerkzeuge einzusetzen, deren Polierflächen in etwa die Größe der zu polierenden Gleitsichtfläche aufwies.

Weiter führt das Dokument auf Seite 5, Zeile 15ff aus: Wenn zusätzlich auch der Astigmatismus entlang des Hauptmeridians durch die Variation des Brechungsindex verringert wird, so bedeutet dies, dass auch die Einschränkung bei der Gestaltung des Brillenglases, dass der Flächenastigmatismus längs des Hauptmeridians bzw. der Hauptblicklinie klein sein soll, wegfällt, so dass das [...] Brillenglas nicht dem Satz von Minkwitz unterworfen ist, und das Brillenglas unter anderen Gesichtspunkten wesentlich günstiger gestaltet werden kann.

Erklärtes Ziel dieses Dokuments ist es, auf einfache Weise polierbare Flächen zu erhalten, indem die Brechungsindexvariation entsprechend kompliziert gestaltet wird. Ausdrücklich wird auf Seite 6, zweitletzter Absatz erklärt: "Dabei ist es im Extremfall sogar möglich, dass beide Flächen des progressiven Brillenglases sphärische Flächen sind. Selbstverständlich ist es aber auch möglich, rotationssymmetrische asphärische Flächen zu verwenden." Andererseits äußert das Dokument keine Einschränkung hinsichtlich der Komplexität der Brechungsindexfunktion, die sich ausweislich des letzten Satzes auf der Seite 6 "beispielsweise mittels Spline-Funktionen beschreiben" lassen kann.

Das Dokument offenbart zwei Ausführungsbeispiele. Beim zweiten Ausführungsbeispiel "[sind] sowohl die Vorderfläche als auch die augenseitige Fläche [...] sphärische Flächen" (siehe ebd., S. 11, letzter Satz). Beim ersten Ausführungsbeispiel besitzt die Vorderfläche einen Hauptmeridian in Form eines Kreises (vgl. ebd. S. 12, Z. 6-13) und senkrecht dazu die Gestalt von Kegelschnitten (vgl. ebd., S. 11, Z. 6-14). Die Rückseite ist bei dem ersten Ausführungsbeispiel sphärisch.

Zum ersten Ausführungsbeispiel weist das Dokument "ausdrücklich [...] darauf hin [...], dass bei der Optimierung die Korrektur von Abbildungsfehlern nicht beachtet worden ist, und dass sich dennoch Gläser mit sehr guten Abbildungseigenschaften in den seitlichen Bereichen ergeben haben. Eine weitere Verbesserung der Abbildungseigenschaften in den Bereichen seitlich des Hauptmeridians erhält man durch weitere Optimierung der Indexfunktion".

Die WO 99/13361 A1 beschreibt ein sogenanntes "MIV"-Linsenobjekt, welches alle funktionellen Merkmale von Gleitsichtgläser aufweisen soll, nämlich ein Fernteil, ein Nahteil und eine Progressionszone, deren Randbereiche aber frei von astigmatischen Aberrationen sein sollen. Dieses Dokument beschreibt, dass ein derartiges Linsenobjekt eine sphärische Vorder- und eine sphärische Rückfläche aufweisen kann. Das Linsenobjekt soll eine Progressionszone mit vom Fernteil zum Nahteil kontinuierlich zunehmendem Brechungsindex aufweisen. Mit einer derartigen Ausführung lassen sich allerdings in der Regel nicht alle gewünschten Additionen realisieren. Das Dokument führt daher aus: "Falls gewünscht, kann der Bereich von Zusätzen überbrückt werden, falls dies durch den einzigen variablen Brechungsindex unmöglich ist, auch durch Herstellen der Linsen mit einem Materialrohblock mit variablem Brechungsindex, wie oben beschrieben, und Bilden von Kurven mit variabler Geometrie wie die herkömmlicher progressiver Linsen, wodurch das Ergebnis erzielt wird, dass sie im Vergleich zu diesen letzteren eine viel höhere Wirkung aufweisen, da die Linse mit variierendem Brechungsindex in den verschiedenen Bereichen die gewünschte Addition unter Verwendung viel weniger differenzierter Kurven zwischen der Fernteilwirkung und der Nahteilwirkung mit einer Verringerung der Aberrationsfläche und einer Vergrößerung der Nutzsichtfläche bereitstellt."

Die US 2010/238400 A1 beschreibt jeweils aus mehreren Schichten bestehende Gleitsicht-Brillengläser. Wenigstens eine der Schichten kann einen variierenden Brechungsindex aufweisen, welcher bezüglich zweier orthogonal zueinander verlaufenden Meridianen beschrieben wird. Darüber hinaus kann zumindest eine der Flächen einer der Schichten eine progressive Flächengestalt aufweisen. Es ist beschrieben, dass der Brechungsindexverlauf in horizontaler Richtung zur Vollkorrektur der durch die Geometrie der Flächen verwendet werden kann.

Yuki Shitanoki et al: "Application of Graded-Index for Astigmatism Reduction in Progressive Addition Lens", Applied Physics Express, Bd. 2, 1. März 2009, Seite 032401 beschreibt durch Vergleich zweier mit Hilfe derselben Formschale abgegossener Gleitsicht-Brillengläser der Astigmatismus bei einem Gleitsicht-Brillenglas mit einem Brechungsindexgradienten gegenüber einem Gleitsicht-Brillenglas ohne einen Brechungsindexgradienten verringert werden kann.

Im Hinblick auf die Unterscheidbarkeit des Gegenstands der vorliegenden Patentanmeldung von den in der US 2010/238400 A1 beschriebenen Mehrschichtbrillengläsern wird hiermit ausgeführt, dass Brillengläser regelmäßig einem oder mehreren Veredelungsprozessen unterzogen werden. Insbesondere werden ein- oder beidseitig Funktionsschichten appliziert. Derartige Funktionsschichten sind Schichten, die die Brillengläser mit vorbestimmten und für den Brillenträger vorteilhaften Eigenschaften ausstatten, die die Brillengläser allein aufgrund der Eigenschaften des Grund- oder Trägermaterials, auf das die Funktionsschichten ggf. appliziert werden, und der Formgebung nicht hätten. Derartige vorteilhafte Eigenschaften sind neben optischen Eigenschaften wie z.B. Entspiegelung, Verspiegelung, Lichtpolarisierung, Färbung, Selbsttönung usw. auch mechanische Eigenschaften wie Härtung, Verminderung des Anhaftens von Schmutz oder des Beschlagens usw. und/oder elektrische Eigenschaften wie Abschirmung von elektromagnetischer Strahlung, Leitung von elektrischem Strom usw. und/oder andere physikalische oder chemische Eigenschaften. Beispiele für Funktionsbeschichtungen entnimmt man z.B. den Dokumenten WO 10/109154 A1, WO 01/55752 A1 und DE 10 2008 041 869 A1. Diese Funktionsschichten haben keinen oder einen vernachlässigbaren Einfluss auf die im Rahmen der vorliegenden Patentanmeldung diskutierten dioptrischen Eigenschaften des Brillenglases. Die in der US 2010/238400 A1 beschriebenen Schichten haben demgegenüber einen nicht zu vernachlässigenden Einfluss auf die dioptrische Wirkung des Gleitsicht-Brillenglases.

Die EP 2 177 943 A1 beschreibt ein Verfahren zum Optimieren eines optischen Systems, wie z.B. einer ophthalmischen Linse, mit Hilfe einer Kostenfunktion. Die ophthalmische Linse ist definiert durch die Koeffizienten der Gleichungen aller seiner Oberflächen, den Brechungsindex des Brillenglases und die Position jeder Oberfläche relativ zueinander (Versatz, Drehung und Neigung). In einer Ausführungsform werden mindestens die Koeffizienten der Gleichungen von zwei optischen Oberflächen eines Arbeitsoptiksystems modifiziert, um das optische System zu erhalten.

Dem Dokument entnimmt man, dass es im Allgemeinen schwierig ist, eine Linse unter Berücksichtigung einer Vielzahl von Kriterien unterschiedlicher Natur zu optimieren, wenn nur die Gleichung einer Oberfläche als variabel betrachtet wird. Diese Ausführungsform ermöglicht es optischen Konstrukteuren, eine größere Anzahl von Kriterien im Optimierungsprozess zu berücksichtigen, und ebnet den Weg für die geometrische Leistungssteigerung des optischen Systems und eine bessere Antwort auf die physiologischen Bedürfnisse von Brillenträgern. Der Nutzen für den Träger wird verbessert, wenn mehrere Oberflächen des optischen Systems gleichzeitig optimiert werden.

In einer Ausführungsform, in der das zu optimierende optische System mindestens zwei optische Oberflächen umfasst, wird die Modifikation des optischen Arbeitssystems so betrieben, dass zumindest der Index des optischen Arbeitssystems geändert wird. Es ist möglich, eine Linse aus einem inhomogenen Material herzustellen, bei dem im Brechungsindex ein Gradient vorliegt (bekannt als GRIN-Linse). Beispielsweise kann die Verteilung des Index, der optimiert ist, axial oder radial sein und / oder von der Wellenlänge abhängen.

Die EP 0 347 917 A1 beschreibt ein Brillenglas mit einer vorderen und einer augenseitigen Begrenzungsfläche sowie mit einem sich ändernden Brechungsindex, der zur Korrektur der Abbildungsfehler beiträgt. Das Brillenglas zeichnet sich durch wenigstens eine Schar von Niveauflächen mit konstantem Brechungsindex aus, die in Richtung ihrer Flächennormalen in allen Punkten jeweils gleichen Abstand haben, und die bzw. deren Verlängerung die Achse, die die Glasscheitel der Vorderfläche und der augenseitigen Fläche verbindet, schneiden.

Das Dokument führt aus, dass die Variation des Brechungsindex regelmäßig zur Verringerung der Bildfehler von Einstärken-Gläsern bei speziell gewählter Flächengestaltung und/oder zur Reduktion der Mittendicke eingesetzt wird. Es ist jedoch auch möglich, den Gradienten zur Erzeugung einer astigmatischen und/oder progressiven Wirkung zu verwenden, wobei die Flächengestaltung zur astigmatischen und/oder progressiven Wirkung nichts oder nur teilweise beiträgt.

Der WO 2011/093929 A1 entnimmt man ein Gleitsichtbrillenglas mit zwei Gleitsichtflächen, bei dem die Rückfläche so gestaltet ist, dass das Minimum des Betrags der mittleren Krümmung im Progressionskanal ist.

Die Aufgabe der Erfindung wird nunmehr darin gesehen, ein Gleitsicht-Brillenglas bereitzustellen, welches gegenüber den aus dem Stand der Technik bekannten Gleitsicht-Brillengläsern weiter verbesserte optische Eigenschaften für den Brillenträger aufweist und ein Verfahren bereitzustellen, mit welchem ein Gleitsicht-Brillenglas mit weiter verbesserten optischen Abbildungseigenschaften entworfen und hergestellt werden kann.

Diese Aufgabe wird durch ein Erzeugnis mit den Merkmalen der Patentansprüche 1 und 8 und ein Verfahren mit den Merkmalen der Patentansprüche 16, 17 und 18 gelöst.

Vorteilhafte Ausführungen und Weiterbildungen sind Gegenstand der Unteransprüche. Während die WO 89/04986 A1 vorschlägt, durch Einführung einer komplizierten aber entgegen früheren Annahmen technisch realisierbaren Brechungsindexverteilung die Komplexität der notwendigen Flächengeometrie zu verringern, um deren Herstellung zu vereinfachen (siehe ebd., S. 2, 4. Abschnitt, letzte Zeile; S. 4, erster Abschnitt, letzter Satz; Seite 5, erster Abschnitt; Seite 5, zweiter Abschnitt; Seite 5, letzter Abschnitt, letzter Satz; Seite 6, zweitletzter Abschnitt) und auf diese Weise die die optischen Eigenschaften beeinträchtigenden großen Abweichungen der gefertigten Fläche von der berechneten Fläche zu reduzieren (siehe ebd. S. 1, 3. Abschnitt) haben die Erfinder erkannt, dass dieses Vorgehen nicht zwangsläufig zu Gleitsicht-Brillengläsern mit für den Brillenträger besseren optischen Eigenschaften führt. Die Erfinder haben erkannt, dass es auf das Zusammenspiel des Grads der Komplexität der Geometrie der Gleitsichtfläche und des Grads der Komplexität der Brechungsindexverteilung ankommt. Abweichend von der in der WO 89/04986 A1 beschriebenen Lösung schlagen die Erfinder daher ein Erzeugnis umfassend ein Gleitsicht-Brillenglas oder auf einem Datenträger befindliche Darstellung des Gleitsicht-Brillenglases vor. Das Gleitsicht-Brillenglas weist eine Vorderfläche und eine Rückfläche sowie einen räumlich variierenden Brechungsindex auf. Die Vorderfläche oder die Rückfläche oder Vorder- und Rückfläche sind als Gleitsichtfläche ausgebildet. Das Gleitsicht-Brillenglas zeichnet sich nach der Erfindung dadurch aus, dass die als Gleitsichtfläche ausgebildete Vorderfläche als Freiformfläche ausgebildet ist oder dass die als Gleitsichtfläche ausgebildete Rückfläche als Freiformfläche ausgebildet ist. Es ist also auch der Fall eingeschlossen, bei dem nur eine der beiden Flächen lediglich als Freiformfläche vorliegt.

Unter dem Ausdruck "auf einem Datenträger befindliche Darstellung eines Gleitsicht-Brillenglases" versteht man im Rahmen der vorliegenden Erfindung z.B. eine in einem Speicher eines Computers gespeicherte Darstellung des Gleitsicht-Brillenglases.

Die Darstellung des Gleitsicht-Brillenglases umfasst insbesondere eine Beschreibung der geometrischen Gestalt und des Mediums des Gleitsicht-Brillenglases. Eine derartige Darstellung kann z.B. eine mathematische Beschreibung der Vorderfläche, der Rückfläche, der Anordnung dieser Flächen zueinander (einschließlich der Dicke) und der Randbegrenzung des Gleitsicht-Brillenglases sowie der Brechzahlverteilung des Mediums, aus dem das Gleitsicht-Brillenglas bestehen soll, umfassen. Die Darstellung kann in kodierter oder gar in verschlüsselter Form vorliegen. Unter Medium ist hier das Material/die Materialien bzw. der Stoff gemeint, aus dem das Gleitsicht-Brillenglas gefertigt ist. Das Gleitsicht-Brillenglas kann auch aus mehreren Schichten bestehen, z.B. auch aus einem Dünnstglas mit einer Dicke zwischen 10 $\mu$m und 500 $\mu$m und darauf aufgebrachtem Kunststoff.

Die Vorderfläche oder objektseitige Fläche eines Brillenglases ist nach Abschnitt 5.8 der DIN EN ISO 13666:2013-10 die Fläche eines Brillenglases, die bestimmungsgemäß in der Brille vom Auge abgewandt liegt. Demgemäß ist nach Abschnitt 5.9 dieser Norm die Rückfläche die augenseitige Fläche, also die Fläche eines Brillenglases, die bestimmungsgemäß in der Brille dem Auge zugewandt liegt.

Eine Gleitsichtfläche ist nach Abschnitt 7.7 der DIN EN ISO 13666:2013-10 eine nichtrotationssymmetrische Fläche mit einer kontinuierlichen Änderung der Krümmung über die gesamte Fläche oder einen Teil davon, die im Allgemeinen dazu dient, einen zunehmenden Nahzusatz oder eine Degressionswirkung bereitzustellen. Eine kontinuierliche Änderung schließt sprunghafte Änderungen aus. Im Allgemeinen bedeutet insbesondere im Rahmen der Erfindung, dass der Nahzusatz oder die Degressionswirkung bereitgestellt werden kann aber nicht muss. Insbesondere kann im Rahmen der vorliegenden Erfindung der räumlich variierende Brechungsindex zumindest teilweise diese Aufgabe übernehmen. Jede Freiformfläche ist nach dieser Definition eine Gleitsichtfläche aber nicht umgekehrt.

Unter einer Freiformfläche versteht man im weiteren Sinn eine komplexe Fläche, die sich insbesondere mittels ausschließlich (insbesondere stückweise) polynomialer Funktionen (insbesondere polynomiale Splines, wie z.B. bikubische Splines, höhergradige Splines vierten Grades oder höher, Zernike-Polynome, Forbes-Flächen, Tschebyschew-Polynome, Fourierreihen, polynomiale Non-uniform rational B-Splines (NURBS)) darstellen lässt. Hiervon zu unterscheiden sind einfache Flächen, wie z.B. sphärische Flächen, asphärische Flächen, zylindrische Flächen, torische Flächen oder auch die in der WO 89/04986 A1 beschriebenen Flächen, die zumindest längs des Hauptmeridians als Kreis beschrieben sind (vgl. ebd. S. 12, Z. 6-13). Anders ausgedrückt lassen sich Freiformflächen nicht in Form klassischer Regelkörper wie z.B. sphärische Flächen, asphärische Flächen, zylindrische Flächen, torische Flächen oder auch die in der WO 89/04986 A1 beschriebenen Flächen, darstellen (siehe z.B. https://www.computerwoche.de/a/die-natur-kennt-auch-nur-freiformflaechen, 1176029 heruntergeladen am 18.1.2018; http://www.megacad.de/kennenlernen/megacad schulungen/schulungsinhalte/schulung-freiformflaechen.html heruntergeladen am 18.1.2018) jedoch beispielsweise mittels ausschließlich (insbesondere stückweise) polynomialer Funktionen (insbesondere polynomiale Splines, wie z.B. bikubische Splines, höhergradige Splines vierten Grades oder höher, Zernike-Polynome, Forbes-Flächen, Tschebyschew-Polynome, Fourierreihen, polynomiale Non-uniform rational B-Splines (NURBS)). Freiformflächen sind demnach Flächen, die keiner Regelgeometrie entsprechen (siehe z.B. https://www.infograph.de/de/nurbs heruntergeladen am 18.1.2018; https://books.google.de/books?id=QpugBwAAQBAJ&pg=PA 101 &lpg=PA 101 &dq=regelgeome trie+definition&source=bl&ots=CJjmQwghvo&sig=MvsGvOsqbAVEygCaW-JOhfJ99jw&hl=de&sa=X&ved=0ahUKEwi_jcD5y-HYAhXDXCwKHUaQCBw4ChDoAQgsMAI#v=onepage&q=regelgeometrie%20definition&f= false heruntergeladen am 18.1.2018) oder die nicht mittels Formen der analytischen Geometrie beschreibbar sind (siehe z.B. https://books.google.de/books?id=LPzBgAAQBAJ&pg=         PA26&1pg=PA26&dq=regelgeometrie+definition&source=bl&ots=e1upL5-jinn&sig=hUNimu8d    eH5x8OvCiYsa242ddn8&h1=de&sa=X&ved=0ahUKEwi_jcD5y-HYAhXDXCwKHUaQCBw4Ch-DoAQgvMAM#v=onepage&q=regelgeometrie%20definition& f=false heruntergeladen am 18.1.2018).

Die eingangs beschriebene Aufgabe wird durch die nachfolgend als Varianten gekennzeichneten Ausführungen eines Gleitsicht-Brillenglases vollumfänglich gelöst.

In weiterer Ausgestaltung der Erfindung ist vorgesehen, dass die Freiformfläche eine Freiformfläche im engeren Sinn entsprechend dem Abschnitt 2.1.2 der DIN SPEC 58194 vom Dezember 2015 ist, nämlich eine in Freiformtechnologie gefertigte Brillenglasfläche, die im Rahmen der Grenzen der Differentialgeometrie mathematisch beschrieben wird und weder punkt- noch achsensymmetrisch ist.

Weiter insbesondere kann die Freiformfläche keine Punktsymmetrie, keine Achsensymmetrie, keine Rotationssymmetrie und keine Symmetrie bzgl. einer Symmetrieebene aufweisen. Obwohl es günstig ist, jede Beschränkung hinsichtlich der Flächengeometrie aufzuheben, ist es in Anbetracht derzeit üblicher Anforderungen an die optischen Eigenschaften von Gleitsicht-Brillengläsern hinreichend, nur Freiformflächen mit einem hohen Grad an Komplexität als Gleitsichtflächen zuzulassen. Lässt man darüber hinaus dasselbe Maß an Komplexität für die Brechungsindexverteilung über das Gleitsicht-Brillenglas zu und zwar zumindest in zwei oder vorzugsweise in drei Raumdimensionen, so werden diese Gleitsicht-Brillengläsern den Anforderungen der Brillenträger an deren optischen Eigenschaften in höchstem Maße gerecht.

Eine Variante der Erfindung besteht bei einem erfindungsgemäßen Gleitsicht-Brillenglas, welches einen Progressionskanal aufweist, darin, dass die als Freiformfläche ausgebildete Vorderfläche so gestaltet ist, dass die mittlere Krümmung im Progressionskanal maximal ist und zur Peripherie und/oder nach unten abfällt. Alternativ oder zusätzlich kann auch die als Freiformfläche ausgebildete Rückfläche so gestaltet sein, dass die mittlere Krümmung im Progressionskanal minimal ist und zur Peripherie und/oder nach unten zunimmt. Anders ausgedrückt ist die als Freiformfläche ausgebildete Vorderfläche so gestaltet, dass das Maximum des Betrags der mittleren Krümmung der Vorderfläche im Progressionskanal ist und/oder die als Freiformfläche ausgebildete Rückfläche ist so gestaltet, dass das Minimum des Betrags der mittleren Krümmung der Rückfläche im Progressionskanal ist.

Der Progressionskanal ist dabei nach DIN EN ISO 13666:2013-10 Absatz 14.1.25 der Bereich eines Gleitsicht-Brillenglases, der scharfes Sehen für Entfernungen ermöglicht, die zwischen der Ferne und der Nähe liegen.

Derartige Flächen können mit den heute verfügbaren Produktionsmethoden mit höchster Genauigkeit hergestellt werden. Insbesondere bei der Wahl dieser Flächengeometrie für die Vorderfläche ergeben sich Vorteile bei der Herstellung. Der Polierabtrag unter Verwendung derzeit gängiger Polierwerkzeuge, deren wenigstens annähernd sphärische Polierfläche in etwa einem Drittel der zu polierenden Brillenglasfläche entspricht, kann hinreichend homogen über der zu polierenden Brillenglasfläche gehalten werden, so dass die Abweichung von der berechneten Brillenglasgeometrie vergleichsweise gering ist. Die Abweichung der tatsächlichen optischen Eigenschaften von den berechneten optischen Eigenschaften des Brillenglases ist damit höchst gering.

Eine weitere Variante der Erfindung ist dadurch gekennzeichnet, dass das erfindungsgemäße Gleitsicht-Brillenglas so gestaltet ist, dass es für den Gleitsicht-Brillenträger die nachfolgend beschriebenen gegenüber einem Vergleichs-Gleitsicht-Brillenglas, welches keine räumliche Brechungsindexvariation aber eine identische Verteilung des sphärischen Äquivalents aufweist, vorteilhafteren optischen Eigenschaften besitzt.

Erläuternd wird ausgeführt, dass ein Brillenglas für eine vorbestimmte Anordnung vor einem Auge eines Brillenträgers und für eine oder mehrere vorbestimmte Objektentfernungen, unter denen der Brillenträger ein Objekt scharf wahrnehmen soll, konzipiert ist. In einer davon abweichenden Anordnung vor dem Auge des Brillenträgers und für andere Objektentfernungen ist das Brillenglas wertlos oder die optische Qualität ist für den Brillenträger stark eingeschränkt. Dies gilt umso mehr für Gleitsicht-Brillengläser. Demnach ist ein Gleitsicht-Brillenglas lediglich über die Kenntnis der vorbestimmten Anordnung vor dem Auge des Brillenträgers charakterisiert. Anders ausgedrückt ist die Kenntnis der Anordnung des Brillenglases in Ort und Ausrichtung im Raum in Bezug auf das Auge notwendig aber auch hinreichend, um dieses in eineindeutiger Weise in dessen optischer Wirkung für den Brillenträger zu charakterisieren. Darüber hinaus ist ein Optiker auch nur dann in der Lage, das Brillenglas lagerichtig in eine Brillenfassung einzusetzen, wenn er die Anordnung des Brillenglases in Ort und Ausrichtung in Bezug auf das Auge des Brillenträgers kennt. Eine Darstellung der vorbestimmten Anordnung des Gleitsicht-Brillenglases vor einem Auge eines Gleitsicht-Brillenträgers, für den das Gleitsicht-Brillenglas bestimmt ist, ist damit untrennbarer Bestandteil des Produkts (Erzeugnis) oder der Handelsware "Gleitsicht-Brillenglas''.

Der Hersteller bringt zum Zweck der Gewährleistung einer lage- und orientierungsrichtigen Anordnung im Gleitsicht-Brillenglas durch den Optiker permanent vorhandene Markierungen an. Der DIN EN ISO 13666:2013-10 entnimmt man unter 14.1.24, dass diese als Markierung zur Ausrichtung oder Permanentmarkierung bezeichnet wird und vom Hersteller angebracht wurde, um die horizontale Orientierung des Brillenglases [...] oder die Rekonstruktion weiterer Bezugspunkte zu ermöglichen. Nach Abschnitt 6.1 der DIN EN ISO 14889:2009 muss der Hersteller rohkantiger fertiger Brillengläser durch Angaben auf der Einzelverpackung oder in einem Begleitdokument eine Identifizierung ermöglichen. Insbesondere hat er Korrekturwerte für Gebrauchssituationen, die Nahzusatzwirkung, die Typbezeichnung oder den Handelsnamen und die notwendige Information, um den Nahzusatz zu messen. Aus der Typbezeichnung oder dem Handelsnamen ergibt sich das von dem Hersteller dem Gleitsicht-Brillenglas zugrunde gelegte Objektabstandsmodell. Unter Hersteller ist nach 3.1 dieser Norm eine natürliche oder juristische Person, die das rohkantige fertige Brillenglas auf den Markt bringt, zu verstehen.

Bei dieser erfindungsgemäßen Variante umfasst das Erzeugnis ferner eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist. Wie bereits ausgeführt weist das erfindungsgemäß ausgebildete Gleitsicht-Brillenglas (nicht nur) bei dieser Variante eine Verteilung eines sphärisches Äquivalents für die vorbestimmte Anordnung des Gleitsicht-Brillenglases vor dem Auge des Gleitsicht-Brillenträgers, für den das Gleitsicht-Brillenglas bestimmt ist, auf. Ferner weist das erfindungsgemäß ausgebildete Gleitsicht-Brillenglas einen Progressionskanal mit einer Breite auf. Das erfindungsgemäß nach dieser Variante konzipierte Gleitsicht-Brillenglas besitzt einen Brechungsindex, der räumlich derart variiert, dass die Breite des Progressionskanals des Gleitsicht-Brillenglases wenigstens in einem Schnitt oder über die gesamte Länge des Progressionskanals größer ist, als die Breite des Progressionskanals eines Vergleichs-Gleitsicht-Brillenglases für eine gleiche Verordnung mit gleicher Verteilung des sphärischen Äquivalents bei gleicher Anordnung des Vergleichs-Gleitsicht-Brillenglases vor dem Auge des Gleitsicht-Brillenträgers aber räumlich nicht variierendem Brechungsindex.

Der Begriff "sphärisches Äquivalent" ist hierbei definiert als das arithmetische Mittel der fokussierenden Wirkung, wie dies beispielsweise aus Albert J. Augustin: Augenheilkunde. 3., komplett überarbeitete und erweiterte Auflage. Springer, Berlin u. a. 2007, ISBN 978-3-540-30454-8, S. 1272 oder Heinz Diepes, Ralf Blendowske: Optik und Technik der Brille. 1. Auflage, Optische Fachveröffentlichung GmbH, Heidelberg 2002, ISBN 3-922269-34-6, S. 482 hervorgeht:

$$Sph\ddot{a}risches\ \ddot{A}quivalent = Sph\ddot{a}re + \frac{1}{2} \times Zylinder$$

Die fokussierende Wirkung ist nach Abschnitt 9.2 der DIN EN ISO 13666:2013-10 der Sammelbegriff für die sphärische und astigmatische Wirkung eines Brillenglases. Die sphärische Wirkung ist in der Gleichung durch "Sphäre" abgekürzt, die astigmatische Wirkung ist repräsentiert durch "Zylinder". Für den Begriff sphärisches Äquivalent wird auch der Begriff mittlere sphärische Wirkung verwendet.

Der Progressionskanal ist -wie oben bereits ausgeführt wurde- nach der DIN EN ISO 13666:2013-10 Absatz 14.1.25 der Bereich eines Gleitsicht-Brillenglases, der scharfes Sehen für Entfernungen ermöglicht, die zwischen der Ferne und der Nähe liegen. In der Mitte des Progressionskanals verläuft die Hauptblicklinie, welche die Gesamtheit aller Durchblickpunkte durch die Gleitsichtfläche bei der Blickbewegung des Auges auf Objektpunkte geradeaus vor dem Brillenträger von der Ferne zur Nähe darstellt. Die Hauptblicklinie wird regelmäßig auf der Vorderfläche angenommen. Anders ausgedrückt wird als Hauptblicklinie diejenige Linie auf der Vorderfläche eines Brillenglases bezeichnet, die die Hauptdurchblickpunkte durch das Gleitsichtglas für das Sehen in die Ferne und in die Nähe miteinander verbindet und auf der die Durchstoßpunkte der Sehstrahlen für Zwischenentfernungen in Richtung "geradeaus" liegen (Anmerkung: die Verwendung der Rückfläche als Bezugsfläche, auf der die Hauptblicklinie liegt ist eher unüblich). Die Hauptblicklinie ist regelmäßig eine im Fern- und im Nahteil angenähert senkrecht und im Progressionskanal, also dem Teil eines Gleitsicht-Brillenglases, das die dioptrische Wirkung für das Sehen in Entfernungen besitzt, die zwischen Ferne und Nähe liegen, gewunden verlaufende Linie. Die Länge des Progressionskanals kann sich z.B. durch die Lage der Fern- und Nah-Konstruktionsbezugspunkte oder die Lage der Fern- und Nah-Bezugspunkte ergeben. Der Fern-Konstruktionsbezugspunkt ist nach 5.13 der DIN EN ISO 13666:2013-10 der Punkt auf der Vorderfläche eines fertigen Brillenglases oder der fertig bearbeiteten Fläche eines Brillenglasblanks, in dem nach Angabe des Herstellers die Konstruktions-Sollwerte für das Fernteil vorliegen. Entsprechend ist nach 5.14 dieser Norm der Nah-Konstruktionsbezugspunkt der Punkt auf der Vorderfläche eines fertigen Brillenglases oder der fertig bearbeiteten Fläche eines Brillenglasblanks, in dem nach Angabe des Herstellers die Konstruktions-Sollwerte für das Nahteil vorliegen. Nach 5.15 ist der Fern-Bezugspunkt bzw. Hauptbezugspunkt der Punkt auf der Vorderfläche eines Brillenglases, in dem die dioptrische Wirkung für das Fernteil erreicht werden muss und nach 5.17 ist der Nah-Durchblickpunkt die angenommene Lage des Durchblickpunktes auf einem Brillenglas für das Sehen in die Nähe unter bestimmten Bedingungen.

Grundsätzlich ist es möglich, anhand der vorstehenden Angabe die Eigenschaften des Gleitsicht-Brillenglases im Verhältnis zu einem Vergleichs-Gleitsicht-Brillenglas in eineindeutiger Weise festzulegen und festzustellen. Ein einfaches Kriterium ergibt sich, wenn man annimmt, dass der wenigstens eine Schnitt eine Variante aus der Gruppe

- horizontaler Schnitt,
- Schnitt bei halber Addition (insbesondere auf der Hauptblicklinie),
- horizontaler Schnitt bei halber Addition (insbesondere auf der Hauptblicklinie)
- horizontaler Schnitt bei halber Addition (insbesondere auf der Hauptblicklinie) und horizontaler Schnitt bei 25 % der Addition (insbesondere auf der Hauptblicklinie)
- horizontaler Schnitt bei halber Addition (insbesondere auf der Hauptblicklinie) und horizontaler Schnitt bei 75 % der Addition (insbesondere auf der Hauptblicklinie)
- horizontaler Schnitt bei halber Addition (insbesondere auf der Hauptblicklinie) und horizontaler Schnitt bei 25 % der Addition (insbesondere auf der Hauptblicklinie) und horizontaler Schnitt bei 75 % der Addition (insbesondere auf der Hauptblicklinie)

ist.

Die DIN EN ISO 13666:2013-10 definiert in Abschnitt 14.2.1 den Nahzusatz bzw. die Addition als Differenz zwischen dem Scheitelbrechwert des Nahteiles und dem Scheitelbrechwert des Fernteiles gemessen mit festgelegten Verfahren. Diese Norm gibt an, dass entsprechende Messverfahren in der für Brillengläser maßgebenden Norm enthalten seien. Als maßgebende Norm wird in der DIN EN ISO 13666:2013-10 auf die DIN EN ISO 8598-1:2012, "Optik und optische Instrumente - Scheitelbrechwert-Messgeräte - Teil 1: Instrumente für den allgemeinen Gebrauch" verwiesen. Der Scheitelbrechwert ist in der DIN EN ISO 13666:2013-10, Abschnitt 9.7 wie folgt definiert. Es wird unterschieden zwischen bildseitigem Scheitelbrechwert, welcher definiert ist als Kehrwert der paraxialen Schnittweite des bildseitigen Brennpunktes, gemessen in Metern und objektseitigem Scheitelbrechwert, welcher definiert ist als Kehrwert der paraxialen Schnittweite des objektseitigen Brennpunktes, gemessen in Metern. Es wird angemerkt, dass nach Übereinkunft in der Augenoptik der bildseitige Scheitelbrechwert der "Scheitelbrechwert" eines Brillenglases verwendet wird, für bestimmte Zwecke aber auch der objektseitige Scheitelbrechwert benötigt wird, z. B. zur Messung der Addition bei einigen Mehrstärken- und Gleitsicht-Brillengläsern.

Eine weitere Variante die Eigenschaften des Gleitsicht-Brillenglases über einen Vergleich mit den Eigenschaften eines Vergleichs-Gleitsicht-Brillenglases mit in eineindeutiger Weise vorbestimmbaren Eigenschaften, nämlich derselben Verteilung des sphärischen Äquivalents über das Glas unter der derselben Position des Brillenglases vor dem Auge des selben Gleitsicht-Brillenträgers unter Zugrundelegung des selben Objektabstandsmodells, zu definieren, besteht darin, wenn das Erzeugnis ferner

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, aufweist.

Bei dieser Variante eines erfindungsgemäßen Gleitsicht-Brillenglases, welches ein Fernteil und ein Nahteil aufweist, wird die Breite des Progressionskanals durch die Abmessung quer zu einer zwischen Fernteil und Nahteil verlaufenden Längsrichtung des Progressionskanals definiert, innerhalb der der Wert des Betrags des Restastigmatismus unterhalb eines vorbestimmten Grenzwerts liegt, der innerhalb eines Bereichs aus der nachfolgend angegebenen Gruppe ausgewählt ist:

(a) der Grenzwert liegt im Bereich zwischen 0,25 dpt und 1,5 dpt
(b) der Grenzwert liegt im Bereich zwischen 0,25 dpt und 1,0 dpt
(c) der Grenzwert liegt im Bereich zwischen 0,25 dpt und 0,75 dpt
(d) der Grenzwert liegt im Bereich zwischen 0,25 dpt und 0,6 dpt
(e) der Grenzwert liegt im Bereich zwischen 0,25 dpt und 0,5 dpt
(f) der Grenzwert beträgt 0,5 dpt.

Unter Restastigmatismus versteht man den Astigmatismus (nach Betrag und Achsrichtung), um den der Astigmatismus bzw. die astigmatische Wirkung des Gleitsicht-Brillenglases an einem jeweiligen Ort auf einer Gleitsicht-Brillenglasfläche für ein das Gleitsicht-Brillenglas an diesem Ort durchdringenden Strahlenbündels für den Gleitsicht-Brillenträger, für den das Gleitsicht-Brillenglas bestimmt ist, wenn der Gleitsicht-Brillenträger das Gleitsicht-Brillenglas bestimmungsgemäß trägt (so dass es in vorbestimmter Weise vor dem Auge des Gleitsicht-Brillenträgers angeordnet ist), von der für eine Vollkorrektion geforderten astigmatischen Wirkung abweicht. Der Begriff "Verteilung" stellt klar, dass dieser Restastigmatismus lokal über das Brillenglas unterschiedlich sein kann und im Regelfall auch sein wird.

Anders formuliert versteht man unter Restastigmatismus die Abweichung der astigmatischen Wirkung (astigmatische Ist-Wirkung) des Gleitsicht-Brillenglases von der "verordneten" astigmatischen Wirkung bezüglich Betrag und Achslage. Anders ausgedrückt ist der Restastigmatismus die blickrichtungsabhängige Differenz zwischen der astigmatischen Ist-Wirkung und der astigmatischen Soll-Wirkung für den Träger des Gleitsicht-Brillenglases in Gebrauchsstellung. Berücksichtigt wird bei der Gebrauchsstellung die Position und Orientierung des Brillenglases zum Auge bei bestimmungsgemäßem Gebrauch. Die Blickrichtungsabhängigkeit der astigmatischen Wirkung kann insbesondere aus der Blickrichtungsabhängigkeit der Objektentfernung und der Blickrichtungsabhängigkeit der astigmatischen Wirkung des Auges resultieren. Der Ausdruck "verordnete Wirkung" ist also im weitesten Sinn als Soll-Wirkung zu verstehen, die das Brillenglas aufgrund seiner zugrunde gelegten Position und Orientierung in Bezug auf das Auge für die jeweilige Blickrichtung und die Entfernung, in welcher der Brillenträger das Objekt für diese Blickrichtung scharf sehen soll, haben soll.

Für die konkrete Berechnung der Restastigmatismusverteilung (oder anderer Fehlerverteilungen, wie z.B. der sphärischen Fehlerverteilung oder sonstigen z.B. in der EP 2 115 527 B1 beschriebenen Fehlerverteilungen höherer Ordnung oder von Ist-Wirkungsverteilungen, wie z.B. der astigmatischen Ist-Wirkung, der sphärischen Ist-Wirkung oder der prismatischen Ist-Wirkung) wird beispielsweise regelmäßig der Hornhautscheitelabstand, die Pupillendistanz, die Vorneigung des Brillenglases, der Fassungsscheibenwinkel des Brillenglases und die Brillenglasgröße, dazu gehört insbesondere auch die Dicke und/oder die Berandung (Randverlauf), berücksichtigt. Darüber hinaus wird regelmäßig ein Objektabstandsmodell zugrunde gelegt, welches die Position von Objektpunkten im Blickfeld des Brillenträgers relativ zu dessen Augendrehpunkten beschreibt.

Die Restastigmatismusverteilung kann bereits als errechnete mathematische Beschreibung vorliegen (wie im Fall (i)) oder sie lässt sich aus der Verordnung (häufig wird auch der Begriff Rezept verwendet) und einem Objektabstandsmodell (wie im Fall (iii)) oder einer bereits berechneten astigmatischen Wirkungsverteilung für Vollkorrektion (wie im Fall (ii)) ermitteln.

Die Verordnung kann neben den herkömmlichen Refraktionswerten auch weitere dem Brillenträger inhärente physiologische Parameter (also allgemein solche Parameter, die dem Brillenträger eigen sind) sowie die Gebrauchsbedingungen (also allgemein solche Parameter, die der Umgebung des Brillenträgers zuordenbar sind), unter denen das verordnete Gleitsicht-Brillenglas getragen werden soll, umfassen. Zu den inhärenten physiologischen Parametern gehören u.a. die Fehlsichtigkeit, die Akkommodationsfähigkeit und die (ggf. auch monokulare) Pupillendistanz des Brillenträgers. Zu den Gebrauchsbedingungen gehören Informationen zum Sitz der Gläser vor dem Auge und auch Daten, die das Objektabstandsmodell charakterisieren, wie z.B. ob es sich um eine Bildschirmarbeitsplatzbrille handeln soll, welches für die Fernblickrichtung ein Objekt, nämlich den Bildschirm, in einer von unendlich abweichenden Entfernung zugrunde legt. Für den Fall dass, die individuell gemessene oder bestimmte Verordnung bestimmte Gebrauchsbedingungen nicht enthält, werden gewisse Standardwerte angenommen (z.B. Standardvorneigung 9°)

Unter Objektabstandsmodell versteht man eine Annahme für Entfernungen im Raum unter denen der Brillenträger Objekte scharf sehen soll. Bei dem Objektabstandsmodell wird die Objektlage im Allgemeinen auf den Augendrehpunkt bezogen, wie dies oben bereits ausgeführt wurde.

Die Modellrechnung kann berücksichtigen, dass sich die Wirkung und Achslage des Auges bei unterschiedlichen Objektentfernungen und Blickrichtungen ändert. Die Modellrechnung kann insbesondere die sogenannte Listing'-sche Regel berücksichtigen. Die Modellrechnung kann z.B. auch die Änderung der astigmatischen Wirkung des Auges für die Nähe und die Ferne berücksichtigen, beispielsweise in der Art wie dies in der DE 10 2015 205 721 A1 beschrieben ist.

Vollkorrektion bezeichnet im Rahmen der vorliegenden Erfindung eine durch das bestimmungsgemäße Tragen der Gleitsicht-Brille bewirkte Korrektion, die es dem Gleitsicht-Brillenträger unter Berücksichtigung der durch die Verordnung repräsentierten Seheigenschaften seines Auges erlaubt, in den Entfernungen angeordnete Objekte, die dem Objektabstandsmodell zugrunde gelegt sind, scharf zu sehen.

Es sei der Vollständigkeit halber darauf hingewiesen, dass der Datenträger, auf dem sich die vorbestimmte Darstellung befindet z.B. anstelle eines Speichers eines Computers auch ein Blatt Papier sein kann. Dies betrifft insbesondere den o.a. Fall (iii), in dem die Verordnung auch auf einem Blatt Papier notiert sein kann.

Eine weitere Ausführungsform des erfindungsgemäßen Erzeugnisses umfasst folgende Bestandteile:

- eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, sowie
- eine oder mehrere der folgenden Darstellungen auf einem Datenträger:

   (i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder
   (ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder
   (iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder
   (iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist.

Das Gleitsicht-Brillenglas nach dieser Ausführungsform weist eine Verteilung eines sphärischen Äquivalents für die vorbestimmte Anordnung des Gleitsicht-Brillenglases vor dem Auge des Gleitsicht-Brillenträgers, für den das Gleitsicht-Brillenglas bestimmt ist, auf. Der Brechungsindex des Gleitsicht-Brillenglases variiert bei dieser Ausführungsform räumlich derart, dass der Maximalwert des Restastigmatismus des Gleitsicht-Brillenglases kleiner ist, als der Maximalwert des Restastigmatismus eines Vergleichs-Gleitsicht-Brillenglases für eine gleiche Verordnung, mit gleicher Verteilung des sphärischen Äquivalents bei gleicher Anordnung des Vergleichs-Gleitsicht-Brillenglases vor dem Auge des Gleitsicht-Brillenträgers aber räumlich nicht variierendem Brechungsindex.

Die für den Brillenträger wahrnehmbaren optischen Eigenschaften des Gleitsicht-Brillenglases nach dieser Ausführungsform der Erfindung sind verbessert gegenüber allen Gleitsicht-Brillengläsern konventionellen Typs.

Eine andere Variante des erfindungsgemäßen Erzeugnisses umfasst die nachfolgend angegebenen Bestandteile:

- eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist,
- wenigstens eine der nachfolgenden Darstellungen auf einem Datenträger:

   (i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder
   (ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist.

Das Gleitsicht-Brillenglas nach dieser Ausführungsvariante weist eine Verteilung eines sphärischen Äquivalents für die vorbestimmte Anordnung des Gleitsicht-Brillenglases vor dem Auge des Gleitsicht-Brillenträgers, für den das Gleitsicht-Brillenglas bestimmt ist, auf. Das Gleitsicht-Brillenglas besitzt einen Progressionskanal. Der Brechungsindex des Gleitsicht-Brillenglases variiert räumlich derart, dass für einen vorgegebenen Restastigmatismuswert $A_{Rest,Grenz}$ aus der Gruppe

(a) der Restastigmatismuswert $A_{Rest,Grenz}$ liegt im Bereich zwischen 0,25 dpt und 1,5 dpt
(b) der Restastigmatismuswert $A_{Rest,Grenz}$ liegt im Bereich zwischen 0,25 dpt und 1,0 dpt
(c) der Restastigmatismuswert $A_{Rest,Grenz}$ liegt im Bereich zwischen 0,25 dpt und 0,75 dpt
(d) der Restastigmatismuswert $A_{Rest,Grenz}$ liegt im Bereich zwischen 0,25 dpt und 0,6 dpt
(e) der Restastigmatismuswert $A_{Rest,Grenz}$ liegt im Bereich zwischen 0,25 dpt und 0,5 dpt
(f) der Restastigmatismuswert $A_{Rest,Grenz}$ beträgt 0,5 dpt

auf einem horizontalen Schnitt an der schmalsten Stelle des Progressionskanals (z.B. dort, wo die Isoastigmatismuslinien für 1 dpt den geringsten Abstand zueinander haben) oder auf einem horizontalen Schnitt durch den Punkt auf der Hauptblicklinie in dem die halbe Addition erreicht wird, innerhalb eines Bereichs mit einem horizontalen Abstand von 10 mm beidseits von der Hauptblicklinie folgende Beziehung gilt:

$$B > c \times \frac{A_{Rest,Grenz}}{grad\ W}$$

wobei grad W der Wirkungsgradient des sphärischen Äquivalents des Gleitsicht-Brillenglases auf dem Punkt auf der Hauptblicklinie an der schmalsten Stelle des Progressionskanals oder in dem Punkt auf der Hauptblicklinie in dem die halbe Addition erreicht wird, B die Breite des Bereichs im Gleitsicht-Brillenglas, in dem der Restastigmatismus $A_{Rest} \leq A_{Rest,Grenz}$ ist, wobei c eine Konstante gewählt ist aus der Gruppe:

(a)  $1,0 < c$

(b)  $1,1 < c$

(c)  $1,2 < c$

(d)  $1,3 < c$

Die für den Brillenträger wahrnehmbaren optischen Eigenschaften des Gleitsicht-Brillenglases nach dieser Ausführungsform der Erfindung sind verbessert gegenüber allen Gleitsicht-Brillengläsern konventionellen Typs.

Eine weitere Variante eines erfindungsgemäßen Erzeugnisses umfasst ein Gleitsicht-Brillenglas oder eine auf einem Datenträger befindliche Darstellung des Gleitsicht-Brillenglases, wobei das Gleitsicht-Brillenglas eine Vorderfläche und eine Rückfläche sowie einen räumlich variierenden Brechungsindex aufweist. Es sind entweder die Vorderfläche oder die Rückfläche oder beide Flächen als Gleitsichtfläche ausgebildet. Die als Gleitsichtfläche ausgebildete Vorderfläche ist erfindungsgemäß als Freiformfläche ausgebildet und/oder die als Gleitsichtfläche ausgebildete Rückfläche ist erfindungsgemäß als Freiformfläche ausgebildet.

Das Gleitsicht-Brillenglas besteht aus einem keine Einzelschichten aufweisenden Substrat sowie eine oder mehrere Einzelschichten umfassenden Vorderflächenbeschichtung auf der Vorderfläche des Substrats und/oder einer eine oder mehrere Einzelschichten umfassenden Rückflächenbeschichtung auf der Rückfläche des Substrats. Nur das Substrat weist den räumlich variierenden Brechungsindex auf.

Nach der Erfindung ist ein Unterschied zwischen dem sphärischen Äquivalent gemessen in jedem Punkt auf der Vorderfläche des Gleitsicht-Brillenglases mit der

Vorderflächenbeschichtung und/oder der Rückflächenbeschichtung und dem sphärischen Äquivalent gemessen in jedem korrespondierenden Punkt auf der Vorderfläche eines Vergleichs-Gleitsicht-Brillenglases ohne Vorderflächenbeschichtung und ohne Rückflächenbeschichtung aber identischem Substrat (mit identischer Geometrie und identischem Brechungsindex) kleiner als ein Wert aus der nachfolgend angegebenen Gruppe:

(a) der Unterschiedswert ist kleiner als 0,001 dpt
(b) der Unterschiedswert ist kleiner als 0,002 dpt
(c) der Unterschiedswert ist kleiner als 0,003 dpt
(d) der Unterschiedswert ist kleiner als 0,004 dpt.

Diese Variante kann selbstverständlich auch eine oder mehrere der vorstehend beschriebenen Merkmale aufweisen.

Oben wurde ausgeführt, dass die Erfinder erkannt haben, dass es auf das Zusammenspiel des Grads der Komplexität der Geometrie der Gleitsichtfläche und des Grads der Komplexität der Brechungsindexverteilung ankommt. Sie schlagen daher abweichend von der in der WO 89/04986 A1 beschriebenen Lösung ein computerimplementiertes Verfahren zum Entwerfen eines Gleitsicht-Brillenglases mit einer Vorderfläche und einer Rückfläche und einem räumlich variierenden Brechungsindex, bei dem entweder die Vorderfläche oder die Rückfläche oder beide Flächen als Gleitsichtfläche ausgebildet sind, in Form eines Strahldurchrechnungsverfahrens vor. Mittels des Strahldurchrechnungsverfahrens werden optische Eigenschaften des Gleitsicht-Brillenglases an einer Vielzahl von Bewertungsstellen, durch die Sehstrahlen das Gleitsicht-Brillenglas durchsetzen, berechnet. Bei diesem Strahldurchrechnungsverfahren wird wenigstens eine optische Soll-Eigenschaft für das Gleitsicht-Brillenglas an der jeweiligen Bewertungsstelle festgelegt. Zunächst wird ein Entwurf für das Gleitsicht-Brillenglas festgelegt, wobei dieser Entwurf eine Repräsentation einer lokalen Flächengeometrie der Gleitsichtfläche und einen lokalen Brechungsindex des Gleitsicht-Brillenglases im jeweiligen Sehstrahlengang durch die Bewertungsstellen umfasst. Der Entwurf des Gleitsicht-Brillenglases wird im Hinblick auf eine Approximierung der wenigstens einen optischen Soll-Eigenschaft des Gleitsicht-Brillenglases modifiziert. Das Modifizieren umfasst erfindungsgemäß nicht nur ein Modifizieren der Repräsentation der lokalen Flächengeometrie der Gleitsichtfläche, sondern auch des lokalen Brechungsindex des Gleitsicht-Brillenglases im jeweiligen Sehstrahlengang durch die Bewertungsstellen, wobei die wenigstens eine optische Soll-Eigenschaft einen Soll-Restastigmatismus des Gleitsicht-Brillenglases umfasst.

Die der modifizierten Gleitsichtfläche gegenüberliegende Fläche wird in der Regel fest vorgegeben. Diese weist im Allgemeinen eine einfache Flächengeometrie, wie z.B. eine sphärische, rotationssymmetrisch asphärische oder torische Geometrie auf. Im Fall einer torischen Fläche ist die Flächengeometrie und Achslage häufig so gewählt, dass sie (abgesehen vom unerwünschten Rest-Astigmatismus) das astigmatische Refraktionsdefizit des Auges des Gleitsicht-Brillenträgers ausgleicht. Die der modifizierten Gleitsichtfläche gegenüberliegende Fläche kann auch eine Gleitsichtfläche, ggf. auch eine Freiformfläche, mit fest vorgegebener Flächengeometrie sein. Diese kann zu dem zur Bereitstellung der Addition notwendigen Wirkungsanstieg beitragen. Auch die modifizierte Gleitsichtfläche kann zu dem zur Bereitstellung der Addition notwendigen Wirkungsanstieg beitragen. Es ist auch möglich, dass beide Flächen, nämlich Vorder- und Rückfläche zusammen mit der Brechungsindexverteilung zur Approximierung der Soll-Restastigmatismusverteilung modifiziert werden. Strahldurchrechnungsverfahren zur Verwendung beim Entwurf von Gleitsicht-Brillengläsern sind bekannt. Es wird insbesondere auf Werner Köppen: Konzeption und Entwicklung von Progressivgläsern, in Deutsche Optiker Zeitung DOZ 10/95, S. 42-46 sowie die EP 2 115 527 B1 und die darin genannten Druckschriften hingewiesen. Die Berechnung optimierter ortsabhängiger Brechungsindexverteilungen mittels optischer Rechenprogramme, wie beispielsweise das Rechenprogramm ZEMAX von der Firma Zemax, LLC, ist ebenfalls bekannt. Es wird z.B. auf deren Internetauftritt unter http://www.zemax.com/ verwiesen.

Die Festlegung von Soll-Eigenschaften für ein Brillenglas bezieht sich auf das sogenannte Design eines Brillenglases. Ein Design eines Brillenglases umfasst üblicherweise die Verteilung der Soll-Werte für eine oder mehreren Abbildungsfehler, welche vorzugsweise in die Optimierung des Brillenglases als Zielwerte oder bei der Bestimmung der Zielwerte eingehen. Insbesondere wird ein Brillenglasdesign durch die Verteilung des Refraktionsfehlers (d.h. die Differenz des sphärischen Äquivalents des Gleitsicht-Brillenglases im Strahlengang in Gebrauchsstellung von dem sphärischen Äquivalent, welches mittels Refraktionsbestimmung ermittelt wird) und/oder die Verteilung des Restastigmatismus (d.h. die Differenz des Astigmatismus des Brillenglases von dem Astigmatismus, welcher mittels Refraktionsbestimmung ermittelt wird) charakterisiert. Anstelle des Begriffs Restastigmatismusverteilung werden in der Literatur auch die Begriffe Astigmatismusfehlerverteilung und astigmatische Abweichung verwendet. Ferner kann ein Brillenglasdesign ebenfalls die Verteilung der Soll-Werte für Vergrößerungs-, Verzerrungs- oder anderen Abbildungsfehler, insbesondere von Abbildungsfehlern höherer Ordnung, wie dies in der EP 2 115 527 B1 beschrieben ist, umfassen. Dabei kann es sich um Flächenwerte oder vorzugsweise um Gebrauchswerte, d.h. Werte in Gebrauchsstellung des Brillenglases handeln.

Nach der Erfindung wird der Entwurf des Gleitsicht-Brillenglases mit dem Ziel dem vorgegebenen Soll-Restastigmatismus möglichst nahe zu kommen modifiziert. Der Soll-Restastigmatismus kann beispielsweise an allen Bewertungsstellen zu Null gesetzt werden. Es ist auch möglich, eine Restastigmatismusverteilung vorzugeben, die vorzugsweise weit niedrigere Werte hat, als die, die mit einem herkömmlichen Gleitsicht-Brillenglas mit räumlich nicht variierendem Brechungsindex aber freigeformter Rück- (und/oder Vorderfläche) theoretisch überhaupt erreichbar ist bzw. für die Optimierung eines derartigen Gleitsicht-Brillenglases vorgegeben wird. Die Zahl der Bewertungsstellen liegt nach Werner Köppen: Konzeption und Entwicklung von Progressivgläsern, in Deutsche Optiker Zeitung DOZ 10/95, S. 42-46 üblicherweise im Bereich zwischen 1000 und 1500. Die EP 2 115 527 B1 schlägt eine Zahl von über 8000 Bewertungsstellen vor.

Um diesem Ziel möglichst nahe zu kommen wird nach der Erfindung nicht nur die Flächengeometrie der (späteren) Gleitsichtfläche an der Bewertungsstelle lokal verändert, sondern auch der lokale Brechungsindex in dem vom Strahlengang durchsetzten Medium des Gleitsicht-Brillenglases bei der Bewertungsstelle. Unter Medium versteht man das Material oder die Materialien, aus denen das Gleitsicht-Brillenglas besteht.

Um dem Ziel möglichst nahe zu kommen, muss dieser Vorgang des Modifizierens in der Regel mehrfach, d.h. iterativ durchgeführt werden. Es soll dabei noch einmal klar gestellt werden, dass beim Modifizieren, insbesondere bei der Iteration sowohl die lokale Flächengeometrie als auch der lokale Brechungsindex frei variieren können und weder die lokale Flächengeometrie noch der lokale Brechungsindex festgehalten wird. Demgegenüber lehrt die WO 89/04986 A1 die Vorgabe vergleichsweise einfacher Geometrien für Vorder- und Rückfläche und die Suche nach einer geeigneten Brechungsindexverteilung, um den für die Bereitstellung der Addition notwendigen Wirkungsanstieg herzustellen und um ggf. den (Rest-)Astigmatismus entlang der Hauptblicklinie ganz oder teilweise zu beheben sowie weiter ggf. Korrekturen von Abbildungsfehlern seitlich des Hauptmeridians vorzunehmen.

Obwohl der Brechungsindex in der Regel wellenlängenabhängig ist, wird im Allgemeinen die Dispersion nicht berücksichtigt und die Durchrechnung erfolgt für eine sogenannte Designwellenlänge. Es ist aber nicht ausgeschlossen, dass ein Optimierungsprozess unterschiedliche Designwellenlängen berücksichtigt, wie z.B. in der EP 2 383 603 B1 beschrieben ist.

Da die Modifikation mit dem Ziel erfolgt, optischen Soll-Eigenschaften möglichst nahe zu kommen, spricht der Fachmann auch von Optimierung. Die Modifikation wird so lange durchgeführt, bis ein Abbruchkriterium erfüllt ist. Im Idealfall besteht das Abbruchkriterium darin, dass das entworfene Gleitsicht-Brillenglas die vorgegebenen optischen Soll-Eigenschaften aufweist. In dem Fall, in dem der Restastigmatismus an allen Bewertungsstellen zu Null gesetzt wird, wäre dieser Idealfall, dass der Restastigmatismus des berechneten Brillenglases tatsächlich an allen Bewertungsstellen Null ist. Da dies jedoch regelmäßig, insbesondere in dem beschriebenen Fall, nicht gegeben sein wird, erfolgt ein Abbruch der Berechnung z.B. nach Erreichen eines oder mehrerer Grenzwerte in der Umgebung der Soll-Eigenschaft(en) oder nach Erreichen einer vorgegebenen Anzahl an Iterationen.

Üblicherweise basiert die Ermittlung der Soll-Eigenschaften und die Berechnung der Ist-Eigenschaften auf Modellrechnungen, die die Gebrauchsbedingungen, nämlich z.B. den Sitz der Brillengläser vor dem Auge und ein Objektabstandsmodell sowie physiologische Parameter des Brillenträgers, nämlich z.B. die Fehlsichtigkeit, die Akkommodationsfähigkeit und die Pupillendistanz berücksichtigen. Details wurden oben bereits beschrieben.

Ergebnis der Approximierung der wenigstens einen optischen Soll-Eigenschaft(en) des Gleitsicht-Brillenglases durch Modifikation des lokalen Brechungsindex und der lokalen Flächengeometrie ist in der Regel, dass die als Gleitsichtfläche ausgebildete Vorderfläche als Freiformfläche ausgebildet ist und/oder dass die als Gleitsichtfläche ausgebildete Rückfläche als Freiformfläche ausgebildet ist.

Die eingangs gestellte Aufgabe wird durch das vorstehend beschriebene erfindungsgemäße Verfahren vollumfänglich gelöst.

Eine Ausführungsvariante dieses erfindungsgemäßen Verfahrens ist dadurch gekennzeichnet, dass die Modifikation des Entwurfs des Gleitsicht-Brillenglases im Hinblick auf eine Minimierung einer Zielfunktion erfolgt. In der deutschsprachigen Literatur wird eine derartige Zielfunktion auch als Kostenfunktion und in der angelsächsischen Literatur als Merit-Function bezeichnet. Sehr häufig wird beim Entwerfen von Gleitsicht-Brillengläsern als Methode zur Minimierung einer Zielfunktion die Methode der kleinsten Fehlerquadrate angewandt, wie dies z.B. auch in der EP 0 857 993 B2, der EP 2 115 527 B1 oder auch in Werner Köppen: Konzeption und Entwicklung von Progressivgläsern, in Deutsche Optiker Zeitung DOZ 10/95, S. 42-46 praktiziert wird. Die erfindungsgemäße Ausführungsvariante wendet diese Methode mit der nachfolgend wiedergegebenen Zielfunktion

$$F = \sum_m P_m \sum_n W_n \left(T_n - A_n\right)^2$$

an. In dieser Zielfunktion F ist $P_m$ die Gewichtung an der Bewertungsstelle m, $W_n$ die Gewichtung der optischen Eigenschaft n, $T_n$ der Soll-Wert der optischen Eigenschaft n an der jeweiligen Bewertungsstelle m und $A_n$ der Ist-Wert der optischen Eigenschaft n an der Bewertungsstelle m.

Die Anwendung dieser Methode hat sich zum Entwurf von Gleitsicht-Brillengläsern herkömmlicher Art bewährt. Die Erfindung schlägt vor, diese Methode auch zum Entwerfen von erfindungsgemäßen Gradientenindex (GRIN) Gleitsicht-Brillengläsern zu verwenden.

Eine besonders vorteilhafte Ausführungsvariante des erfindungsgemäßen Verfahrens ist dadurch gekennzeichnet, dass für wenigstens eine Bewertungsstelle ein Soll-Restastigmatismus vorgegeben wird, der kleiner ist, als der theoretisch erreichbare Restastigmatismus an der wenigstens einen entsprechenden Bewertungsstelle bei einem Vergleichs-Gleitsicht-Brillenglas für eine gleiche Verordnung, mit gleicher Verteilung des sphärischen Äquivalents und gleicher Anordnung des Vergleichs-Gleitsicht-Brillenglases vor dem Auge des Gleitsicht-Brillenträgers aber räumlich nicht variierendem Brechungsindex und dass das Modifizieren der Repräsentation der lokalen Flächengeometrie der Gleitsichtfläche und des lokalen Brechungsindex des Gleitsicht-Brillenglases im jeweiligen Sehstrahlengang durch die Bewertungsstellen erst dann abgebrochen wird, wenn der für das entworfene Gleitsicht-Brillenglas erreichte Restastigmatismus an der wenigstens einen Bewertungsstelle kleiner ist als der theoretisch erreichbare Restastigmatismus an der wenigstens einen entsprechenden Bewertungsstelle bei dem Vergleichs-Gleitsicht-Brillenglas.

Man kann -wie oben bereits ausgeführt wurde- den Soll-Restastigmatismus an allen Bewertungsstellen zu Null setzen. Um ein Gleitsicht-Brillenglas zu entwerfen, welches ganzflächig bessere optische Eigenschaften hat, als eine Vergleichs-Gleitsicht-Brillenglas der herkömmlichen Art, wird man den Soll-Restastigmatismus an allen Bewertungsstellen zumindest um einen signifikanten Prozentsatz, von z.B. 10 - 50 % geringer wählen, als zum Entwurf des Vergleichs-Gleitsicht-Brillenglases üblicherweise angesetzt wird. Im Allgemeinen wird an wenigstens den Bewertungsstellen ein Soll-Restastigmatismus vorgegeben werden, der kleiner ist, als der theoretisch erreichbare Restastigmatismus an den wenigstens entsprechenden Bewertungsstellen bei dem Vergleichs-Gleitsicht-Brillenglas, welche innerhalb des späteren Progressionskanals liegen sollen. Eine Verbreiterung des Progressionskanals ist nämlich stets wünschenswert.

Zusätzlich oder alternativ zu der vorstehend beschriebenen vorteilhaften Ausführungsvariante besteht eine Verfahrensvariante darin, das Modifizieren der Repräsentation der lokalen Flächengeometrie der Gleitsichtfläche und des lokalen Brechungsindex des Gleitsicht-Brillenglases im jeweiligen Sehstrahlengang durch die Bewertungsstellen, mit der Maßgabe durchzuführen, dass der Maximalwert des Restastigmatismus des Gleitsicht-Brillenglases kleiner ist, als der Maximalwert des Restastigmatismus eines Vergleichs-Gleitsicht-Brillenglases für eine gleiche Verordnung mit gleicher Verteilung des sphärischen Äquivalents und gleicher Anordnung des Vergleichs-Gleitsicht-Brillenglases vor dem Auge des Gleitsicht-Brillenträgers aber räumlich nicht variierendem Brechungsindex. Grundsätzlich muss der Maximalwert für den Restastigmatismus bei dem erfindungsgemäß entworfenen Gleitsicht-Brillenglas nicht am "gleichen" Ort bzw. an der "gleichen" Bewertungsstelle gelegen sein wie der Maximalwert für den Restastigmatismus beim Vergleichs-Gleitsicht-Brillenglas. Als Zusatzbedingung kommt dies bei der Durchführung des Verfahrens aber auch in Betracht. Durch diese Vorgaben werden die optischen Eigenschaften des erfindungsgemäßen Gleitsicht-Brillenglases gegenüber einem Vergleichs-Gleitsicht-Brillenglas herkömmlicher Fabrikationsart weiter verbessert.

Das erfindungsgemäße Verfahren kann in einer Ausführungsvariante so durchgeführt werden, dass beim Entwerfen des Gleitsicht-Brillenglases ein Gleitsicht-Brillenglas entsprechend einem Erzeugnis der vorstehend beschriebenen Arten resultiert. Die Vorteile dieser Erzeugnisse wurden oben bereits im Detail beschrieben.

Es ist in einer weiteren erfindungsgemäßen Verfahrensvariante sogar vorgesehen, dass das Entwerfen des Gleitsicht-Brillenglases gerade mit der Maßgabe erfolgt, ein Gleitsicht-Brillenglas entsprechend einem Erzeugnis nach einem der der vorstehend beschriebenen Arten zu erzeugen. Die Soll-Eigenschaften und die Abbruchbedingungen werden bei dieser weiteren Variante so gewählt, dass zwangsläufig das entsprechende Gleitsicht-Brillenglas mit den oben beschriebenen optischen Eigenschaften bei der durch die Darstellung vorgegebenen Anordnung vor dem Auge des zukünftigen Brillenträgers beim Entwerfen entsteht.

Die Erfindung sieht weiter ein Computerprogramm mit Programmcode zur Durchführung aller Verfahrensschritte nach einem der vorstehend beschriebenen Verfahren vor, wenn das Computerprogramm in einem Computer geladen und/oder in einem Computer ausgeführt wird. Das Computerprogramm kann auf jedem computerlesbaren Medium, insbesondere auf einer Festplatte eines Computers, auf einem USB-Stick oder auch in einer Cloud abgelegt sein. Demnach such die Erfindung auch Schutz für ein computerlesbares Medium mit einem Computerprogramm der vorstehend beschriebenen Art.

Die Erfindung bezieht sich auch auf ein Verfahren zum Herstellen eines Gleitsicht-Brillenglases nach einem der vorangehend beschriebenen Erzeugnisse oder eines unter Verwendung eines Verfahrens der vorstehend beschriebenen Varianten entworfenen Gleitsicht-Brillenglases durch ein additives Verfahren.

Additive Verfahren sind Verfahren, bei denen das Gleitsicht-Brillenglas sequentiell aufgebaut wird. Insbesondere ist in diesem Zusammenhang bekannt, dass insbesondere sogenannte digitale Fabrikatoren Fertigungsmöglichkeiten für nahezu beliebige Strukturen bieten, die mit den klassischen abrasiven Verfahren nicht oder nur schwer realisierbar sind. Innerhalb der Maschinenklasse der digitalen Fabrikatoren stellen die 3D-Drucker die wichtigste Teilklasse der additiven, also anhäufenden, aufbauenden Fabrikatoren dar. Die wichtigsten Techniken des 3D-Druckens sind das selektive Laserschmelzen (SLM) und das Elektronenstrahlschmelzen für Metalle und das selektive Lasersintern (SLS) für Polymere, Keramik und Metalle, die Stereolithografie (SLA) und das Digital Light Processing für flüssige Kunstharze und das Multijet- oder Polyjet-Modeling (z.B. Tintenstrahldrucken) sowie das Fused Deposition Modeling (FDM) für Kunststoffe und teilweise Kunstharze. Weiter bekannt ist auch ein Aufbau mit Hilfe von Nanoschichten, wie dies z.B. unter http://peaknano.com/wpcontent/uploads/PEAK-1510-GRINOptics-Overview.pdf, heruntergeladen am 12.1.2017 beschrieben ist.

Ausgangsmaterialien für die Fertigung mittels 3D-Druck sowie Möglichkeiten für das 3D-Fertigungsverfahren selbst entnimmt man z.B. der europäischen Patentanmeldung Nr. 16195139.7.

Eine Weiterbildung der Erfindung besteht in einem Verfahren zum Herstellen eines Gleitsicht-Brillenglases umfassend ein Verfahren zum Entwerfen eines Gleitsicht-Brillenglases wie oben beschrieben und Fertigen des Gleitsicht-Brillenglases nach dem Entwurf.

Das Fertigen des Gleitsicht-Brillenglases nach dem Entwurf kann erfindungsgemäß wiederum durch ein additives Verfahren erfolgen.

Eine andere Weiterbildung der Erfindung besteht in einem Computer mit einem Prozessor, der eingerichtet ist, ein Verfahren zum Entwerfen eines Gleitsicht-Brillenglases nach einem der oben beschriebenen Arten oder Varianten auszuführen.

Die Erfindung wird nachfolgend anhand der Zeichnungen näher beschrieben. Es zeigen:

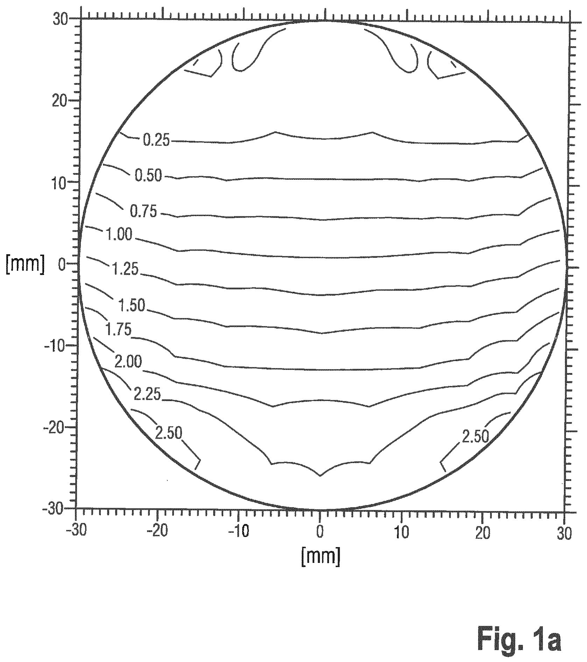

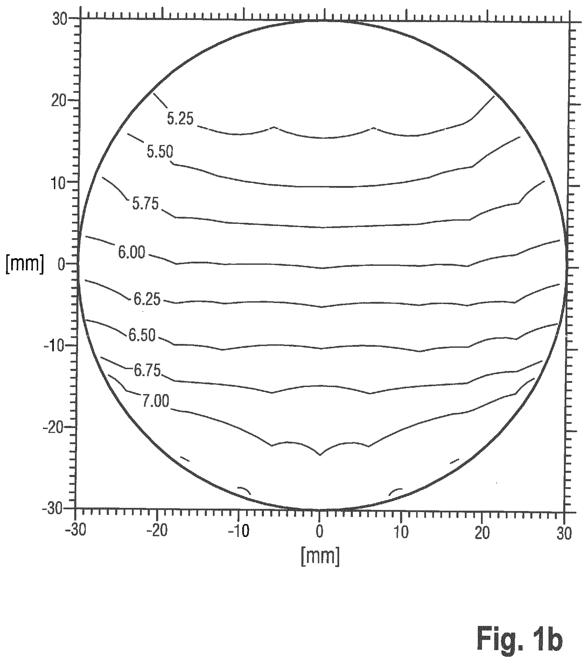

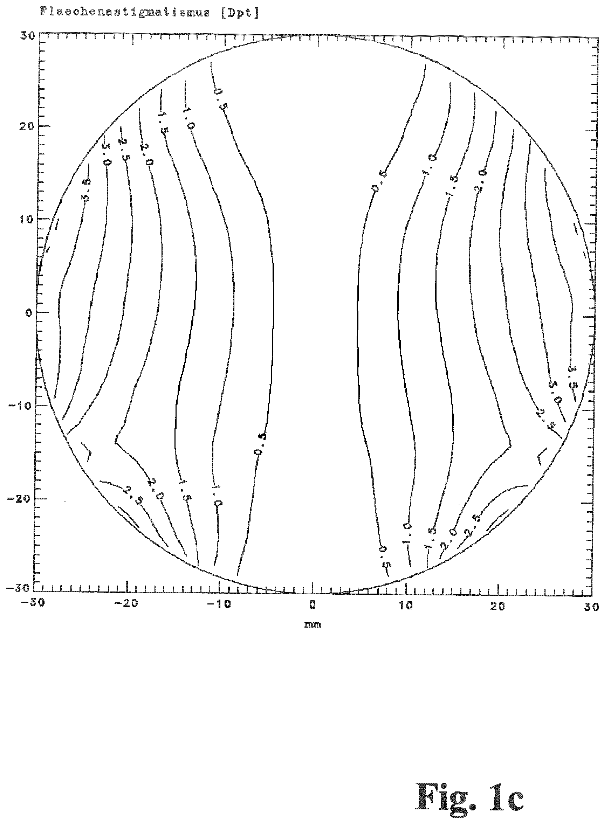

Figur 1     optische Eigenschaften eines Vergleichs-Gleitsicht-Brillenglases herkömmlicher Bauart aus einem Material mit einem Brechungsindex von n=1.600 zu einem GRIN-Gleitsicht-Brillenglas mit vertikaler Symmetrieebene nach einem ersten Ausführungsbeispiel nach der Erfindung

       a: mittlere sphärische Wirkung des Vergleichs-Gleitsicht-Brillenglases

       b: mittlerer Flächenbrechwert des Vergleichs-Gleitsicht-Brillenglases, objektseitige Freiformfläche

       c: mittlerer Flächenastigmatismus für n=1.600 der objektseitigen Freiformfläche des Vergleichs-Gleitsicht-Brillenglases der Figur 1a

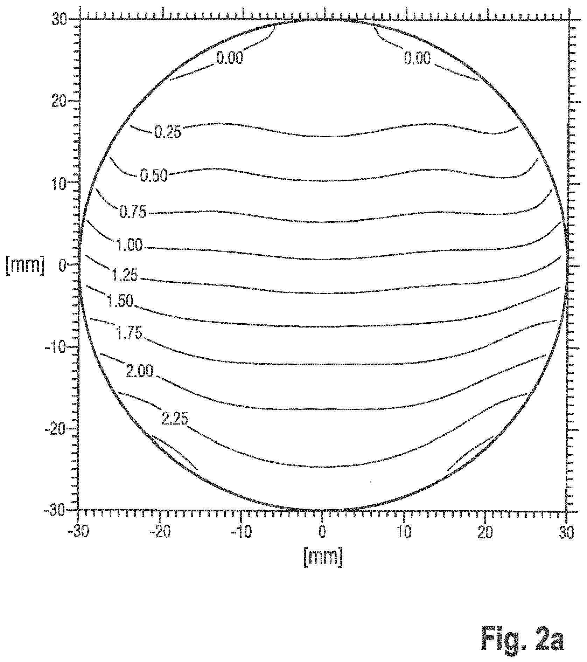

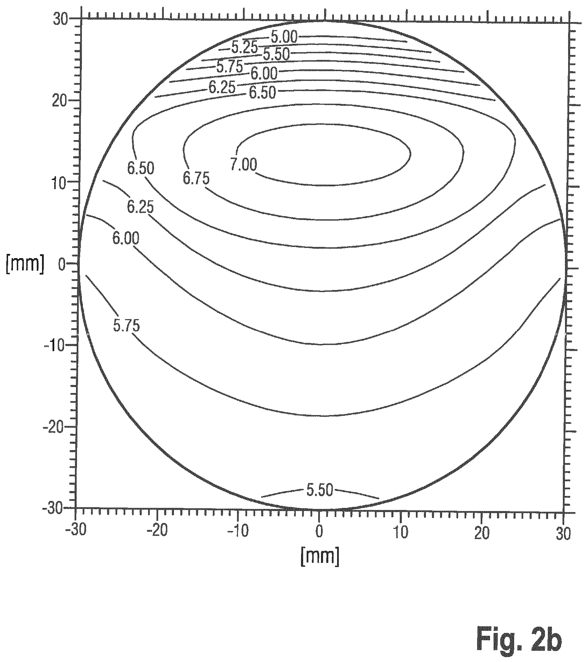

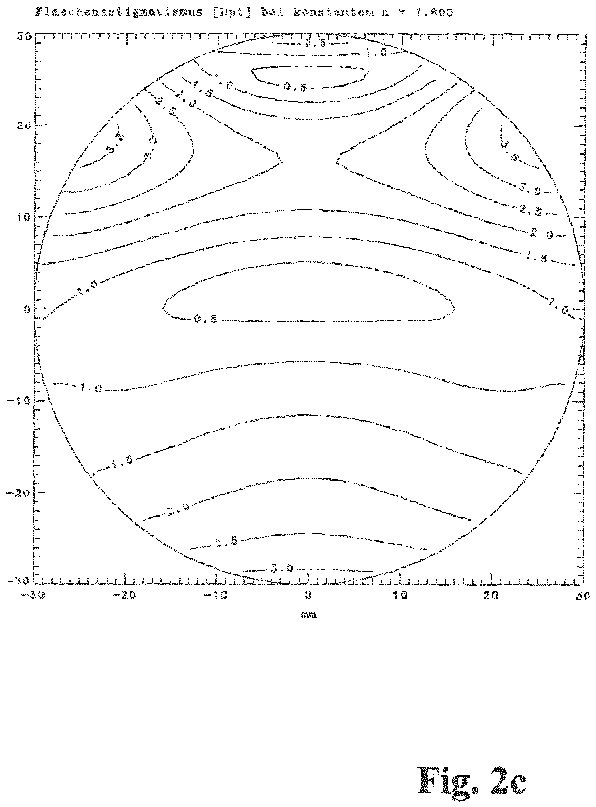

Figur 2     optische Eigenschaften des GRIN-Gleitsicht-Brillenglases nach dem ersten Ausführungsbeispiel

       a: mittlere sphärische Wirkung

       b: mittlerer Flächenbrechwert gerechnet für eine konstante Brechzahl n=1.600 für die objektseitige Freiformfläche

       c: mittlerer Flächenastigmatismus für n=1.600 der objektseitigen Freiformfläche des GRIN-Gleitsicht-Brillenglases der Figur 2a

Figur 3     die Verteilung der Brechzahl des GRIN-Gleitsicht-Brillenglases nach dem ersten Ausführungsbeispiel

Figur 4     Vergleich der Restastigmatismusverteilung des GRIN-Gleitsicht-Brillenglases nach dem ersten Ausführungsbeispiel mit der Restastigmatismusverteilung des Vergleichs-Gleitsicht-Brillenglases

       a: Restastigmatismusverteilung des Vergleichs-Gleitsicht-Brillenglases

       b: Restastigmatismusverteilung des erfindungsgemäßen GRIN-Gleitsicht-Brillenglases nach dem ersten Ausführungsbeispiel

Figur 5     Vergleich des Restastigmatismusverlaufs des GRIN-Gleitsicht-Brillenglases nach dem ersten Ausführungsbeispiel mit dem Restastigmatismusverlauf des Vergleichs-Gleitsicht-Brillenglases längs eines Schnitts bei y=0 nach der Figur 4

       a: Restastigmatismusverlauf des Vergleichs-Gleitsicht-Brillenglases

       b: Restastigmatismusverlauf des erfindungsgemäßen GRIN-Gleitsicht-Brillenglases nach dem ersten Ausführungsbeispiel

Figur 6     Vergleich der Kontur der Vorderfläche des GRIN-Gleitsicht-Brillenglases nach dem ersten Ausführungsbeispiel mit der Kontur der Vorderfläche des Vergleichs-Gleitsicht-Brillenglases

       a: Pfeilhöhen der Vorderfläche des Vergleichs-Gleitsicht-Brillenglases

       b: Pfeilhöhen der Vorderfläche des erfindungsgemäßen GRIN-Gleitsicht-Brillenglases nach dem ersten Ausführungsbeispiel

Figur 7     optische Eigenschaften eines Vergleichs-Gleitsicht-Brillenglases herkömmlicher Bauart aus einem Material mit einem Brechungsindex von n=1.600 zu einem GRIN-Gleitsicht-Brillenglas mit vertikaler Symmetrieebene nach einem zweiten Ausführungsbeispiel nach der Erfindung

       a: mittlere sphärische Wirkung

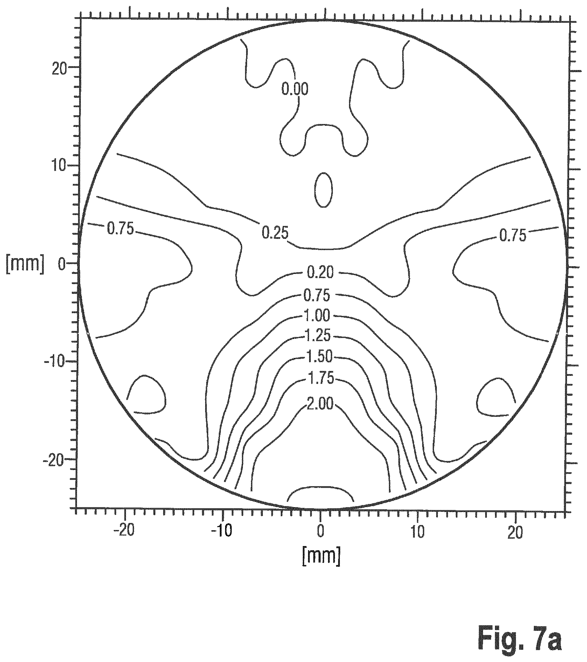

b: mittlerer Flächenbrechwert, objektseitige Freiformfläche
c: Flächenastigmatismus für n=1.600 der objektseitigen Freiformfläche des Vergleichs-Gleitsicht-Brillenglases der Figur 7a

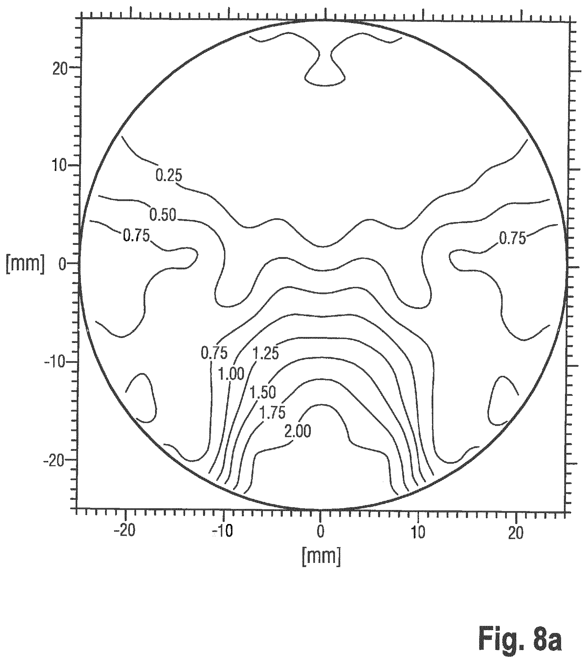

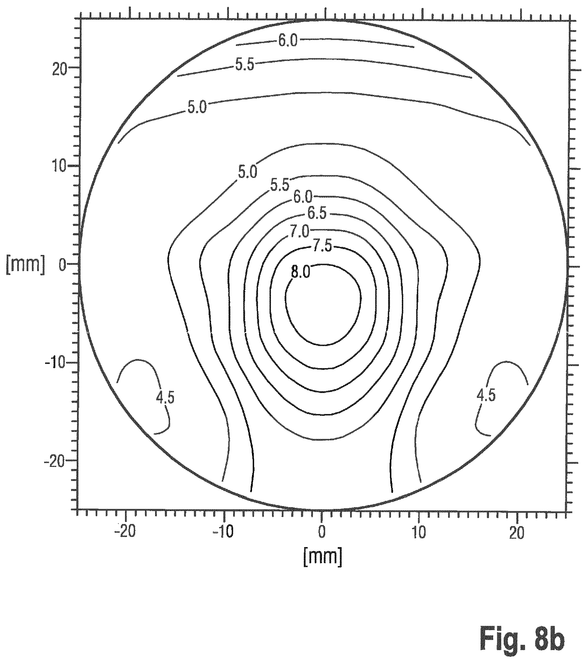

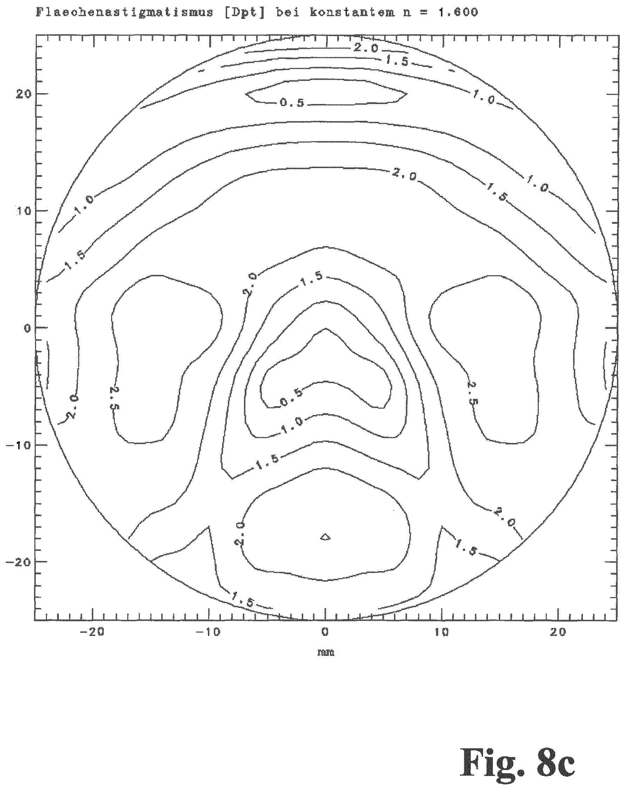

Figur 8    optische Eigenschaften des GRIN-Gleitsicht-Brillenglases nach dem zweiten Ausführungsbeispiel

a: mittlere sphärische Wirkung
b: mittlerer Flächenbrechwert gerechnet für eine Brechzahl n=1.600 für die objektseitige Fläche
c: Verlauf des Flächenastigmatismus der Vorderfläche des erfindungsgemäßen GRIN-Gleitsicht-Brillenglases nach dem zweiten Ausführungsbeispiel

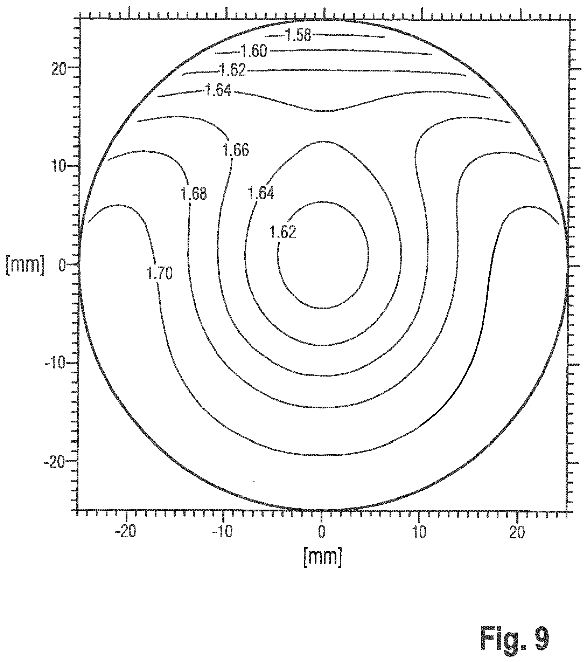

Figur 9    die Verteilung der Brechzahl des GRIN-Gleitsicht-Brillenglases nach dem zweiten Ausführungsbeispiel

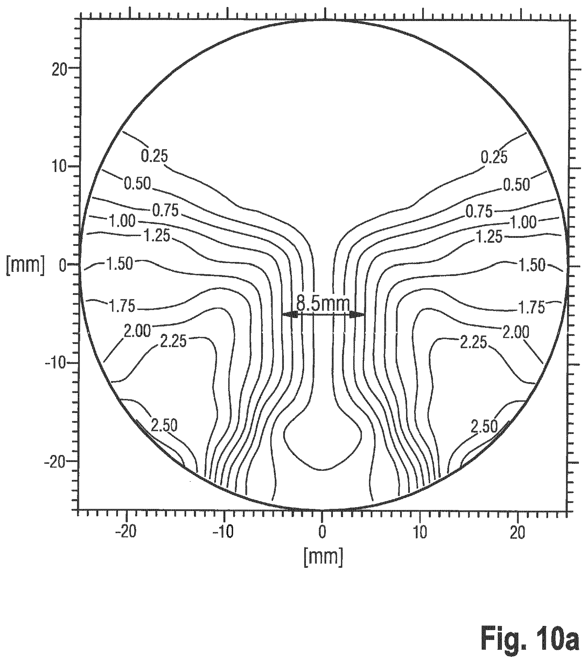

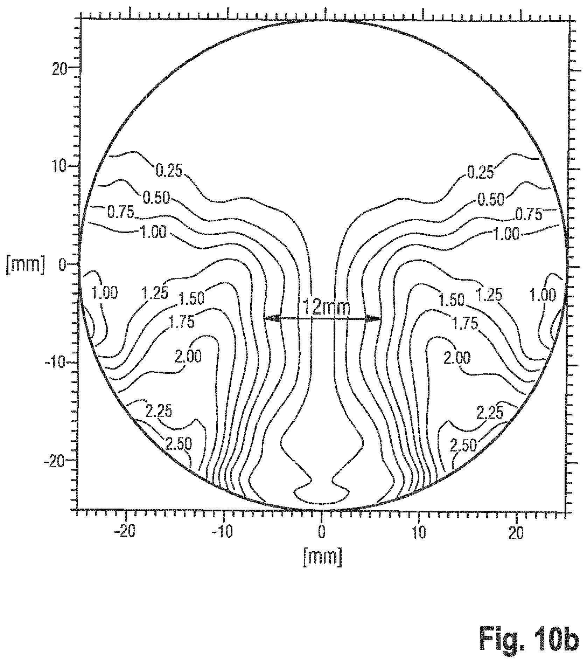

Figur 10   Vergleich der Restastigmatismusverteilung des GRIN-Gleitsicht-Brillenglases nach dem zweiten Ausführungsbeispiel mit der Restastigmatismusverteilung des Vergleichs-Gleitsicht-Brillenglases

a: Restastigmatismusverteilung des Vergleichs-Gleitsicht-Brillenglases
b: Restastigmatismusverteilung des erfindungsgemäßen GRIN-Gleitsicht-Brillenglases nach dem zweiten Ausführungsbeispiel

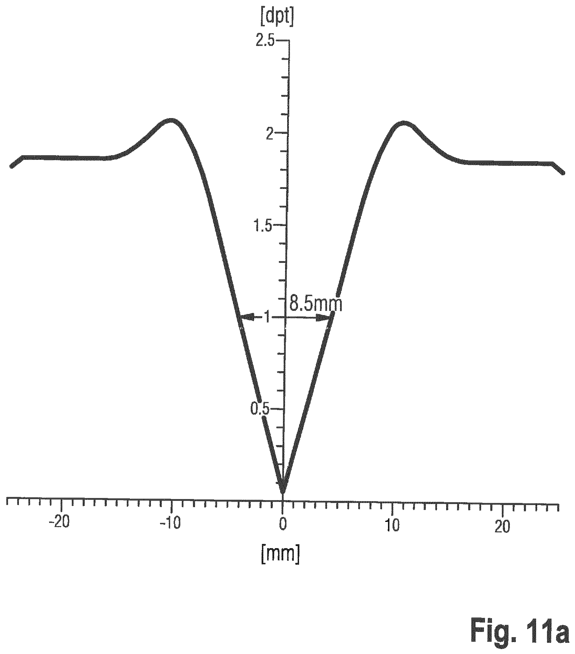

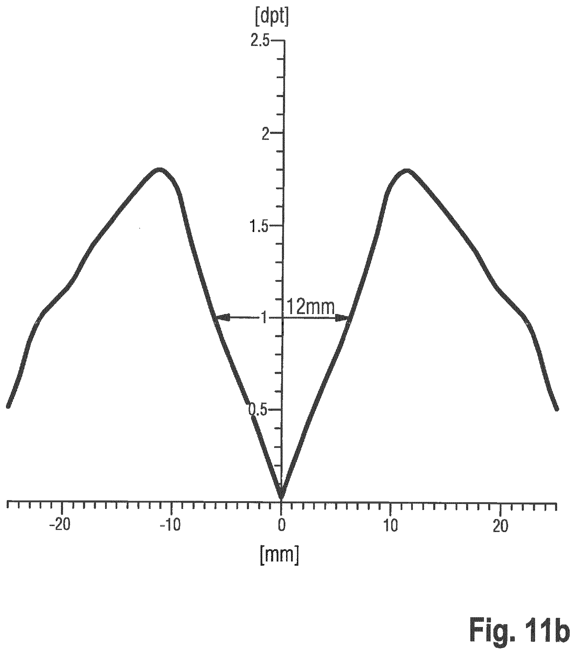

Figur 11   Vergleich der Restastigmatismusverlaufs des GRIN-Gleitsicht-Brillenglases nach dem zweiten Ausführungsbeispiel mit dem Restastigmatismusverlauf des Vergleichs-Gleitsicht-Brillenglases längs eines Schnitts bei y = -5 mm nach der Figur 10

a: Restastigmatismusverlauf des Vergleichs-Gleitsicht-Brillenglases
b: Restastigmatismusverlauf des erfindungsgemäßen GRIN-Gleitsicht-Brillenglases nach dem ersten Ausführungsbeispiel

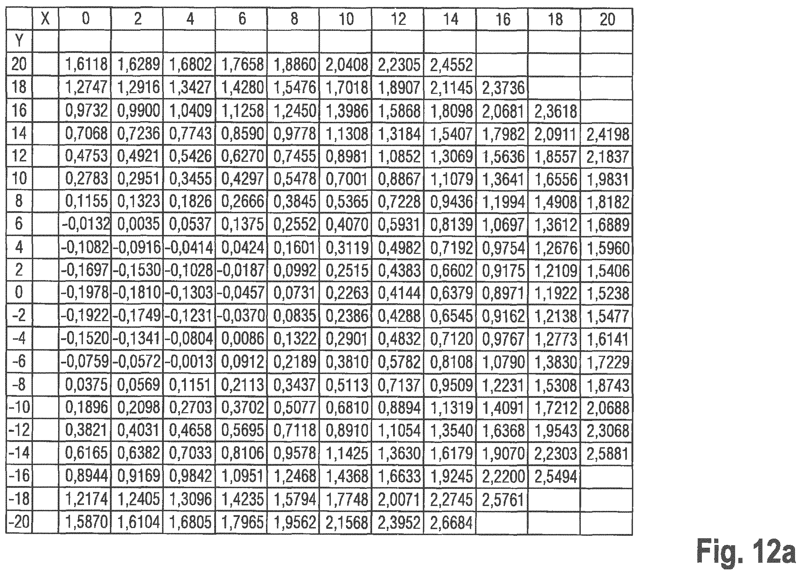

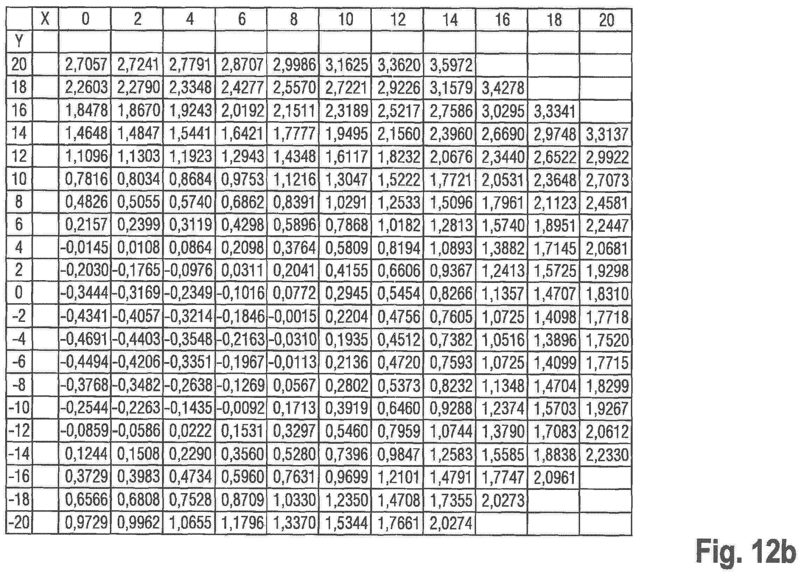

Figur 12   Vergleich der Kontur der Vorderfläche des GRIN-Gleitsicht-Brillenglases nach dem zweiten Ausführungsbeispiel mit der Kontur der Vorderfläche des Vergleichs-Gleitsicht-Brillenglases; die Pfeilhöhen sind gegenüber einer um -7,02° um die horizontale Achse verkippten Ebene angegeben

a: Pfeilhöhen der Vorderfläche des erfindungsgemäßen GRIN-Gleitsicht-Brillenglases nach dem zweiten Ausführungsbeispiel
b: Pfeilhöhen der Vorderfläche des Vergleichs-Gleitsicht-Brillenglases

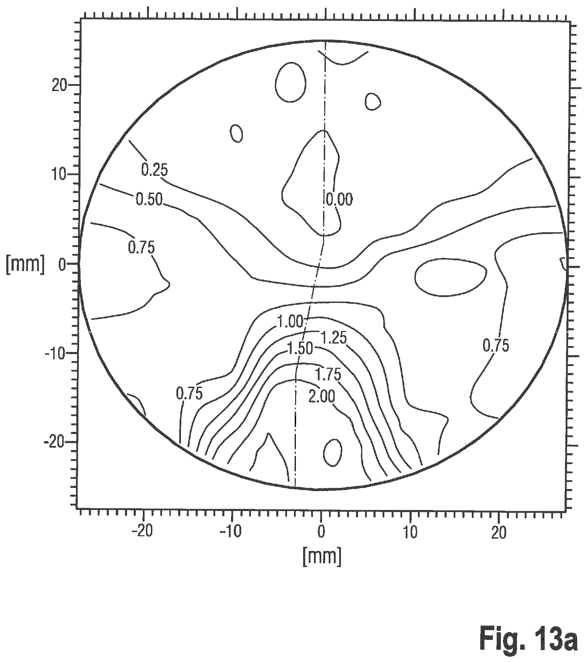

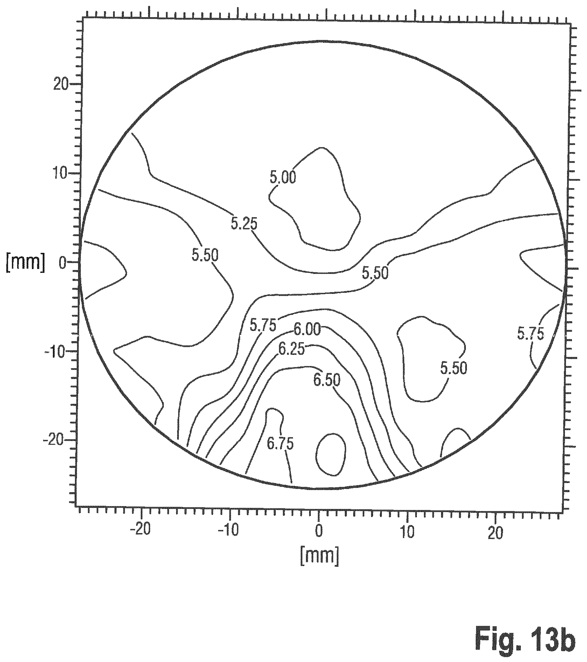

Figur 13   optische Eigenschaften eines Vergleichs-Gleitsicht-Brillenglases herkömmlicher Bauart aus einem Material mit einem Brechungsindex von n=1.600 zu einem GRIN-Gleitsicht-Brillenglas ohne jegliche Symmetrie nach einem dritten Ausführungsbeispiel nach der Erfindung

a: mittlere sphärische Wirkung des Vergleichs-Gleitsicht-Brillenglases
b: mittlerer Flächenbrechwert des Vergleichs-Gleitsicht-Brillenglases, objektseitige Freiformfläche

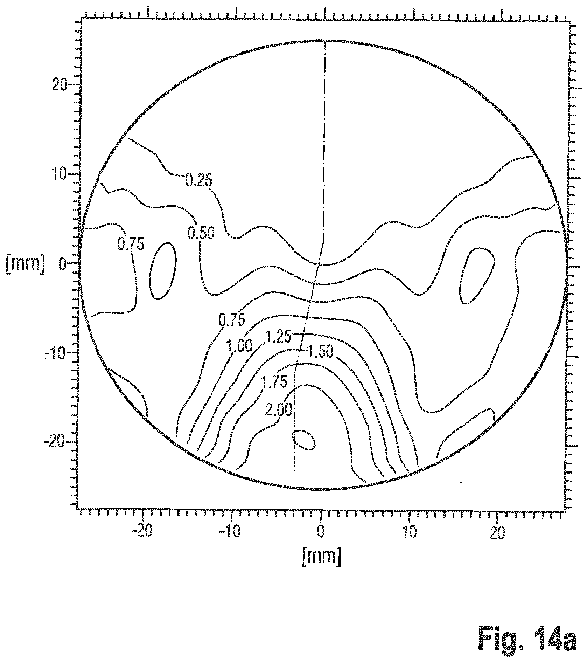

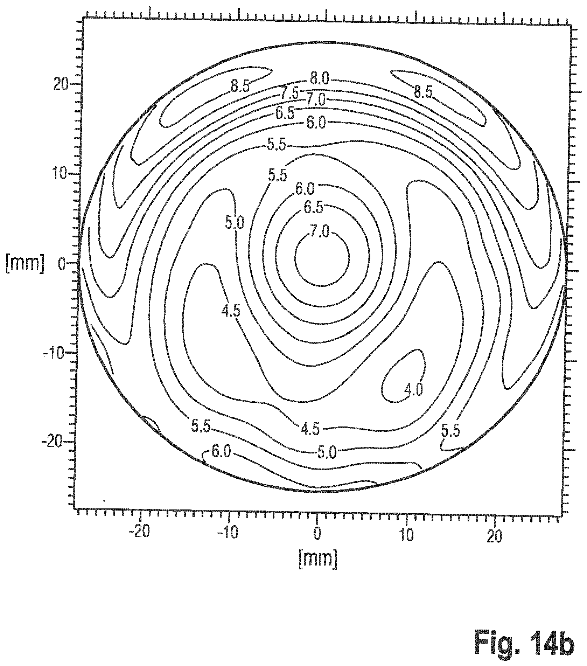

Figur 14   optische Eigenschaften des GRIN-Gleitsicht-Brillenglases nach dem dritten Ausführungsbeispiel

a: mittlere sphärische Wirkung
b: mittlerer Flächenbrechwert gerechnet für eine Brechzahl n=1.600

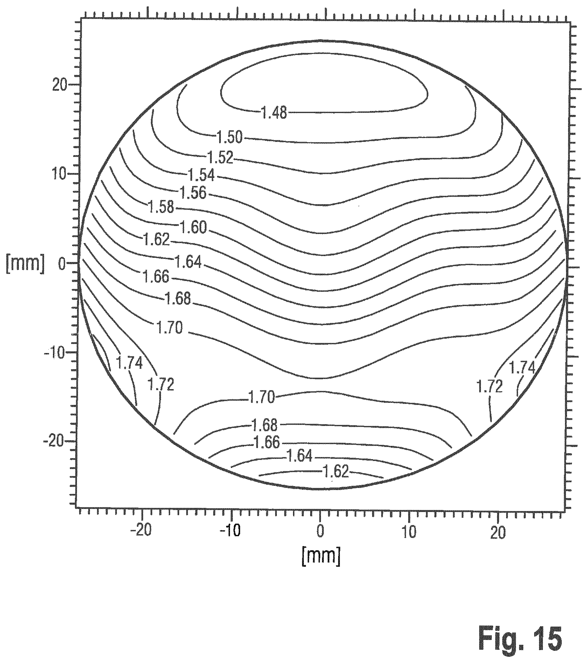

Figur 15   die Verteilung der Brechzahl des GRIN-Gleitsicht-Brillenglases nach dem dritten Ausführungsbeispiel

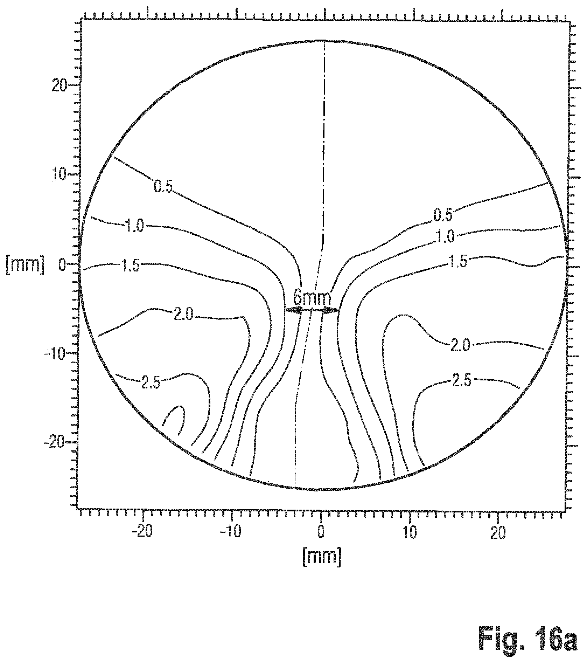

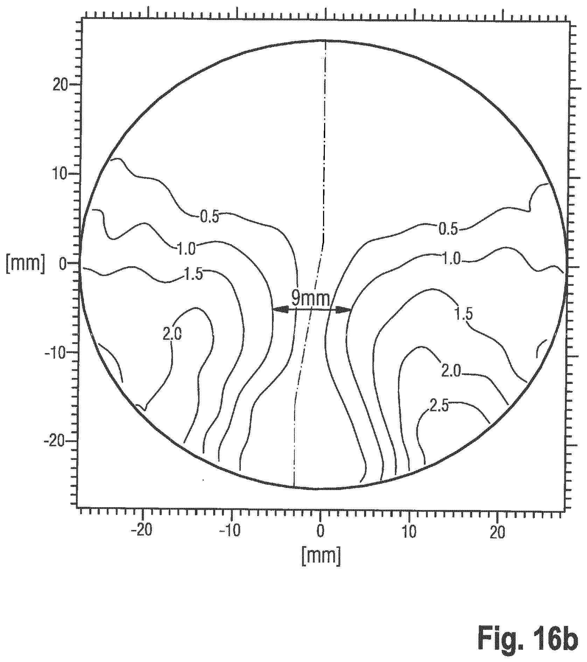

Figur 16   Vergleich der Restastigmatismusverteilung des GRIN-Gleitsicht-Brillenglases nach dem dritten Ausführungsbeispiel mit der Restastigmatismusverteilung des Vergleichs-Gleitsicht-Brillenglases

a: Restastigmatismusverteilung des Vergleichs-Gleitsicht-Brillenglases
b: Restastigmatismusverteilung des erfindungsgemäßen GRIN-Gleitsicht-Brillenglases nach dem dritten Ausführungsbeispiel

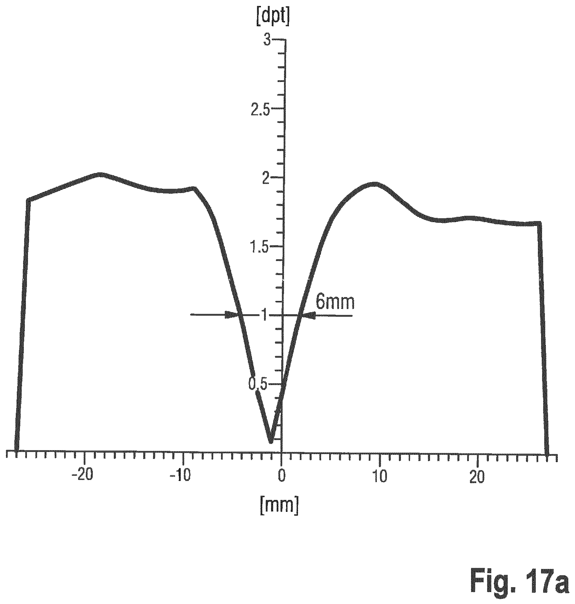

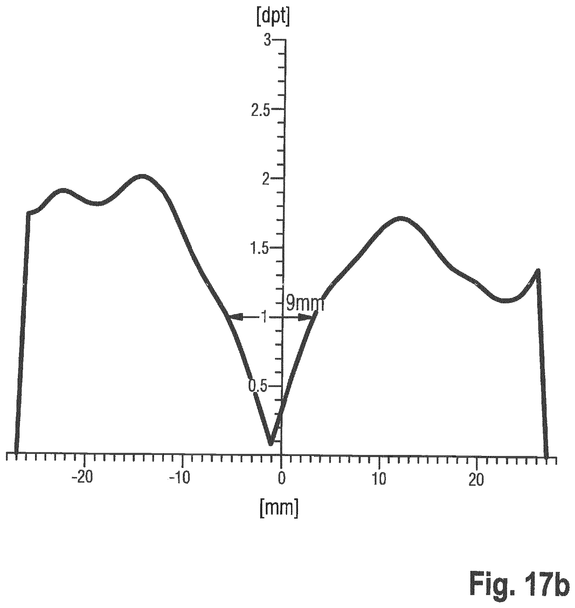

Figur 17   Vergleich der Restastigmatismusverteilung des GRIN-Gleitsicht-Brillenglases nach dem dritten Ausführungsbeispiel mit dem Restastigmatismusverteilung des Vergleichs-Gleitsicht-Brillenglases längs eines Schnitts bei y = -5 mm nach der Figur 16

a: Restastigmatismusverteilung des Vergleichs-Gleitsicht-Brillenglases
b: Restastigmatismusverteilung des erfindungsgemäßen GRIN-Gleitsicht-Brillenglases nach dem dritten Ausführungsbeispiel

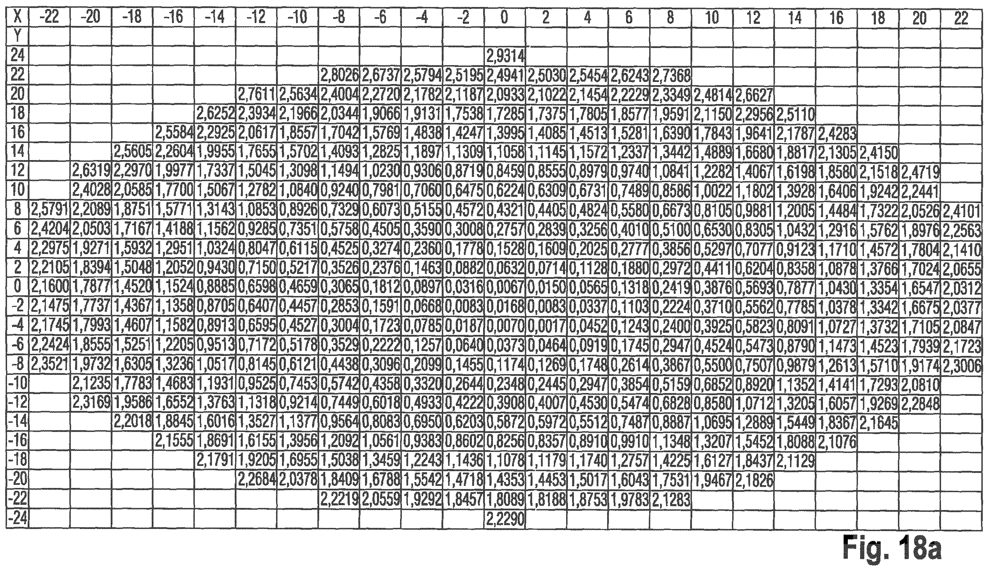

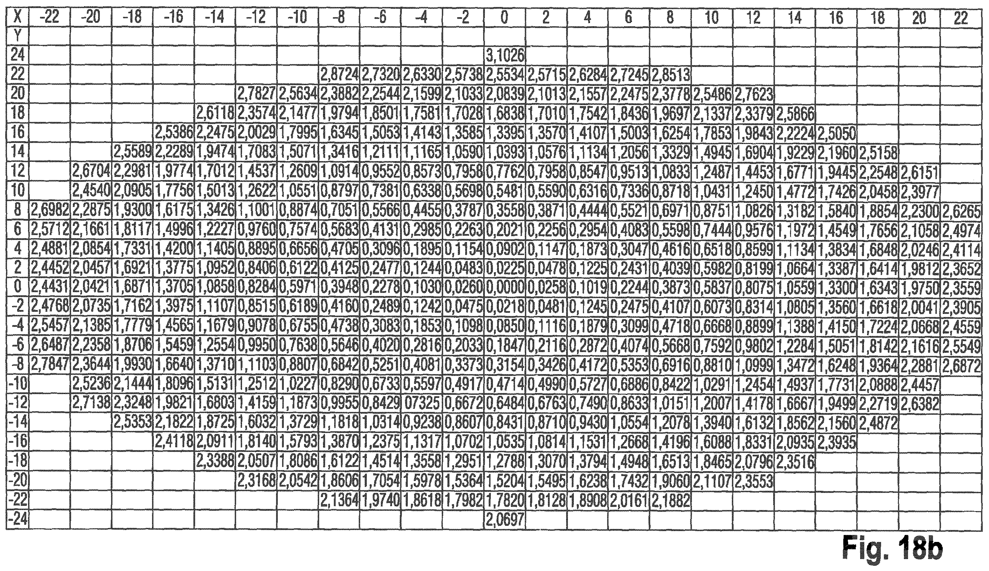

Figur 18   Vergleich der Kontur der Vorderfläche des GRIN-Gleitsicht-Brillenglases nach dem dritten Ausführungsbeispiel mit der Kontur der Vorderfläche des Vergleichs-Gleitsicht-Brillenglases

a: Pfeilhöhen der Vorderfläche des Vergleichs-Gleitsicht-Brillenglases

b: Pfeilhöhen der Vorderfläche des erfindungsgemäßen GRIN-Gleitsicht-Brillenglases nach dem dritten Ausführungsbeispiel

Die drei ersten Ausführungsbeispiele beziehen sich auf GRIN-Gleitsicht-Brillengläser bzw. deren Darstellung in einem Speicher eines Computers entsprechend einem Erzeugnis der erfindungsgemäßen Art. Das vierte Ausführungsbeispiel zeigt exemplarisch ein erfindungsgemäßes Verfahren zum Entwerfen eines GRIN-Gleitsicht-Brillenglases.

Erstes Ausführungsbeispiel

Im ersten Beispiel wird ein Gleitsicht-Brillenglas mit einer besonders einfachen Flächengeometrie gewählt. Es ist spiegelsymmetrisch zu einer auf der Zeichenebene senkrecht stehenden Ebene aufgebaut und besteht im Wesentlichen nur aus einer im mittleren Bereich angeordneten, senkrecht von oben nach unten verlaufenden Zone mit stetig zunehmender Wirkung.

Figur 1a zeigt die Verteilung der mittleren sphärischen Wirkung im Strahlengang für den Brillenträger für ein Gleitsicht-Brillenglas aus einem Standardmaterial (Brechzahl n=1.600) mit einer objektseitigen Freiformfläche, welche durch sogenannte bikubische Splines beschrieben ist. Dieses Gleitsicht-Brillenglas dient als Vergleichs-Gleitsicht-Brillenglas für ein erfindungsgemäß ausgebildetes Gleitsicht-Brillenglas, welches nachfolgend aufgrund dessen räumlich variierendem Brechungsindex als GRIN-Gleitsicht-Brillenglas bezeichnet wird.

Die Rückseite des Vergleichs-Gleitsicht-Brillenglases ist eine sphärische Fläche mit Radius 120 mm und der Augendrehpunkt liegt hinter der geometrischen Mitte des Glases mit einem Abstand von 25,5 mm zur Rückfläche. Das Glas hat eine Mittendicke von 2,5 mm und eine prismatische Wirkung 0 in der geometrischen Mitte. Die Rückfläche ist unverkippt, d.h. sowohl Vorderfläche als auch Rückfläche haben in der geometrischen Mitte eine Normale in Richtung der Blickrichtung horizontal geradeaus.

Die eingezeichneten Koordinatenachsen x und y dienen zur Bestimmung von Punkten auf dieser Fläche. Auf der senkrechten Mittelachse des Glases überschreitet die Wirkung die 0,00 Dioptrien in einer Höhe von etwa y = 25 mm, eine Wirkung von 2,25 dpt (Dioptrien) wird etwa bei y = -25 mm erreicht. Auf dieser Länge von 50 mm steigt demnach die Glaswirkung um 2,25 dpt an. Das Gleitsicht-Brillenglas hat demnach für den Brillenträger in vorgesehener Gebrauchsstellung keine sphärische Wirkung (Sphäre = 0) und keine astigmatische Wirkung (Zylinder = 0) im Fernteil und eine Addition von 2,25 dpt. Nach Abschnitt 11.1 der DIN EN ISO 13666:2013-10 ist ein Brillenglas mit sphärischer Wirkung ein Brillenglas, das ein paraxiales, paralleles Lichtbündel in einem einzelnen Brennpunkt vereinigt Nach Abschnitt 12.1 der DIN EN ISO 13666:2013-10 ist ein Brillenglas mit astigmatischer Wirkung ein Brillenglas, das ein paraxiales, paralleles Lichtbündel in zwei getrennten, zueinander senkrecht stehenden Brennlinien vereinigt, und das daher nur in den beiden Hauptschnitten einen Scheitelbrechwert besitzt. Abschnitt 14.2.1 dieser Norm definiert die Addition als Differenz zwischen dem Scheitelbrechwert des Nahteiles und dem Scheitelbrechwert des Fernteiles.

Figur 1b zeigt den mittleren Flächenbrechwert für n=1.600 der objektseitigen Freiformfläche des Vergleichs-Gleitsicht-Brillenglases der Figur 1a. Die Flächenkrümmung nimmt von oben nach unten stetig zu, der mittlere Flächenbrechwert steigt von etwa 5,3 dpt bei y = 15 mm auf etwa 7,0 dpt bei y = -25 mm.

Figur 1c zeigt den mittleren Flächenastigmatismus für n=1.600 der objektseitigen Freiformfläche des Vergleichs-Gleitsicht-Brillenglases der Figur 1a.

Die Figuren 2a, 2b und 2c zeigen die Nachbildung des Vergleichs-Gleitsicht-Brillenglases mit Verwendung eines GRIN-Materials. Figur 2a zeigt hierzu die Verteilung der mittleren sphärischen Wirkung. Dem Vergleich der Figur 1a und Figur 2a entnimmt man, dass die Wirkungsverteilung der beiden Gleitsicht-Brillengläser gleich ist. In Figur 2b ist der Verlauf des mittleren Flächenbrechwerts, in Figur 2c der Verlauf des Flächenastigmatismus der Vorderfläche des erfindungsgemäß ausgebildeten GRIN-Gleitsicht-Brillenglases dargestellt. Um einen Vergleich der mittleren Krümmungen mit der Figur 1b und des Flächenastigmatismus mit der Figur 1c zu ermöglichen, wurde bei der Berechnung des mittleren Flächenbrechwertes und des Flächenastigmatismus nicht das GRIN-Material, sondern wie vorher das Material mit der Brechzahl n=1.600 verwendet.

Nach Heinz Diepes, Ralf Blendowske: Optik und Technik der Brille; 2. Auflage, Heidelberg 2005, S. 256 sind der mittlere Flächenbrechwert und der Flächenastigmatismus definiert.

Der Vergleich der Figuren 2b und 2c mit den Figuren 1b und 1c zeigt, dass sich die Gestalt der Freiformfläche deutlich geändert hat: Der mittlere Flächenbrechwert (gerechnet mit n=1.600) nimmt jetzt von oben nach unten ab, d.h., die mittlere Krümmung der Fläche wird von oben nach unten geringer. Der Verlauf des Flächenastigmatismus zeigt keinen typischen Progressionskanal mehr.

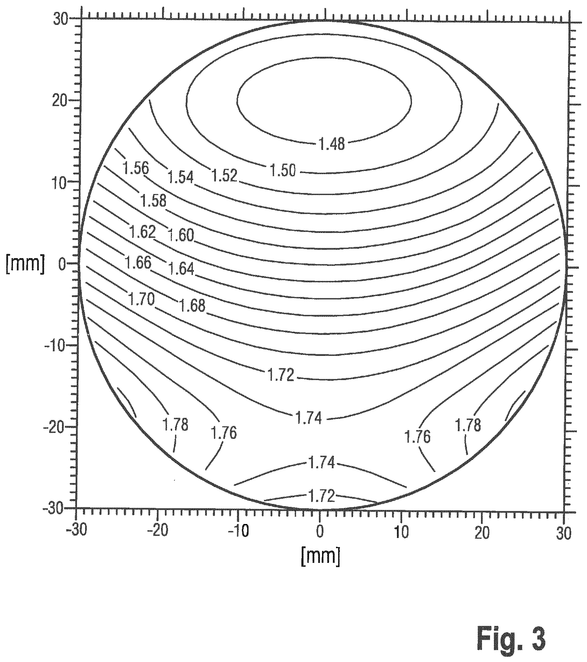

Figur 3 zeigt die Verteilung der Brechzahl über das erfindungsgemäße GRIN-Gleitsicht-Brillenglas. Die Brechzahl steigt hier von oben nach unten von etwa n = 1.48 auf etwa n = 1.75 im unteren Bereich an.

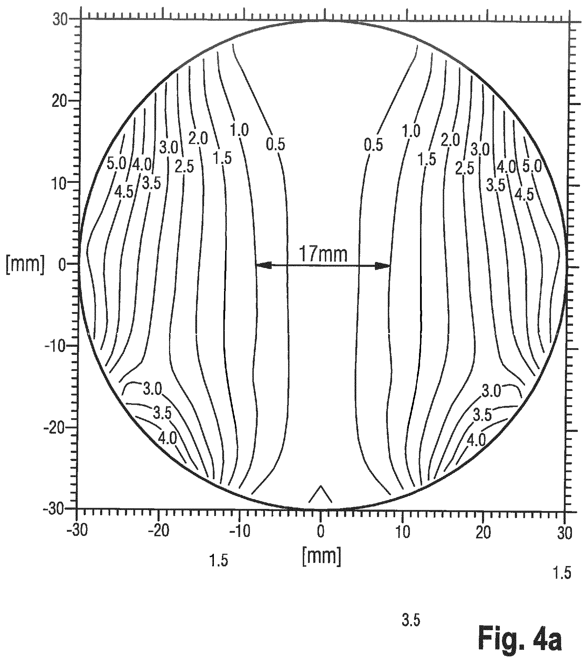

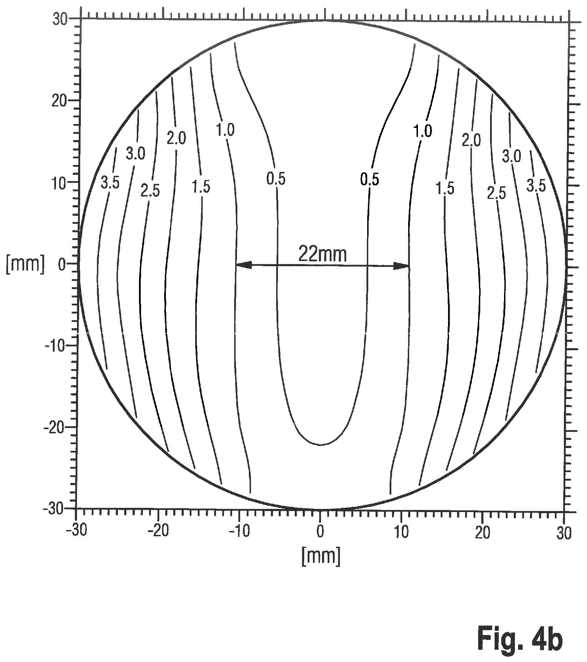

Die Figur 4a und Figur 4b stellen die Auswirkungen des Einsatzes des GRIN-Materials mit seiner speziellen Brechzahlverteilung, sowie des Designs der Freiformfläche für dieses GRIN-Gleitsicht-Brillenglas, auf die Breite des Progressionskanals im Vergleich zum Standardglas dar. Die Figuren zeigen die Verteilung der astigmatischen Restfehler im Strahlengang für den Brillenträger für einen Brillenträger mit rein sphärischer Verordnung.

In diesem Beispiel ergibt sich eine Verbreiterung des Progressionskanals, hier definiert durch die Isoastigmatismuslinie 1 dpt, von 17 mm auf 22 mm, also etwa um 30 Prozent.

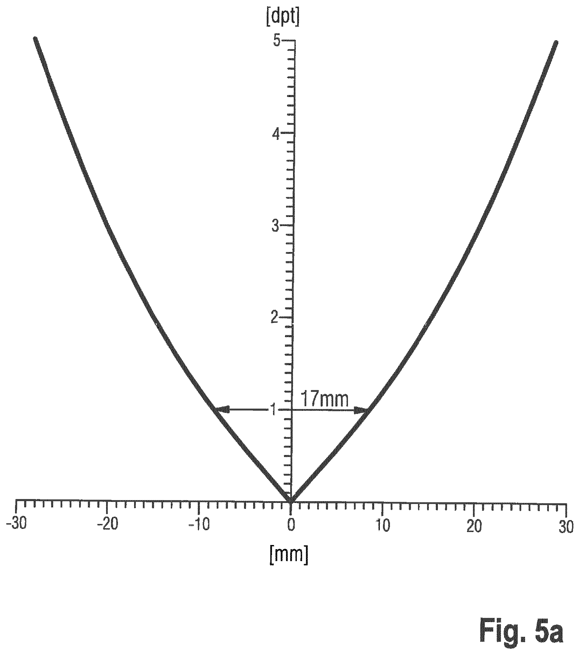

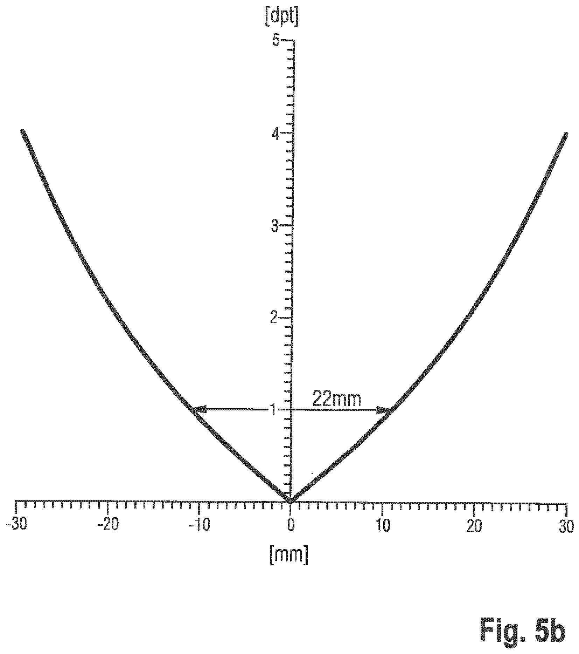

Die Figur 5a und Figur 5b zeigen Querschnitte durch die Restastigmatismusverteilungen aus Figur 4a und Figur 4b. Hier wird die herkömmliche Beziehung zwischen Wirkungsanstieg und dem dadurch induzierten seitlichen Anstieg des astigmatischen Fehlers (ähnlich der Beziehung des mittleren Flächenbrechwertes zum Flächenastigmatismus nach dem Satz von Minkwitz) besonders deutlich. Der Anstieg des Astigmatismus in der Umgebung der Mitte des Progressionskanals (y = 0) ist für das GRIN-Glas deutlich geringer, obwohl derselbe Wirkungsanstieg wie im Standardglas vorhanden ist. Gerade dieser Anstieg wird in der Theorie der Optik der Gleitsichtgläser mit Minkwitz' Aussage erklärt.

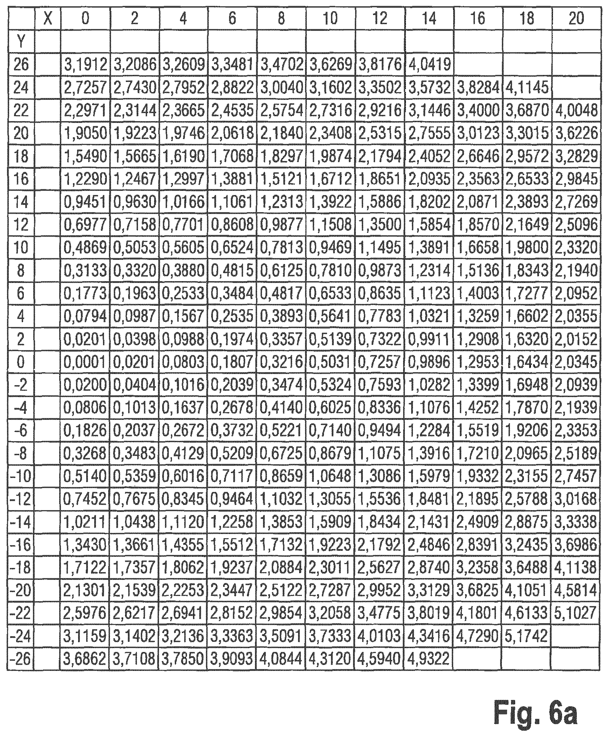

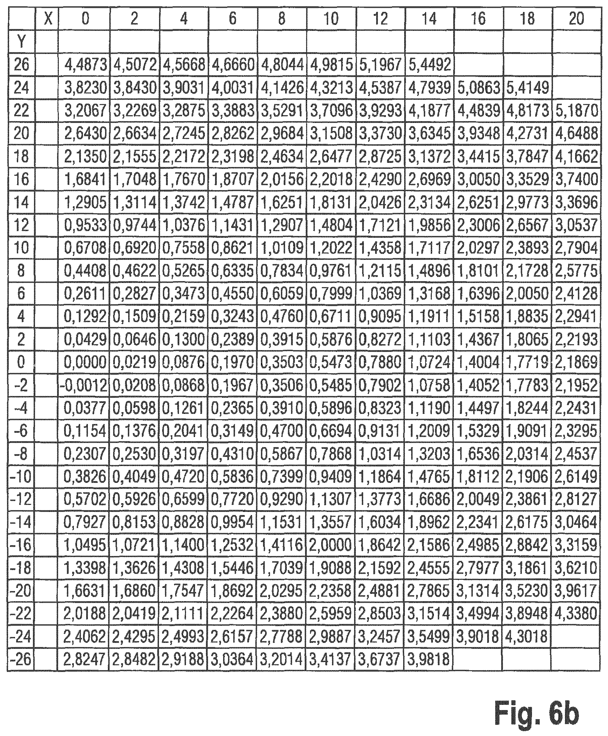

Die Figur 6 vergleicht die Kontur der Vorderfläche des GRIN-Gleitsicht-Brillenglases nach dem ersten Ausführungsbeispiel mit der Kontur der Vorderfläche des Vergleichs-Gleitsicht-Brillenglases mit Hilfe einer Pfeilhöhendarstellung. Die Figur 6b zeigt die Pfeilhöhen der Vorderfläche des erfindungsgemäßen GRIN-Gleitsicht-Brillenglases nach dem ersten Ausführungsbeispiel und im Vergleich dazu zeigt Figur 6a die Pfeilhöhen der Vorderfläche des Vergleichs-Gleitsicht-Brillenglases.

Zweites Ausführungsbeispiel

Alle folgenden Figuren entsprechen thematisch und in der Reihenfolge denjenigen zum ersten Ausführungsbeispiel.

Die Figur 7a zeigt die Verteilung der mittleren sphärischen Wirkung im Strahlengang für den Gleitsicht-Brillenträger für ein Vergleichs-Gleitsicht-Brillenglas aus einem Standardmaterial (Brechzahl n=1.600) mit einer objektseitigen Freiformfläche. Die Rückseite ist wieder eine sphärische Fläche mit Radius 120 mm und der Augendrehpunkt liegt 4 mm über der geometrischen Mitte des Vergleichs-Gleitsicht-Brillenglases mit einem horizontalen Abstand von 25,8 mm zur Rückfläche. Das Vergleichs-Gleitsicht-Brillenglas hat eine Mittendicke von 2.6 mm und 2 mm unterhalb der geom. Mitte eine prismatische Wirkung 1.0 cm/m Basis 270° . Die Rückfläche ist um -8° um die horizontale Achse verkippt.

Die eingezeichneten Koordinatenachsen dienen zur Bestimmung von Punkten auf dieser Fläche. Auf der senkrechten Mittelachse des Vergleichs-Gleitsicht-Brillenglases überschreitet die Wirkung die 0,00 Dioptrie-Linie in einer Höhe von etwa y = 6 mm (d.h. der Brillenträger erhält beim Blick horizontal geradeaus nahezu eine Wirkung von 0 dpt), eine Wirkung von 2,00 Dioptrien wird etwa bei y = -14 mm erreicht. Auf dieser Länge von 20 mm steigt demnach die Glaswirkung um 2,00 dpt an

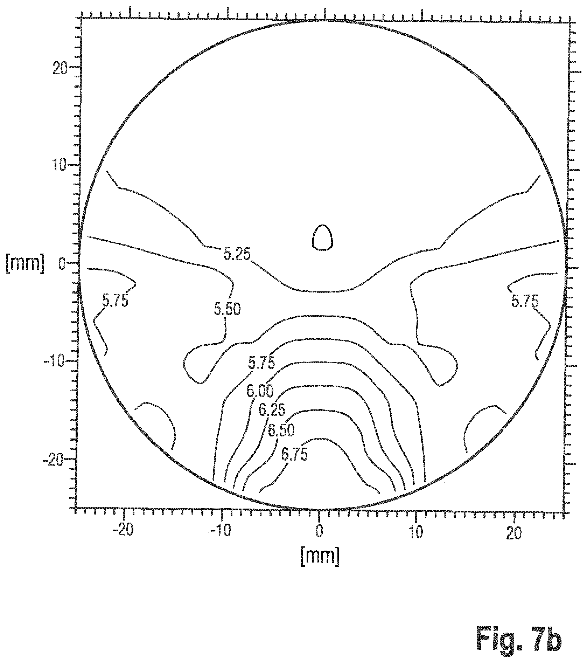

Figur 7b zeigt den mittleren Flächenbrechwert für n=1.600 der objektseitigen Freiformfläche des Vergleichs-Gleitsicht-Brillenglases der Figur 7a. Die Flächenkrümmung nimmt von oben nach unten stetig zu, der mittlere Flächenbrechwert steigt von 5,00 dpt bei y = 2 mm auf 6,75 dpt bei y = -18 mm.

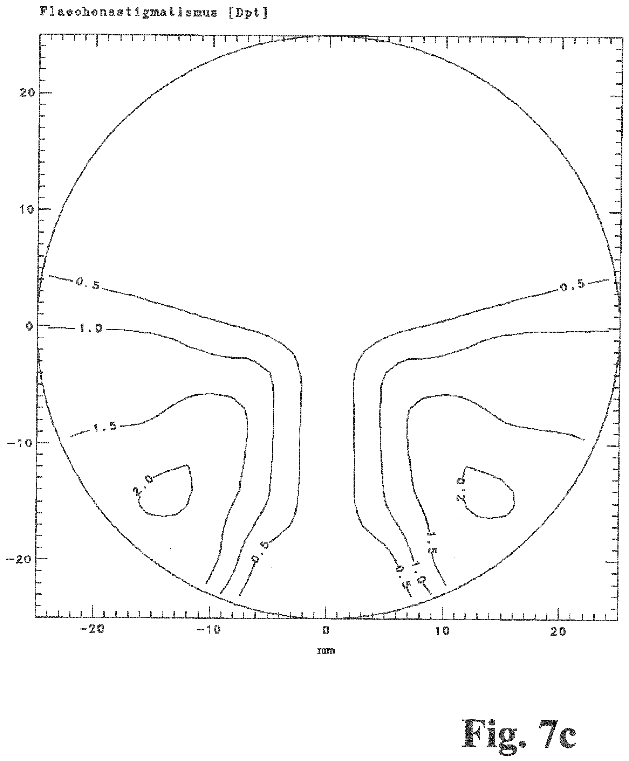

Figur 7c zeigt den Flächenastigmatismus für n=1.600 der objektseitigen Freiformfläche des Vergleichs-Gleitsicht-Brillenglases der Figur 7a.

Die Figuren 8a, 8b und 8c zeigen die Nachbildung des Vergleichs-Gleitsicht-Brillenglases unter Verwendung eines GRIN-Materials (erfindungsgemäßes Gleitsicht-Brillenglas). Figur 8a zeigt hierzu die Verteilung der mittleren sphärischen Wirkung. Dem Vergleich der Figuren 7a und 8a entnimmt man, dass der Wirkungsanstieg entlang der senkrechten Mittellinie der beiden Gläser gleich ist. In Figur 8b ist der Verlauf des mittleren Flächenbrechwerts, in Figur 8c der Verlauf des Flächenastigmatismus der Vorderfläche des erfindungsgemäßen GRIN-Gleitsicht-Brillenglases dargestellt. Um einen Vergleich der mittleren Krümmungen mit der Figur 7b und des Flächenastigmatismus mit der Figur 7c zu ermöglichen, wurde bei der Berechnung nicht das GRIN-Material, sondern wie vorher das Material mit der Brechzahl n=1,600 verwendet.

Der Vergleich der Figuren 8b und 8c mit den Figuren 7b und 7c zeigt, dass sich die Gestalt der Freiformfläche deutlich geändert hat: der mittlere Flächenbrechwert (gerechnet mit n=1,600) nimmt jetzt von der Glasmitte zum Rand hin in ungleichmäßiger Weise ab. Der Verlauf des Flächenastigmatismus zeigt keinen typischen Progressionskanal mehr.

Die Figur 9 zeigt die Verteilung der Brechzahl über das Brillenglas. Die Brechzahl steigt hier von ca. 1,60 von der Mitte des Glases auf etwa n = 1.70 im unteren Bereich an.

Die Figur 10a und die Figur 10b stellen die Auswirkungen des Einsatzes des GRIN-Materials mit seiner speziellen Brechzahlverteilung, sowie des Designs der Freiformfläche für dieses GRIN-Gleitsicht-Brillenglas, auf die Breite des Progressionskanals im Vergleich zum Vergleichs-Gleitsicht-Brillenglas dar. Die Figuren zeigen die Verteilung der astigmatischen Restfehler im Strahlengang für den Brillenträger für einen Brillenträger mit rein sphärischer Verordnung.

In diesem Beispiel ergibt sich eine Verbreiterung des Progressionskanals, hier definiert durch die Isoastigmatismuslinie 1 dpt, von 8,5 mm auf 12 mm, also etwa um 41 Prozent.

Die Figur 11a und die Figur 11b zeigen Querschnitte durch die Restastigmatismusverteilungen aus Figur 10a und Figur 10b. Hier wird die herkömmliche Beziehung zwischen Wirkungsanstieg und dem dadurch induzierten seitlichen Anstieg des astigmatischen Fehlers (ähnlich der Beziehung des mittleren Flächenbrechwertes zum Flächenastigmatismus nach dem Satz von Minkwitz) besonders deutlich. Der Anstieg des Astigmatismus in der Umgebung der Mitte des Progressionskanals (y = -5 mm) ist für das erfindungsgemäße GRIN-Gleitsicht-Brillenglas deutlich geringer, obwohl derselbe Wirkungsanstieg wie im Vergleichs-Gleitsicht-Brillenglas vorhanden ist. Analog zum ersten Ausführungsbeispiel ergibt sich eine deutliche Abweichung des Astigmatismusgradienten des GRIN- Gleitsicht-Brillenglases von dem von Minkwitz vorhergesagten Verhalten: Der Progressionskanal wird deutlich breiter.

Die Figur 12 vergleicht die Kontur der Vorderfläche des GRIN-Gleitsicht-Brillenglases nach dem zweiten Ausführungsbeispiel mit der Kontur der Vorderfläche des Vergleichs-Gleitsicht-Brillenglases mit Hilfe einer Pfeilhöhendarstellung. Die Figur 12b zeigt die Pfeilhöhen der Vorderfläche des erfindungsgemäßen GRIN-Gleitsicht-Brillenglases nach dem zweiten Ausführungsbeispiel und im Vergleich dazu zeigt Figur 12a die Pfeilhöhen der Vorderfläche des Vergleichs-Gleitsicht-Brillenglases jeweils bzgl. eines um -7.02 um eine horizontale Achse gekippten Koordinatensystems (d.h. die vertikale Y-Achse dieses Systems ist um -7.02° gegenüber der Raumvertikalen verkippt).

Drittes Ausführungsbeispiel

Alle folgenden Figuren entsprechen thematisch und in der Reihenfolge denjenigen zum zweiten Ausführungsbeispiel.

Das dritte Ausführungsbeispiel zeigt zwei Gleitsichtgläser, bei denen die Konvergenzbewegung des Auges beim Blick auf Objekte in den Zwischenentfernungen und in der Nähe, die geradeaus vor dem Auge des Brillenträgers liegen, berücksichtigt werden. Diese Konvergenzbewegung bewirken, das die Durchblickpunkte durch die Vorderfläche des Brillenglases beim Blick auf diese Punkte nicht auf einem exakt senkrechten Geradenstück, sondern auf einer zur Nase hin verschwenkten vertikalen Linie liegen, die als Hauptblicklinie bezeichnet wird.

Daher ist in diesen Beispielen auch die Mitte des Nahbereichs horizontal nasaler Richtung verschoben. Die Beispiele sind so gerechnet, dass diese Hauptblicklinie im Progressionsbereich mittig zwischen den Linien auf der Vorderfläche liegen, für die der astigmatische Restfehler 0,5 dpt beträgt (siehe dazu die Figuren 16a und 16b).

Die Figur 13a zeigt die Verteilung der mittleren sphärischen Wirkung im Strahlengang für den Gleitsicht-Brillenträger für ein Vergleichs-Gleitsicht-Brillenglas aus einem Standardmaterial (Brechzahl n = 1,600) mit einer objektseitigen Freiformfläche. Die Rückseite ist wieder eine sphärische Fläche mit Radius 120 mm und der Augendrehpunkt liegt 4 mm über der geometrischen Mitte des Vergleichs-Gleitsicht-Brillenglases mit einem horizontalen Abstand von 25,5 mm zur Rückfläche. Das Vergleichs-Gleitsicht-Brillenglas hat eine Mittendicke von 2,5 mm und 2 mm unterhalb der geom. Mitte eine prismatische Wirkung 1,0 cm/m Basis 270°. Die Rückfläche ist so verkippt, dass das beim Blick horizontal geradeaus der augenseitige Strahl senkrecht zur Rückfläche steht.

Der Brillenträger erhält beim Blick horizontal geradeaus (d.h. für einen Durchblickpunkt durch das Glas von 4 mm oberhalb der geometrischen Mitte) eine mittlere Wirkung von 0 dpt und bei einem Blick durch den Punkt 13 mm unterhalb der geometrischen Mitte und -2,5 mm horizontal in nasaler Richtung eine mittlere Wirkung von 2,00 dpt. D.h. auf einer Länge von 17 mm steigt demnach die Glaswirkung um ca. 2,00 dpt an.

Figur 13b zeigt die Verteilung des mittleren Flächenbrechwertes für eine Brechzahl n=1,600 der objektseitigen Freiformfläche des Vergleichs-Gleitsicht-Brillenglases des dritten Ausführungsbeispiels, das eine Verteilung der mittleren Wirkung bewirkt, wie sie in Figur 13a dargestellt wird. Die Flächenkrümmung nimmt von oben nach unten stetig zu, der mittlere Flächenbrechwert steigt von 5,00 dpt bei y = ca. 2 mm auf 6,50 dpt bei y = -12 mm.

Die Figuren 14a und 14b zeigen die Nachbildung des Vergleichs-Gleitsicht-Brillenglases unter Verwendung eines GRIN-Materials (erfindungsgemäßes Gleitsicht-Brillenglas). Figur 14a zeigt hierzu die Verteilung der mittleren sphärischen Wirkung. Dem Vergleich der Figuren 13a und 14a entnimmt man, dass der Wirkungsanstieg entlang der Hauptblicklinie im Progressionsbereich gleich ist. In Figur 14b ist der Verlauf des mittleren Flächenbrechwerts der Vorderfläche des erfindungsgemäßen GRIN-Gleitsicht-Brillenglases dargestellt. Um einen Vergleich der mittleren Krümmungen mit der Figur 13b zu ermöglichen, wurde bei der Berechnung nicht das GRIN-Material, sondern wie vorher das Material mit der Brechzahl n = 1,600 verwendet.

Der Vergleich der Figur 13b mit der Figur 14b zeigt, dass sich die Gestalt der Freiformfläche deutlich geändert hat: der mittlere Flächenbrechwert (gerechnet mit n = 1,600) nimmt jetzt von der Glasmitte zum Rand hin in ungleichmäßiger Weise ab, um in der Peripherie hin wieder anzusteigen.

Die Figur 15 zeigt die Verteilung der Brechzahl über das Brillenglas. Die Brechzahl steigt hier von ca. 1,48 im oberen Bereichs des Glases auf etwa 1,70 im in Höhe y = -13 im unteren Bereich an.

Die Figuren 16a und 16b stellen die Auswirkungen des Einsatzes des GRIN-Materials mit seiner speziellen Brechzahlverteilung sowie des Designs der Freiformfläche für dieses GRIN-Gleitsicht-Brillenglas auf die Breite des Progressionskanals im Vergleich zum Vergleichs-Gleitsicht-Brillenglas dar. Die Figuren zeigen die Verteilung der astigmatischen Restfehler im Strahlengang für den Brillenträger für einen Brillenträger mit rein sphärischer Verordnung.

In diesem dritten Beispiel ergibt sich eine Verbreiterung des Progressionskanals, hier definiert durch die Isoastigmatismuslinie 1 dpt, von 6 mm auf 9 mm, also etwa um 50 Prozent.

Die Figur 17a und die Figur 17b zeigen Querschnitte durch die Restastigmatismusverteilungen aus Figur 16a und Figur 16b. Diese Figuren verdeutlichen wieder die herkömmliche Beziehung zwischen Wirkungsanstieg und dem dadurch induzierten seitlichen Anstieg des astigmatischen Fehlers (ähnlich der Beziehung des mittleren Flächenbrechwertes zum Flächenastigmatismus nach dem Satz von Minkwitz). Der Anstieg des astigmatischen Restfehlers in der Umgebung der Mitte des Progressionskanals (y = -5 mm) ist für das erfindungsgemäße GRIN-Gleitsicht-Brillenglas wieder deutlich geringer, obwohl derselbe Wirkungsanstieg wie im Vergleichs-Gleitsicht-Brillenglas vorhanden ist.

Die Figur 18 vergleicht die Kontur der Vorderfläche des GRIN-Gleitsicht-Brillenglases nach dem ersten Ausführungsbeispiel mit der Kontur der Vorderfläche des Vergleichs-Gleitsicht-Brillenglases mit Hilfe einer Pfeilhöhendarstellung. Die Figur 18b zeigt die Pfeilhöhen der Vorderfläche des erfindungsgemäßen GRIN-Gleitsicht-Brillenglases nach dem dritten Ausführungsbeispiel und im Vergleich dazu zeigt Figur 18a die Pfeilhöhen der Vorderfläche des Vergleichs-Gleitsicht-Brillenglases jeweils bzgl. einer Ebene, die senkrecht auf der Blickrichtung horizontal geradeaus steht.

Viertes Ausführungsbeispiel

Nachfolgend werden die wesentlichen Schritte eines erfindungsgemäßen Verfahrens zum Entwerfen eines GRIN-Gleitsicht-Brillenglases skizziert:
In einem ersten Schritt werden individuelle Benutzerdaten bzw. Anwendungsdaten des Brillenträgers erfasst. Hierzu gehören die Erfassung von dem Brillenträger zuordenbaren (physiologischen) Daten und die Erfassung von Gebrauchsbedingungen, unter denen der Brillenträger die zu entwerfende Gleitsicht-Brille tragen wird.

Zu den physiologischen Daten des Brillenträgers gehören z.B. die Fehlsichtigkeit und die Akkommodationsfähigkeit, die mittels einer Refraktionsmessung festgestellt wird und regelmäßig in Form der Rezeptwerte für Sphäre, Zylinder, Achslage, Prisma und Basis sowie Addition in die Verordnung eingehen. Weiterhin werden z.B. die Pupillendistanz und die Pupillengröße bei unterschiedlichen Lichtverhältnissen festgestellt. Das Alter des Brillenträgers wird z.B. berücksichtigt, welches Einfluss auf die zu erwartende Akkommodationsfähigkeit und Pupillengröße hat. Das Konvergenzverhalten der Augen ergibt sich aus der Pupillendistanz für unterschiedliche Blickrichtungen und Objektentfernungen.

Zu den Gebrauchsbedingungen gehören der Sitz der Brillengläser vor dem Auge (üblicherweise in Bezug zum Augendrehpunkt) und die Objektabstände für unterschiedliche Blickrichtungen, unter denen der Brillenträger scharf sehen soll. Der Sitz der Brillenträger vor dem Auge kann z.B. über die Erfassung von Hornhautscheitelabstand, Vor- und Seitenneigung bestimmt werden.

Diese Daten gehen in ein Objektabstandsmodell ein, für welches ein Strahldurchrechnungsverfahren durchgeführt werden kann.

**In** einem nachfolgenden Schritt wird auf Basis dieser erfassten Daten ein Designentwurf für das Brillenglas mit einer Vielzahl von Bewertungsstellen festgelegt. Der Designentwurf umfasst optische Soll-Eigenschaften für das Gleitsicht-Brillenglas an der jeweiligen Bewertungsstelle. Zu den Soll-Eigenschaften gehören z.B. die zulässige Abweichung von der verordneten sphärischen und astigmatischen Wirkung unter Berücksichtigung der Addition und zwar verteilt über das gesamte Gleitsicht-Brillenglas, wie dies durch die Anordnung des Brillenglases vor dem Auge und das zugrunde gelegte Abstandsmodell vorgegeben ist.

Weiterhin werden ein Entwurf von Flächengeometrien für die Vorder- und Rückfläche sowie ein Entwurf für eine Brechungsindexverteilung über das gesamte Brillenglas festgelegt. So kann z.B. die Vorderfläche als sphärische Fläche gewählt werden und die Rückfläche als Gleitsichtfläche. Es könnten auch beide Flächen zunächst als sphärische Flächen gewählt werden. Die Wahl der Flächengeometrie für den ersten Entwurf bestimmt nachfolgend im Allgemeinen lediglich die Konvergenz (Geschwindigkeit und Erfolg) des angewandten Optimierverfahrens. Es soll beispielsweise davon ausgegangen werden, dass die Vorderfläche die sphärische Gestalt beibehalten soll und die Rückfläche die Form einer Gleitsichtfläche erhält.

In einem weiteren Schritt wird der Verlauf von Hauptstrahlen durch die Vielzahl von Bewertungsstellen bestimmt. Ggf. kann eine lokale Wellenfront zu jedem der Hauptstrahlen in einer Umgebung des jeweiligen Hauptstrahls festgelegt werden.

In einem nachfolgenden Schritt werden die o.a. optischen Eigenschaften des Brillenglases an den Bewertungsstellen durch Bestimmen eines Einflusses des Brillenglases auf den Strahlengang der Hauptstrahlen und ggf. die lokalen Wellenfronten in einer Umgebung der jeweiligen Bewertungsstelle ermittelt.

In einem weiteren Schritt wird der Entwurf des Brillenglases in Abhängigkeit von den ermittelten optischen Eigenschaften und den individuellen Benutzerdaten bewertet. Die Rückfläche und die Brechungsindexverteilung des Entwurfs des Brillenglases werden dann im Hinblick auf eine Minimierung einer Zielfunktion

$$F = \sum_m P_m \sum_n W_n \left(T_n - A_n\right)^2$$

modifiziert, wobei $P_m$ die Gewichtung an der Bewertungsstelle m, $W_n$ die Gewichtung der optischen Eigenschaft n, $T_n$ den Soll-Wert der optischen Eigenschaft n an der jeweiligen Bewertungsstelle m und $A_n$ den Ist-Wert der optischen Eigenschaft n an der Bewertungsstelle m darstellt.

Anders ausgedrückt wird die lokale Flächengeometrie der Rückfläche und den lokale Brechungsindex des Gleitsicht-Brillenglases im jeweiligen Sehstrahlengang durch die Bewertungsstellen so lange modifiziert, bis ein Abbruchkriterium erfüllt ist.

Das auf diese in erfindungsgemäßer Weise entworfene GRIN-Gleitsichtbrillenglas kann dann nach diesem Entwurf gefertigt werden.

## Patentansprüche

1. Erzeugnis umfassend ein Gleitsicht-Brillenglas oder eine auf einem Datenträger in Form von computerlesbaren Daten befindliche Darstellung des Gleitsicht-Brillenglases mit Anweisungen für eine Herstellung durch ein additives Verfahren, wobei das Gleitsicht-Brillenglas

   (a) eine als Gleitsichtfläche ausgebildete Vorderfläche mit einer Vorderflächengeometrie und eine Rückfläche mit einer Rückflächengeometrie oder
   (b) eine als Gleitsichtfläche ausgebildete Rückfläche mit einer Rückflächengeometrie und eine Vorderfläche mit einer Vorderflächengeometrie sowie

   - einen räumlich variierenden Brechungsindex aufweist,
   **dadurch gekennzeichnet, dass**

   - das Erzeugnis ferner eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, umfasst, dass
   - das Gleitsicht-Brillenglas eine Verteilung eines sphärisches Äquivalents für die vorbestimmte Anordnung des Gleitsicht-Brillenglases vor dem Auge des Gleitsicht-Brillenträgers, für den das Gleitsicht-Brillenglas bestimmt ist, aufweist, dass
   - das Erzeugnis ferner

       (i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder
       (ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder
       (iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, aufweist, und/oder
       (iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, und dass

   der Brechungsindex des Gleitsicht-Brillenglases räumlich derart variiert, dass der Maximalwert des Restastigmatismus des Gleitsicht-Brillenglases kleiner ist, als der Maximalwert des Restastigmatismus eines Vergleichs-Gleitsicht-Brillenglases mit räumlich nicht variierendem Brechungsindex aber gleicher Verteilung des sphärischen Äquivalents bei gleicher Anordnung des Vergleichs-Gleitsicht-Brillenglases vor dem Auge des Gleitsicht-Brillenträgers, wobei der Maximalwert des Restastigmatismus des Vergleichs-Gleitsicht-Brillenglases an einem gleichen Ort gelegen ist, wie der Maximalwert des Restastigmatismus des Gleitsicht-Brillenglases, wobei

   - im Fall (a) die Vorderflächengeometrie der als Gleitsichtfläche ausgebildeten Vorderfläche des Gleitsicht-Brillenglases gegenüber einer Vorderflächengeometrie einer als Gleitsichtfläche ausgebildeten Vorderfläche des Vergleichs-Gleitsicht-Brillenglases modifiziert ausgebildet ist und die Rückflächengeometrie der Rückfläche des Gleitsicht-Brillenglases identisch wie eine Rückflächengeometrie einer Rückfläche des Vergleichs-Gleitsicht-Brillenglases ausgebildet ist und

- im Fall (b) die Rückflächengeometrie der als Gleitsichtfläche ausgebildeten Rückfläche des Gleitsicht-Brillenglases gegenüber einer Rückflächengeometrie einer als Gleitsichtfläche ausgebildeten Rückfläche des Vergleichs-Gleitsicht-Brillenglases modifiziert ausgebildet ist und die Vorderflächengeometrie der Vorderfläche des Gleitsicht-Brillenglases identisch wie eine Vorderflächengeometrie einer Vorderfläche des Vergleichs-Gleitsicht-Brillenglases ausgebildet ist.

2. Erzeugnis nach Anspruch 1, **dadurch gekennzeichnet, dass** wenigstens eine der Freiformflächen keine Punktsymmetrie und keine Achsensymmetrie aufweist oder dass wenigstens eine der Freiformflächen keine Punktsymmetrie und keine Achsensymmetrie und keine Rotationssymmetrie und keine Symmetrie bzgl. einer Symmetrieebene aufweist.

3. Erzeugnis nach einem der Ansprüche 1 oder 2, **dadurch gekennzeichnet, dass** das Gleitsicht-Brillenglas einen Progressionskanal aufweist und dass

    - die als Freiformfläche ausgebildete Vorderfläche so gestaltet ist, dass die mittlere Krümmung im Progressionskanal maximal ist und/oder
    - die als Freiformfläche ausgebildete Rückfläche so gestaltet ist, dass die mittlere Krümmung im Progressionskanal minimal ist.

4. Erzeugnis nach einem der Ansprüche 1 bis 3, **dadurch gekennzeichnet, dass**

    - das Erzeugnis ferner eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, umfasst, dass
    - das Gleitsicht-Brillenglas eine Verteilung eines sphärisches Äquivalents für die vorbestimmte Anordnung des Gleitsicht-Brillenglases vor dem Auge des Gleitsicht-Brillenträgers, für den das Gleitsicht-Brillenglas bestimmt ist, aufweist, dass
    - das Gleitsicht-Brillenglas einen Progressionskanal mit einer Breite aufweist, und dass der Brechungsindex des Gleitsicht-Brillenglases räumlich derart variiert, dass die Breite des Progressionskanals des Gleitsicht-Brillenglases wenigstens in einem Schnitt oder über die gesamte Länge des Progressionskanals größer ist, als die Breite des Progressionskanals eines Vergleichs-Gleitsicht-Brillenglases mit gleicher Verteilung des sphärischen Äquivalents bei gleicher Anordnung des Vergleichs-Gleitsicht-Brillenglases vor dem Auge des Gleitsicht-Brillenträgers aber räumlich nicht variierendem Brechungsindex.

5. Erzeugnis nach Anspruch 4, **dadurch gekennzeichnet, dass** der wenigstens eine Schnitt eine Variante aus der Gruppe

    - horizontaler Schnitt,
    - Schnitt bei halber Addition,
    - horizontaler Schnitt bei halber Addition
    - horizontaler Schnitt bei halber Addition und horizontaler Schnitt bei 25 % der Addition
    - horizontaler Schnitt bei halber Addition und horizontaler Schnitt bei 75 % der Addition
    - horizontaler Schnitt bei halber Addition und horizontaler Schnitt bei 25 % der Addition und horizontaler Schnitt bei 75 % der Addition

gewählt ist.

6. Erzeugnis nach Anspruch 4 oder 5, **dadurch gekennzeichnet, dass**

    - das Erzeugnis ferner

        (i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder
        (ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder
        (iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, aufweist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, dass

- das Gleitsicht-Brillenglas ein Fernteil und ein Nahteil aufweist und dass
- die Breite des Progressionskanals der Abmessung quer zu einer zwischen Fernteil und Nahteil verlaufenden Längsrichtung des Progressionskanals entspricht, innerhalb der der Wert des Betrags des Restastigmatismus unterhalb eines vorbestimmten Grenzwerts liegt, der innerhalb eines Bereichs aus der nachfolgend angegebenen Gruppe ausgewählt ist:

(a) der Grenzwert liegt im Bereich zwischen 0,25 dpt und 1,5 dpt
(b) der Grenzwert liegt im Bereich zwischen 0,25 dpt und 1,0 dpt
(c) der Grenzwert liegt im Bereich zwischen 0,25 dpt und 0,75 dpt
(d) der Grenzwert liegt im Bereich zwischen 0,25 dpt und 0,6 dpt
(e) der Grenzwert liegt im Bereich zwischen 0,25 dpt und 0,5 dpt
(f) der Grenzwert beträgt 0,5 dpt.

7. Erzeugnis nach einem der vorangegangenen Ansprüche, **dadurch gekennzeichnet, dass**

- das Erzeugnis ferner eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, umfasst, dass
- das Gleitsicht-Brillenglas eine Verteilung eines sphärisches Äquivalents (W) für die vorbestimmte Anordnung des Gleitsicht-Brillenglases vor dem Auge des Gleitsicht-Brillenträgers, für den das Gleitsicht-Brillenglas bestimmt ist, aufweist, dass
- das Erzeugnis ferner

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, aufweist, und dass

- das Gleitsicht-Brillenglas einen Progressionskanal und eine Hauptblicklinie aufweist, und dass der Brechungsindex des Gleitsicht-Brillenglases räumlich derart variiert, dass für einen vorgegebenen Restastigmatismuswert $A_{Rest,Grenz}$ aus der Gruppe

(a) der Restastigmatismuswert $A_{Rest,Grenz}$ liegt im Bereich zwischen 0,25 dpt und 1,5 dpt
(b) der Restastigmatismuswert $A_{Rest,Grenz}$ liegt im Bereich zwischen 0,25 dpt und 1,0 dpt
(c) der Restastigmatismuswert $A_{Rest,Grenz}$ liegt im Bereich zwischen 0,25 dpt und 0,75 dpt
(d) der Restastigmatismuswert $A_{Rest,Grenz}$ liegt im Bereich zwischen 0,25 dpt und 0,6 dpt
(e) der Restastigmatismuswert $A_{Rest,Grenz}$ liegt im Bereich zwischen 0,25 dpt und 0,5 dpt
(f) der Restastigmatismuswert $A_{Rest,Grenz}$ beträgt 0,5 dpt

auf einem horizontalen Schnitt an der schmalsten Stelle des Progressionskanals oder für einen horizontalen Schnitt durch den Punkt auf der Hauptblicklinie in dem die halbe Addition erreicht wird, innerhalb eines Bereichs mit einem horizontalen Abstand von 10 mm beidseits von der Hauptblicklinie folgende Beziehung gilt:

$$B > c \times \frac{A_{Rest,Grenz}}{grad\,W}$$

wobei grad W der Wirkungsgradient des sphärischen Äquivalents des Gleitsicht-Brillenglases an der schmalsten Stelle des Progressionskanals auf der Hauptblicklinie oder in einem Punkt auf der Hauptblicklinie in dem die halbe Addition erreicht wird, B die Breite des Bereichs im Gleitsicht-Brillenglas, in dem der Restastigmatismus $A_{Rest} \leq A_{Rest,Grenz}$ ist, wobei c eine Konstante gewählt ist aus der Gruppe:

(a)

$$1{,}0 < c$$

(b)

$$1{,}1 < c$$

(c)

$$1{,}2 < c$$

(d)

$$1{,}3 < c.$$

8. Erzeugnis umfassend ein Gleitsicht-Brillenglas oder eine auf einem Datenträger in Form von computerlesbaren Daten befindliche Darstellung des Gleitsicht-Brillenglases mit Anweisungen für eine Herstellung durch ein additives Verfahren, wobei das Gleitsicht-Brillenglas

- eine Vorderfläche und eine Rückfläche sowie
- einen räumlich variierenden Brechungsindex aufweist, wobei
- die Vorderfläche als Gleitsichtfläche ausgebildet ist und/oder die Rückfläche als Gleitsichtfläche ausgebildet ist, wobei
- die als Gleitsichtfläche ausgebildete Vorderfläche als Freiformfläche ausgebildet ist und/oder die als Gleitsichtfläche ausgebildete Rückfläche als Freiformfläche ausgebildet ist,
**dadurch gekennzeichnet, dass**
- das Erzeugnis ferner eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, umfasst, dass
- das Gleitsicht-Brillenglas eine Verteilung eines sphärisches Äquivalents (W) für die vorbestimmte Anordnung des Gleitsicht-Brillenglases vor dem Auge des Gleitsicht-Brillenträgers, für den das Gleitsicht-Brillenglas bestimmt ist, aufweist, dass
- das Erzeugnis ferner

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder
(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder
(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder
(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, aufweist, und dass

- das Gleitsicht-Brillenglas einen Progressionskanal und eine Hauptblicklinie aufweist, und dass der Brechungsindex des Gleitsicht-Brillenglases räumlich derart variiert, dass für einen vorgegebenen Restastigmatismuswert $A_{Rest,Grenz}$ aus der Gruppe

(a) der Restastigmatismuswert $A_{Rest,Grenz}$ liegt im Bereich zwischen 0,25 dpt und 1,5 dpt
(b) der Restastigmatismuswert $A_{Rest,Grenz}$ liegt im Bereich zwischen 0,25 dpt und 1,0 dpt
(c) der Restastigmatismuswert $A_{Rest,Grenz}$ liegt im Bereich zwischen 0,25 dpt und 0,75 dpt
(d) der Restastigmatismuswert $A_{Rest,Grenz}$ liegt im Bereich zwischen 0,25 dpt und 0,6 dpt
(e) der Restastigmatismuswert $A_{Rest,Grenz}$ liegt im Bereich zwischen 0,25 dpt und 0,5 dpt
(f) der Restastigmatismuswert $A_{Rest,Grenz}$ beträgt 0,5 dpt

auf einem horizontalen Schnitt an der schmalsten Stelle des Progressionskanals oder für einen horizontalen Schnitt durch den Punkt auf der Hauptblicklinie in dem die halbe Addition erreicht wird, innerhalb eines Bereichs mit einem horizontalen Abstand von 10 mm beidseits von der Hauptblicklinie folgende Beziehung gilt:

$$B > c \times \frac{A_{Rest,Grenz}}{grad\,W}$$

wobei grad W der Wirkungsgradient des sphärischen Äquivalents des Gleitsicht-Brillenglases an der schmalsten Stelle des Progressionskanals auf der Hauptblicklinie oder in einem Punkt auf der Hauptblicklinie in dem die halbe Addition erreicht wird, B die Breite des Bereichs im Gleitsicht-Brillenglas, in dem der Restastigmatismus $A_{Rest} \leq A_{Rest,Grenz}$ ist, wobei c eine Konstante gewählt ist aus der Gruppe:

(a)

$$1,0 < c$$

(b)

$$1,1 < c$$

(c)

$$1,2 < c$$

(d)

$$1,3 < c.$$

9. Erzeugnis nach Anspruch 8, **dadurch gekennzeichnet, dass** wenigstens eine der Freiformflächen keine Punktsymmetrie und keine Achsensymmetrie aufweist oder dass wenigstens eine der Freiformflächen keine Punktsymmetrie und keine Achsensymmetrie und keine Rotationssymmetrie und keine Symmetrie bzgl. einer Symmetrieebene aufweist.

10. Erzeugnis nach einem der Ansprüche 8 oder 9, **dadurch gekennzeichnet, dass** das Gleitsicht-Brillenglas einen Progressionskanal aufweist und dass

- die als Freiformfläche ausgebildete Vorderfläche so gestaltet ist, dass die mittlere Krümmung im Progressionskanal maximal ist und/oder
- die als Freiformfläche ausgebildete Rückfläche so gestaltet ist, dass die mittlere Krümmung im Progressionskanal minimal ist.

11. Erzeugnis nach einem der Ansprüche 8 bis 10, **dadurch gekennzeichnet, dass**

- das Erzeugnis ferner eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, umfasst, dass
- das Gleitsicht-Brillenglas eine Verteilung eines sphärisches Äquivalents für die vorbestimmte Anordnung des Gleitsicht-Brillenglases vor dem Auge des Gleitsicht-Brillenträgers, für den das Gleitsicht-Brillenglas bestimmt ist, aufweist, dass
- das Gleitsicht-Brillenglas einen Progressionskanal mit einer Breite aufweist, und dass der Brechungsindex des Gleitsicht-Brillenglases räumlich derart variiert, dass die Breite des Progressionskanals des Gleitsicht-Brillenglases wenigstens in einem Schnitt oder über die gesamte Länge des Progressionskanals größer ist, als die Breite des Progressionskanals eines Vergleichs-Gleitsicht-Brillenglases mit gleicher Verteilung des sphärischen Äquivalents bei gleicher Anordnung des Vergleichs-Gleitsicht-Brillenglases vor dem Auge des Gleitsicht-Brillenträgers aber räumlich nicht variierendem Brechungsindex.

**12.** Erzeugnis nach Anspruch 11, **dadurch gekennzeichnet, dass** der wenigstens eine Schnitt eine Variante aus der Gruppe

- horizontaler Schnitt,
- Schnitt bei halber Addition,
- horizontaler Schnitt bei halber Addition
- horizontaler Schnitt bei halber Addition und horizontaler Schnitt bei 25 % der Addition
- horizontaler Schnitt bei halber Addition und horizontaler Schnitt bei 75 % der Addition
- horizontaler Schnitt bei halber Addition und horizontaler Schnitt bei 25 % der Addition und horizontaler Schnitt bei 75 % der Addition

gewählt ist.

**13.** Erzeugnis nach Anspruch 11 oder 12, **dadurch gekennzeichnet, dass**

- das Erzeugnis ferner

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder
(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder
(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, aufweist, und/oder
(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, dass

- das Gleitsicht-Brillenglas ein Fernteil und ein Nahteil aufweist und dass
- die Breite des Progressionskanals der Abmessung quer zu einer zwischen Fernteil und Nahteil verlaufenden Längsrichtung des Progressionskanals entspricht, innerhalb der der Wert des Betrags des Restastigmatismus unterhalb eines vorbestimmten Grenzwerts liegt, der innerhalb eines Bereichs aus der nachfolgend angegebenen Gruppe ausgewählt ist:

(a) der Grenzwert liegt im Bereich zwischen 0,25 dpt und 1,5 dpt
(b) der Grenzwert liegt im Bereich zwischen 0,25 dpt und 1,0 dpt
(c) der Grenzwert liegt im Bereich zwischen 0,25 dpt und 0,75 dpt
(d) der Grenzwert liegt im Bereich zwischen 0,25 dpt und 0,6 dpt
(e) der Grenzwert liegt im Bereich zwischen 0,25 dpt und 0,5 dpt
(f) der Grenzwert beträgt 0,5 dpt.

**14.** Erzeugnis nach einem der Ansprüche 8 bis 13, **dadurch gekennzeichnet, dass**

- das Erzeugnis ferner eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, umfasst, dass

- das Gleitsicht-Brillenglas eine Verteilung eines sphärisches Äquivalents für die vorbestimmte Anordnung des Gleitsicht-Brillenglases vor dem Auge des Gleitsicht-Brillenträgers, für den das Gleitsicht-Brillenglas bestimmt ist, aufweist, dass

- das Erzeugnis ferner

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, aufweist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, und dass

- der Brechungsindex des Gleitsicht-Brillenglases räumlich derart variiert, dass der Maximalwert des Restastigmatismus des Gleitsicht-Brillenglases kleiner ist, als der Maximalwert des Restastigmatismus eines Vergleichs-Gleitsicht-Brillenglases mit gleicher Verteilung des sphärischen Äquivalents bei gleicher Anordnung des Vergleichs-Gleitsicht-Brillenglases vor dem Auge des Gleitsicht-Brillenträgers aber räumlich nicht variierendem Brechungsindex.

15. Erzeugnis nach einem der Ansprüche 8 bis 14, **dadurch gekennzeichnet, dass**

- das Gleitsicht-Brillenglas aus einem keine Einzelschichten umfassenden eine Vorderfläche und eine Rückfläche sowie den räumlich variierenden Brechungsindex aufweisenden Substrat und einer eine oder mehrere Einzelschichten umfassenden Vorderflächenbeschichtung auf der Vorderfläche des Substrats und/oder einer eine oder mehrere Einzelschichten umfassenden Rückflächenbeschichtung auf der Rückfläche des Substrats besteht, und dass

- ein Unterschied zwischen dem sphärischen Äquivalent gemessen in jedem Punkt auf der Vorderfläche des Gleitsicht-Brillenglases mit der Vorderflächenbeschichtung und/oder der Rückflächenbeschichtung und dem sphärischen Äquivalent gemessen in jedem korrespondierenden Punkt auf der Vorderfläche eines Vergleichs-Gleitsicht-Brillenglases ohne Vorderflächenbeschichtung und ohne Rückflächenbeschichtung aber identischem Substrat kleiner als ein Wert aus der nachfolgend angegebenen Gruppe ist:

(a) der Unterschiedswert ist kleiner als 0,001 dpt
(b) der Unterschiedswert ist kleiner als 0,002 dpt
(c) der Unterschiedswert ist kleiner als 0,003 dpt
(d) der Unterschiedswert ist kleiner als 0,004 dpt.

16. Computerimplementiertes Verfahren zum Entwerfen eines einen Nahzusatz oder eine Degressionswirkung aufweisenden Gleitsicht-Brillenglases zu dem Zweck der Verwendung des Entwurfs für die Herstellung des Gleitsicht-Brillenglases, wobei das Gleitsichtbrillenglas eine Vorderfläche und eine Rückfläche, und einen räumlich variierenden Brechungsindex aufweist, wobei die Vorderfläche als Gleitsichtfläche ausgebildet ist und/oder die Rückfläche als Gleitsichtfläche ausgebildet ist, wobei das Gleitsicht-Brillenglas eine Verteilung eines sphärisches Äquivalents für die vorbestimmte Anordnung des Gleitsicht-Brillenglases vor dem Auge des Gleitsicht-Brillenträgers, für den das Gleitsicht-Brillenglas bestimmt ist, aufweist, wobei das Gleitsicht-Brillenglas einen Progressionskanal mit einer Breite aufweist, wobei

- mittels eines Strahldurchrechnungsverfahrens optische Eigenschaften des Gleitsicht-Brillenglases an einer Vielzahl von Bewertungsstellen, durch die Sehstrahlen das Gleitsicht-Brillenglas durchsetzen, berechnet werden, wobei

- wenigstens eine optische Soll-Eigenschaft für das Gleitsicht-Brillenglas an der jeweiligen Bewertungsstelle festgelegt wird,

- ein Entwurf für das Gleitsicht-Brillenglas festgelegt wird, wobei der Entwurf eine Repräsentation einer lokalen Flächengeometrie der Gleitsichtfläche und einen lokalen Brechungsindex des Gleitsicht-Brillenglases im jeweiligen Sehstrahlengang durch die Bewertungsstellen umfasst, wobei

- der Entwurf des Gleitsicht-Brillenglases im Hinblick auf eine Approximierung der wenigstens einen optischen Soll-Eigenschaft des Gleitsicht-Brillenglases modifiziert wird, wobei das Modifizieren ein Modifizieren der Repräsentation der lokalen Flächengeometrie der Gleitsichtfläche und des lokalen Brechungsindex des Gleitsicht-Brillenglases im jeweiligen Sehstrahlengang durch die Bewertungsstellen umfasst, wobei die wenigstens eine optische Soll-Eigenschaft einen Soll-Restastigmatismus des Gleitsicht-Brillenglases umfasst, wobei der Entwurf des Gleitsicht-Brillenglases mit der Maßgabe erfolgt, dass

- der Nahzusatz oder die Degressionswirkung zumindest teilweise durch den räumlich variierenden Brechungsindex bereitgestellt wird,

- der Brechungsindex des Gleitsicht-Brillenglases räumlich derart variiert, dass die Breite des Progressionskanals des Gleitsicht-Brillenglases wenigstens in Schnitten aus der Gruppe

(a) horizontaler Schnitt bei halber Addition und horizontaler Schnitt bei 25 % der Addition

(b) horizontaler Schnitt bei halber Addition und horizontaler Schnitt bei 75 % der Addition

(c) horizontaler Schnitt bei halber Addition und horizontaler Schnitt bei 25 % der Addition und horizontaler Schnitt bei 75 % der Addition

(d) horizontaler Schnitt an der schmalsten Stelle des Progressionskanals oder über die gesamte Länge des Progressionskanals größer ist, als die Breite des Progressionskanals eines Vergleichs-Gleitsicht-Brillenglases mit räumlich nicht variierendem Brechungsindex aber gleicher Verteilung des sphärischen Äquivalents bei gleicher Anordnung des Vergleichs-Gleitsicht-Brillenglases vor dem Auge des Gleitsicht-Brillenträgers, wobei die Breite des Progressionskanals der Abmessung quer zu einer zwischen Fernteil und Nahteil verlaufenden Längsrichtung des Progressionskanals entspricht, innerhalb der der Wert des Betrags des Restastigmatismus unterhalb eines vorbestimmten Grenzwerts liegt, der innerhalb eines Bereichs aus der nachfolgend angegebenen Gruppe ausgewählt ist:

(a) der Grenzwert liegt im Bereich zwischen 0,25 dpt und 1,0 dpt

(b) der Grenzwert liegt im Bereich zwischen 0,25 dpt und 0,75 dpt

(c) der Grenzwert liegt im Bereich zwischen 0,25 dpt und 0,6 dpt

(d) der Grenzwert liegt im Bereich zwischen 0,25 dpt und 0,5 dpt

(e) der Grenzwert beträgt 0,5 dpt.

17. Computerimplementiertes Verfahren zum Entwerfen eines einen Nahzusatz oder eine Degressionswirkung aufweisenden Gleitsicht-Brillenglases zu dem Zweck der Verwendung des Entwurfs für die Herstellung des Gleitsicht-Brillenglases, wobei das Gleitsicht-Brillenglas eine Vorderfläche und eine Rückfläche aufweist, wobei das Gleitsicht-Brillenglas

(a) eine als Gleitsichtfläche ausgebildete Vorderfläche mit einer Vorderflächengeometrie und eine Rückfläche mit einer Rückflächengeometrie oder

(b) eine als Gleitsichtfläche ausgebildete Rückfläche mit einer Rückflächengeometrie und eine Vorderfläche mit einer Vorderflächengeometrie sowie

- einen räumlich variierenden Brechungsindex aufweist, wobei das Gleitsicht-Brillenglas eine Verteilung eines sphärisches Äquivalents für die vorbestimmte Anordnung des Gleitsicht-Brillenglases vor dem Auge des Gleitsicht-Brillenträgers, für den das Gleitsicht-Brillenglas bestimmt ist, aufweist, wobei

- mittels eines Strahldurchrechnungsverfahrens optische Eigenschaften des Gleitsicht-Brillenglases an einer Vielzahl von Bewertungsstellen, durch die Sehstrahlen das Gleitsicht-Brillenglas durchsetzen, berechnet werden, wobei

- wenigstens eine optische Soll-Eigenschaft für das Gleitsicht-Brillenglas an der jeweiligen Bewertungsstelle festgelegt wird,

- ein Entwurf für das Gleitsicht-Brillenglas festgelegt wird, wobei der Entwurf eine Repräsentation einer lokalen Flächengeometrie der Gleitsichtfläche und einen lokalen Brechungsindex des Gleitsicht-Brillenglases im jeweiligen Sehstrahlengang durch die Bewertungsstellen umfasst, wobei

- der Entwurf des Gleitsicht-Brillenglases im Hinblick auf eine Approximierung der wenigstens einen optischen Soll-Eigenschaft des Gleitsicht-Brillenglases modifiziert wird, wobei das Modifizieren ein Modifizieren der Repräsentation der lokalen Flächengeometrie der Gleitsichtfläche und des lokalen Brechungsindex des Gleitsicht-Brillenglases im jeweiligen Sehstrahlengang durch die Bewertungsstellen umfasst, wobei die wenigstens eine optische Soll-Eigenschaft einen Soll-Restastigmatismus des Gleitsicht-Brillenglases umfasst, wobei der Entwurf des Gleitsicht-Brillenglases mit der Maßgabe erfolgt, dass

- der Brechungsindex des Gleitsicht-Brillenglases räumlich derart variiert, dass der Maximalwert des Restastigmatismus des Gleitsicht-Brillenglases kleiner ist, als der Maximalwert des Restastigmatismus eines Vergleichs-Gleitsicht-Brillenglases mit räumlich nicht variierendem Brechungsindex aber gleicher Verteilung des sphärischen Äquivalents bei gleicher Anordnung des Vergleichs-Gleitsicht-Brillenglases vor dem Auge des Gleitsicht-Brillenträgers, wobei

- im Fall (a) die Vorderflächengeometrie der als Gleitsichtfläche ausgebildeten Vorderfläche des Gleitsicht-Brillenglases gegenüber einer Vorderflächengeometrie einer als Gleitsichtfläche ausgebildeten Vorderfläche des Vergleichs-Gleitsicht-Brillenglases modifiziert ist und die Rückflächengeometrie der Rückfläche des Gleitsicht-Brillenglases identisch wie eine Rückflächengeometrie einer Rückfläche des Vergleichs-Gleitsicht-Brillenglases ist, und

- im Fall (b) die Rückflächengeometrie der als Gleitsichtfläche ausgebildeten Rückfläche des Gleitsicht-Brillenglases gegenüber einer Rückflächengeometrie einer als Gleitsichtfläche ausgebildeten Rückfläche des Vergleichs-Gleitsicht-Brillenglases modifiziert ist und die Vorderflächengeometrie der Vorderfläche des Gleitsicht-Brillenglases identisch wie eine Vorderflächengeometrie einer Vorderfläche des Vergleichs-Gleitsicht-Brillenglases ist.

**18.** Computerimplementiertes Verfahren zum Entwerfen eines Gleitsicht-Brillenglases zu dem Zweck der Verwendung des Entwurfs für die Herstellung des Gleitsicht-Brillenglases, wobei das Gleitsicht-Brillenglas eine Vorderfläche, eine Rückfläche und einen räumlich variierenden Brechungsindex aufweist, wobei

die Vorderfläche als Gleitsichtfläche ausgebildet ist und/oder die Rückfläche als Gleitsichtfläche ausgebildet ist, wobei

- mittels eines Strahldurchrechnungsverfahrens optische Eigenschaften des Gleitsicht-Brillenglases an einer Vielzahl von Bewertungsstellen, durch die Sehstrahlen das Gleitsicht-Brillenglas durchsetzen, berechnet werden, wobei

- wenigstens eine optische Soll-Eigenschaft für das Gleitsicht-Brillenglas an der jeweiligen Bewertungsstelle festgelegt wird,

- ein Entwurf für das Gleitsicht-Brillenglas festgelegt wird, wobei der Entwurf eine Repräsentation einer lokalen Flächengeometrie der Gleitsichtfläche und einen lokalen Brechungsindex des Gleitsicht-Brillenglases im jeweiligen Sehstrahlengang durch die Bewertungsstellen umfasst, wobei

- der Entwurf des Gleitsicht-Brillenglases im Hinblick auf eine Approximierung der wenigstens einen optischen Soll-Eigenschaft des Gleitsicht-Brillenglases modifiziert wird, wobei das Modifizieren ein Modifizieren der Repräsentation der lokalen Flächengeometrie der Gleitsichtfläche und des lokalen Brechungsindex des Gleitsicht-Brillenglases im jeweiligen Sehstrahlengang durch die Bewertungsstellen umfasst, wobei die wenigstens eine optische Soll-Eigenschaft einen Soll-Restastigmatismus des Gleitsicht-Brillenglases umfasst, wobei

- das Gleitsicht-Brillenglas einen Progressionskanal und eine Hauptblicklinie aufweist, und der Brechungsindex des Gleitsicht-Brillenglases räumlich derart variiert, dass für einen vorgegebenen Restastigmatismuswert $A_{Rest,Grenz}$ aus der Gruppe

(a) der Restastigmatismuswert $A_{Rest,Grenz}$ liegt im Bereich zwischen 0,25 dpt und 1,5 dpt
(b) der Restastigmatismuswert $A_{Rest,Grenz}$ liegt im Bereich zwischen 0,25 dpt und 1,0 dpt
(c) der Restastigmatismuswert $A_{Rest,Grenz}$ liegt im Bereich zwischen 0,25 dpt und 0,75 dpt
(d) der Restastigmatismuswert $A_{Rest,Grenz}$ liegt im Bereich zwischen 0,25 dpt und 0,6 dpt
(e) der Restastigmatismuswert $A_{Rest,Grenz}$ liegt im Bereich zwischen 0,25 dpt und 0,5 dpt
(f) der Restastigmatismuswert $A_{Rest,Grenz}$ beträgt 0,5 dpt

auf einem horizontalen Schnitt an der schmalsten Stelle des Progressionskanals oder für einen horizontalen Schnitt durch den Punkt auf der Hauptblicklinie in dem die halbe Addition erreicht wird, innerhalb eines Bereichs mit einem horizontalen Abstand von 10 mm beidseits von der Hauptblicklinie folgende Beziehung gilt:

$$B > c \times \frac{A_{Rest,Grenz}}{grad\,W}$$

wobei grad W der Wirkungsgradient des sphärischen Äquivalents des Gleitsicht-Brillenglases an der schmalsten Stelle des Progressionskanals auf der Hauptblicklinie oder in einem Punkt auf der Hauptblicklinie in dem die halbe Addition erreicht wird, B die Breite des Bereichs im Gleitsicht-Brillenglas, in dem der Restastigmatismus $A_{Rest} \leq A_{Rest,Grenz}$ ist, wobei c eine Konstante gewählt ist aus der Gruppe:

(a)

$$1{,}0 < c$$

(b)

$$1{,}1 < c$$

(c)

$$1{,}2 < c$$

(d)

$$1{,}3 < c.$$

19. Verfahren nach einem der Ansprüche 16 bis 18, **dadurch gekennzeichnet, dass** die Modifikation des Entwurfs des Gleitsicht-Brillenglases im Hinblick auf eine Minimierung einer Zielfunktion

$$F = \sum_m P_m \sum_n W_n \left(T_n - A_n\right)^2$$

erfolgt, wobei $P_m$ die Gewichtung an der Bewertungsstelle m, $W_n$ die Gewichtung der optischen Eigenschaft n, $T_n$ den Soll-Wert der optischen Eigenschaft n an der jeweiligen Bewertungsstelle m und $A_n$ den Ist-Wert der optischen Eigenschaft n an der Bewertungsstelle m darstellt.

20. Verfahren nach einem der Ansprüche 16 bis 19, **dadurch gekennzeichnet, dass** für wenigstens eine Bewertungsstelle ein Soll-Restastigmatismus vorgegeben wird, der kleiner ist, als der theoretisch erreichbare Restastigmatismus an der wenigstens einen entsprechenden Bewertungsstelle bei einem Vergleichs-Gleitsicht-Brillenglas mit gleicher Verteilung des sphärischen Äquivalents und gleicher Anordnung des Vergleichs-Gleitsicht-Brillenglases vor dem Auge des Gleitsicht-Brillenträgers aber räumlich nicht variierendem Brechungsindex und dass das Modifizieren der Repräsentation der lokalen Flächengeometrie der Gleitsichtfläche und des lokalen Brechungsindex des Gleitsicht-Brillenglases im jeweiligen Sehstrahlengang durch die Bewertungsstellen erst dann abgebrochen wird, wenn der für das entworfene Gleitsicht-Brillenglas erreichte Restastigmatismus an der wenigstens einen Bewertungsstelle kleiner ist als der theoretisch erreichbare Restastigmatismus an der wenigstens einen entsprechenden Bewertungsstelle bei dem Vergleichs-Gleitsicht-Brillenglas.

21. Verfahren nach einem der Ansprüche 16 bis 20, **dadurch gekennzeichnet, dass** beim Entwerfen des Gleitsicht-Brillenglases ein Gleitsicht-Brillenglas entsprechend einem Erzeugnis nach einem der Ansprüche 1 bis 15 resultiert oder dass das Entwerfen des Gleitsicht-Brillenglases mit der Maßgabe erfolgt, ein Gleitsicht-Brillenglas entsprechend einem Erzeugnis nach einem der Ansprüche 1 bis 15 zu erzeugen.

22. Computerprogramm mit Programmcode zur Durchführung aller Verfahrensschritte nach einem der Ansprüche 16 bis 21, wenn das Computerprogramm in einem Computer geladen und/oder in einem Computer ausgeführt wird.

23. Computerlesbares Medium mit einem Computerprogramm nach Anspruch 22.

24. Verfahren zum Herstellen eines Gleitsicht-Brillenglases umfassend ein Verfahren nach einem der Ansprüche 16 bis 21 und Fertigen des Gleitsicht-Brillenglases nach dem Entwurf.

25. Verfahren nach Anspruch 24, **dadurch gekennzeichnet, dass** das Fertigen des Gleitsicht-Brillenglases durch ein additives Verfahren erfolgt.

**26.** Computer mit einem Prozessor, und mit einem Speicher, auf dem ein Computerprogramm nach Anspruch 22 abgespeichert ist und der eingerichtet ist, ein Verfahren nach einem der Ansprüche 16 bis 21 auszuführen.

## Claims

**1.** Product comprising a progressive power spectacle lens or a representation of the progressive power spectacle lens situated on a data medium in the form of computer-readable data with instructions for production by an additive method, the progressive power spectacle lens comprising

(a) a front surface embodied as a progressive surface with a front surface geometry and a back surface with a back surface geometry or
(b) a back surface embodied as a progressive surface with a back surface geometry and a front surface with a front surface geometry and

- a spatially varying refractive index,
**characterized in that**
- the product further comprises a representation, situated on a data medium, of a predetermined arrangement of the progressive power spectacle lens in front of an eye of a progressive power spectacle wearer, for whom the progressive power spectacle lens is intended, **in that**
- the progressive power spectacle lens has a distribution of a spherical equivalent for the predetermined arrangement of the progressive power spectacle lens in front of the eye of the progressive power spectacle wearer, for whom the progressive power spectacle lens is intended, **in that**
- the product further comprises

(i) a representation, situated on a data medium, of a residual astigmatism distribution for the predetermined arrangement of the progressive power spectacle lens in front of the eye of the progressive power spectacle wearer, for whom the progressive power spectacle lens is intended, and/or
(ii) a representation, situated on a data medium, of an astigmatic power distribution, required for a full correction, for the predetermined arrangement of the progressive power spectacle lens in front of the eye of the progressive power spectacle wearer, for whom the progressive power spectacle lens is intended, and/or
(iii) a representation, situated on a data medium, of a prescription and an object distance model for the predetermined arrangement of the progressive power spectacle lens in front of the eye of a progressive power spectacle wearer, for whom the progressive power spectacle lens is intended, and/or
(iv) a representation, situated on a data medium, of a distribution of the spherical equivalent for the predetermined arrangement of the progressive power spectacle lens in front of the eye of the progressive power spectacle wearer, for whom the progressive power spectacle lens is intended, and **in that**

the refractive index of the progressive power spectacle lens varies in space in such a way that the maximum value of the residual astigmatism of the progressive power spectacle lens is less than the maximum value of the residual astigmatism of a comparison progressive power spectacle lens with a spatially non-varying refractive index but with the same distribution of the spherical equivalent in the case of the same arrangement of the comparison progressive power spectacle lens in front of the eye of the progressive power spectacle wearer, wherein the maximum value of the residual astigmatism of the comparison progressive power spectacle lens is situated at the same location as the maximum value of the residual astigmatism of the progressive power spectacle lens, wherein
- in case (a), the front surface geometry of the front surface, embodied as a progressive surface, of the progressive power spectacle lens has a modified embodiment in relation to a front surface geometry of a front surface, embodied as a progressive surface, of the comparison progressive power spectacle lens and the back surface geometry of the back surface of the progressive power spectacle lens has an identical embodiment to a back surface geometry of a back surface of the comparison progressive power spectacle lens and
- in case (b), the back surface geometry of the back surface, embodied as a progressive surface, of the progressive power spectacle lens has a modified embodiment in relation to a back surface geometry of a back surface, embodied as a progressive surface, of the comparison progressive power spectacle lens and the front surface geometry of the front surface of the progressive power spectacle lens has an identical embodiment to a front surface geometry of a front surface of the comparison progressive power spectacle lens.

2. Product according to Claim 1, **characterized in that** at least one of the freeform surfaces has no point symmetry and no axial symmetry or **in that** at least one of the freeform surfaces has no point symmetry and no axial symmetry and no rotational symmetry and no symmetry with respect to a plane of symmetry.

3. Product according to either of Claims 1 and 2, **characterized in that** the progressive power spectacle lens comprises an intermediate corridor and **in that**

- the front surface embodied as a freeform surface is formed in such a way that the mean curvature has a maximum in the intermediate corridor and/or
- the back surface embodied as a freeform surface is formed in such a way that the mean curvature has a minimum in the intermediate corridor.

4. Product according to any of Claims 1 to 3, **characterized in that**

- the product further comprises a representation, situated on a data medium, of a predetermined arrangement of the progressive power spectacle lens in front of an eye of a progressive power spectacle wearer, for whom the progressive power spectacle lens is intended, **in that**
- the progressive power spectacle lens has a distribution of a spherical equivalent for the predetermined arrangement of the progressive power spectacle lens in front of the eye of the progressive power spectacle wearer, for whom the progressive power spectacle lens is intended, **in that**
- the progressive power spectacle lens has an intermediate corridor with a width and **in that** the refractive index of the progressive power spectacle lens varies in space in such a way that the width of the intermediate corridor of the progressive power spectacle lens, at least in a section or over the entire length of the intermediate corridor, is greater than the width of the intermediate corridor of a comparison progressive power spectacle lens with the same distribution of the spherical equivalent in the case of the same arrangement of the comparison progressive power spectacle lens in front of the eye of the progressive power spectacle wearer but with a spatially non-varying refractive index.

5. Product according to Claim 4, **characterized in that** a variant of the group:

- horizontal section,
- section at half addition,
- horizontal section at half addition,
- horizontal section at half addition and horizontal section at 25% of the addition,
- horizontal section at half addition and horizontal section at 75% of the addition,
- horizontal section at half addition and horizontal section at 25% of the addition and horizontal section at 75% of the addition,

is chosen for the at least one section.

6. Product according to Claim 4 or 5, **characterized in that**

- the product further comprises

(i) a representation, situated on a data medium, of a residual astigmatism distribution for the predetermined arrangement of the progressive power spectacle lens in front of the eye of the progressive power spectacle wearer, for whom the progressive power spectacle lens is intended, and/or
(ii) a representation, situated on a data medium, of an astigmatic power distribution, required for a full correction, for the predetermined arrangement of the progressive power spectacle lens in front of the eye of the progressive power spectacle wearer, for whom the progressive power spectacle lens is intended, and/or
(iii) a representation, situated on a data medium, of a prescription and an object distance model for the predetermined arrangement of the progressive power spectacle lens in front of the eye of a progressive power spectacle wearer, for whom the progressive power spectacle lens is intended, and/or
(iv) a representation, situated on a data medium, of a distribution of the spherical equivalent for the predetermined arrangement of the progressive power spectacle lens in front of the eye of the progressive power spectacle wearer, for whom the progressive power spectacle lens is intended, **in that**

- the progressive power spectacle lens has a distance portion and a near portion, and **in that**
- the width of the intermediate corridor corresponds to the dimension transverse to a longitudinal direction of the intermediate corridor extending between the distance portion and near portion, within which the absolute value of the residual astigmatism lies below a predetermined limit value, which is selected within a range from the group specified below:

> (a) the limit value lies in the range between 0.25 dpt and 1.5 dpt,
> (b) the limit value lies in the range between 0.25 dpt and 1.0 dpt,
> (c) the limit value lies in the range between 0.25 dpt and 0.75 dpt,
> (d) the limit value lies in the range between 0.25 dpt and 0.6 dpt,
> (e) the limit value lies in the range between 0.25 dpt and 0.5 dpt,
> (f) the limit value is 0.5 dpt.

**7.** Product according to any of the preceding claims, **characterized in that**

- the product further comprises a representation, situated on a data medium, of a predetermined arrangement of the progressive power spectacle lens in front of an eye of a progressive power spectacle wearer, for whom the progressive power spectacle lens is intended, **in that**
- the progressive power spectacle lens has a distribution of a spherical equivalent (W) for the predetermined arrangement of the progressive power spectacle lens in front of the eye of the progressive power spectacle wearer, for whom the progressive power spectacle lens is intended, **in that**
- the product further comprises

> (i) a representation, situated on a data medium, of a residual astigmatism distribution for the predetermined arrangement of the progressive power spectacle lens in front of the eye of the progressive power spectacle wearer, for whom the progressive power spectacle lens is intended, and/or
> (ii) a representation, situated on a data medium, of an astigmatic power distribution, required for a full correction, for the predetermined arrangement of the progressive power spectacle lens in front of the eye of the progressive power spectacle wearer, for whom the progressive power spectacle lens is intended, and/or
> (iii) a representation, situated on a data medium, of a prescription and an object distance model for the predetermined arrangement of the progressive power spectacle lens in front of the eye of a progressive power spectacle wearer, for whom the progressive power spectacle lens is intended, and/or
> (iv) a representation, situated on a data medium, of a distribution of the spherical equivalent for the predetermined arrangement of the progressive power spectacle lens in front of the eye of the progressive power spectacle wearer, for whom the progressive power spectacle lens is intended, and **in that**

- the progressive power spectacle lens comprises an intermediate corridor and a principal line of sight, and **in that** the refractive index of the progressive power spectacle lens varies in space in such a way that for a predetermined residual astigmatism value $A_{Rest,Grenz}$ of the group

> (a) the residual astigmatism value $A_{Rest,Grenz}$ lies in the range between 0.25 dpt and 1.5 dpt,
> (b) the residual astigmatism value $A_{Rest,Grenz}$ lies in the range between 0.25 dpt and 1.0 dpt,
> (c) the residual astigmatism value $A_{Rest,Grenz}$ lies in the range between 0.25 dpt and 0.75 dpt,
> (d) the residual astigmatism value $A_{Rest,Grenz}$ lies in the range between 0.25 dpt and 0.6 dpt,
> (e) the residual astigmatism value $A_{Rest,Grenz}$ lies in the range between 0.25 dpt and 0.5 dpt,
> (f) the residual astigmatism value $A_{Rest,Grenz}$ is 0.5 dpt on a horizontal section at the narrowest point of the intermediate corridor or for a horizontal section through the point on the principal line of sight at which the half addition is achieved, the following relationship applies within a region with a horizontal distance of 10 mm on both sides of the principal line of sight:

$$B > c \times \frac{A_{Rest,Grenz}}{grad\ W}$$

where grad W describes the power gradient of the spherical equivalent of the progressive power spectacle lens at the narrowest point of the intermediate corridor on the principal line of sight or in a point on the principal line of sight at which the half addition is achieved, B describes the width of the region in the progressive power spectacle lens in which the residual astigmatism is $A_{Rest} \leq A_{Rest,Grenz}$, where c is a constant selected from the group:

(a)

$$1.0 < c,$$

(b)

$$1.1 < c,$$

(c)

$$1.2 < c,$$

(d)

$$1.3 < c.$$

8.  Product comprising a progressive power spectacle lens or a representation of the progressive power spectacle lens situated on a data medium in the form of computer-readable data with instructions for production by an additive method, the progressive power spectacle lens comprising

     - a front surface and a back surface, and
     - a spatially varying refractive index, wherein
     - the front surface is embodied as a progressive surface and/or the back surface is embodied as a progressive surface,
     wherein
     - the front surface embodied as a progressive surface is embodied as a freeform surface and/or the back surface embodied as a progressive surface is embodied as a freeform surface,
     **characterized in that**
     - the product further comprises a representation, situated on a data medium, of a predetermined arrangement of the progressive power spectacle lens in front of an eye of a progressive power spectacle wearer, for whom the progressive power spectacle lens is intended, **in that**
     - the progressive power spectacle lens has a distribution of a spherical equivalent (W) for the predetermined arrangement of the progressive power spectacle lens in front of the eye of the progressive power spectacle wearer, for whom the progressive power spectacle lens is intended, **in that**
     - the product further comprises

     (i) a representation, situated on a data medium, of a residual astigmatism distribution for the predetermined arrangement of the progressive power spectacle lens in front of the eye of the progressive power spectacle wearer, for whom the progressive power spectacle lens is intended, and/or
     (ii) a representation, situated on a data medium, of an astigmatic power distribution, required for a full correction, for the predetermined arrangement of the progressive power spectacle lens in front of the eye of the progressive power spectacle wearer, for whom the progressive power spectacle lens is intended, and/or
     (iii) a representation, situated on a data medium, of a prescription and an object distance model for the predetermined arrangement of the progressive power spectacle lens in front of the eye of a progressive power spectacle wearer, for whom the progressive power spectacle lens is intended, and/or
     (iv) a representation, situated on a data medium, of a distribution of the spherical equivalent for the predetermined arrangement of the progressive power spectacle lens in front of the eye of the progressive power spectacle wearer, for whom the progressive power spectacle lens is intended, and **in that**

     - the progressive power spectacle lens comprises an intermediate corridor and a principal line of sight, and **in that** the refractive index of the progressive power spectacle lens varies in space in such a way that for a predetermined residual astigmatism value $A_{Rest,Grenz}$ of the group

(a) the residual astigmatism value $A_{Rest,Grenz}$ lies in the range between 0.25 dpt and 1.5 dpt,
(b) the residual astigmatism value $A_{Rest,Grenz}$ lies in the range between 0.25 dpt and 1.0 dpt,
(c) the residual astigmatism value $A_{Rest,Grenz}$ lies in the range between 0.25 dpt and 0.75 dpt,
(d) the residual astigmatism value $A_{Rest,Grenz}$ lies in the range between 0.25 dpt and 0.6 dpt,
(e) the residual astigmatism value $A_{Rest,Grenz}$ lies in the range between 0.25 dpt and 0.5 dpt,
(f) the residual astigmatism value $A_{Rest,Grenz}$ is 0.5 dpt on a horizontal section at the narrowest point of the intermediate corridor or for a horizontal section through the point on the principal line of sight at which the half addition is achieved, the following relationship applies within a region with a horizontal distance of 10 mm on both sides of the principal line of sight:

$$B > c \times \frac{A_{Rest,Grenz}}{grad\ W}$$

where grad W describes the power gradient of the spherical equivalent of the progressive power spectacle lens at the narrowest point of the intermediate corridor on the principal line of sight or in a point on the principal line of sight at which the half addition is achieved, B describes the width of the region in the progressive power spectacle lens in which the residual astigmatism is $A_{Rest} \leq A_{Rest,Grenz}$, where c is a constant selected from the group:

(a)

$$1.0 < c,$$

(b)

$$1.1 < c,$$

(c)

$$1.2 < c,$$

(d)

$$1.3 < c.$$

9. Product according to Claim 8, **characterized in that** at least one of the freeform surfaces has no point symmetry and no axial symmetry or **in that** at least one of the freeform surfaces has no point symmetry and no axial symmetry and no rotational symmetry and no symmetry with respect to a plane of symmetry.

10. Product according to either of Claims 8 and 9, **characterized in that** the progressive power spectacle lens comprises an intermediate corridor and **in that**

- the front surface embodied as a freeform surface is formed in such a way that the mean curvature has a maximum in the intermediate corridor and/or
- the back surface embodied as a freeform surface is formed in such a way that the mean curvature has a minimum in the intermediate corridor.

11. Product according to any of Claims 8 to 10, **characterized in that**

- the product further comprises a representation, situated on a data medium, of a predetermined arrangement of the progressive power spectacle lens in front of an eye of a progressive power spectacle wearer, for whom the progressive power spectacle lens is intended, **in that**
- the progressive power spectacle lens has a distribution of a spherical equivalent for the predetermined arrangement of the progressive power spectacle lens in front of the eye of the progressive power spectacle wearer, for whom the progressive power spectacle lens is intended, **in that**
- the progressive power spectacle lens has an intermediate corridor with a width and **in that** the refractive index of the progressive power spectacle lens varies in space in such a way that the width of the intermediate corridor of the progressive power spectacle lens, at least in a section or over the entire length of the intermediate corridor, is greater than the width of the intermediate corridor of a comparison progressive power spectacle lens with the same distribution of the spherical equivalent in the case of the same arrangement of the comparison progressive power spectacle lens in front of the eye of the progressive power spectacle wearer but with a spatially non-varying refractive index.

**12.** Product according to Claim 11, **characterized in that** a variant of the group:

- horizontal section,
- section at half addition,
- horizontal section at half addition,
- horizontal section at half addition and horizontal section at 25% of the addition,
- horizontal section at half addition and horizontal section at 75% of the addition,
- horizontal section at half addition and horizontal section at 25% of the addition and horizontal section at 75% of the addition,

is chosen for the at least one section.

**13.** Product according to Claim 11 or 12, **characterized in that**

- the product further comprises

(i) a representation, situated on a data medium, of a residual astigmatism distribution for the predetermined arrangement of the progressive power spectacle lens in front of the eye of the progressive power spectacle wearer, for whom the progressive power spectacle lens is intended, and/or

(ii) a representation, situated on a data medium, of an astigmatic power distribution, required for a full correction, for the predetermined arrangement of the progressive power spectacle lens in front of the eye of the progressive power spectacle wearer, for whom the progressive power spectacle lens is intended, and/or

(iii) a representation, situated on a data medium, of a prescription and an object distance model for the predetermined arrangement of the progressive power spectacle lens in front of the eye of a progressive power spectacle wearer, for whom the progressive power spectacle lens is intended, and/or

(iv) a representation, situated on a data medium, of a distribution of the spherical equivalent for the predetermined arrangement of the progressive power spectacle lens in front of the eye of the progressive power spectacle wearer, for whom the progressive power spectacle lens is intended, **in that**

- the progressive power spectacle lens has a distance portion and a near portion, and **in that**
- the width of the intermediate corridor corresponds to the dimension transverse to a longitudinal direction of the intermediate corridor extending between the distance portion and near portion, within which the absolute value of the residual astigmatism lies below a predetermined limit value, which is selected within a range from the group specified below:

(a) the limit value lies in the range between 0.25 dpt and 1.5 dpt,
(b) the limit value lies in the range between 0.25 dpt and 1.0 dpt,
(c) the limit value lies in the range between 0.25 dpt and 0.75 dpt,
(d) the limit value lies in the range between 0.25 dpt and 0.6 dpt,
(e) the limit value lies in the range between 0.25 dpt and 0.5 dpt,
(f) the limit value is 0.5 dpt.

**14.** Product according to any of Claims 8 to 13, **characterized in that**

- the product further comprises a representation, situated on a data medium, of a predetermined arrangement of the progressive power spectacle lens in front of an eye of a progressive power spectacle wearer, for whom the progressive power spectacle lens is intended, **in that**
- the progressive power spectacle lens has a distribution of a spherical equivalent for the predetermined arrangement of the progressive power spectacle lens in front of the eye of the progressive power spectacle wearer, for whom the progressive power spectacle lens is intended, **in that**
- the product further comprises

(i) a representation, situated on a data medium, of a residual astigmatism distribution for the predetermined arrangement of the progressive power spectacle lens in front of the eye of the progressive power spectacle wearer, for whom the progressive power spectacle lens is intended, and/or

(ii) a representation, situated on a data medium, of an astigmatic power distribution, required for a full correction, for the predetermined arrangement of the progressive power spectacle lens in front of the eye of the progressive power spectacle wearer, for whom the progressive power spectacle lens is intended, and/or

(iii) a representation, situated on a data medium, of a prescription and an object distance model for the predetermined arrangement of the progressive power spectacle lens in front of the eye of a progressive power spectacle wearer, for whom the progressive power spectacle lens is intended, and/or

(iv) a representation, situated on a data medium, of a distribution of the spherical equivalent for the predetermined arrangement of the progressive power spectacle lens in front of the eye of the progressive power spectacle wearer, for whom the progressive power spectacle lens is intended, and **in that**

- the refractive index of the progressive power spectacle lens varies in space in such a way that the maximum value of the residual astigmatism of the progressive power spectacle lens is less than the maximum value of the residual astigmatism of a comparison progressive power spectacle lens with the same distribution of the spherical equivalent in the case of the same arrangement of the comparison progressive power spectacle lens in front of the eye of the progressive power spectacle wearer but with a spatially non-varying refractive index.

15. Product according to any of Claims 8 to 14, **characterized in that**

- the progressive power spectacle lens consists of a substrate comprising no individual layers and having a front surface and a back surface and the spatially varying refractive index, and a front surface coating, comprising one or more individual layers, on the front surface of the substrate and/or a back surface coating, comprising one or more individual layers, on the back surface of the substrate, and
**in that**
- a difference between the spherical equivalent measured at each point on the front surface of the progressive power spectacle lens with the front surface coating and/or the back surface coating and the spherical equivalent measured at each corresponding point on the front surface of a comparison progressive power spectacle lens without front surface coating and without back surface coating but with an identical substrate is less than a value from the group specified below:

(a) the difference value is less than 0.001 dpt,
(b) the difference value is less than 0.002 dpt,
(c) the difference value is less than 0.003 dpt,
(d) the difference value is less than 0.004 dpt.

16. Computer-implemented method for designing a progressive power spectacle lens having addition power or degression power, for the purpose of using the design for the production of the progressive power spectacle lens, the progressive power spectacle lens having a front surface and a back surface and a spatially varying refractive index, wherein

the front surface is embodied as a progressive surface and/or the back surface is embodied as a progressive surface, wherein the progressive power spectacle lens has a distribution of a spherical equivalent for the predetermined arrangement of the progressive power spectacle lens in front of the eye of the progressive power spectacle wearer, for whom the progressive power spectacle lens is intended, wherein the progressive power spectacle lens has an intermediate corridor with a width, wherein

- optical properties of the progressive power spectacle lens are calculated by means of a ray tracing method at a plurality of evaluation points, at which visual rays pass through the progressive power spectacle lens,

wherein

- at least one intended optical property for the progressive power spectacle lens is set at the respective evaluation point,
- a design for the progressive power spectacle lens is set, wherein the design comprises a representation of a local surface geometry of the progressive surface and a local refractive index of the progressive power spectacle lens in the respective visual beam path through the evaluation points, wherein

- the design of the progressive power spectacle lens is modified in view of an approximation of the at least one intended optical property of the progressive power spectacle lens, wherein the modification comprises modifying the representation of the local surface geometry of the progressive surface and the local refractive index of the progressive power spectacle lens in the respective visual beam path through the evaluation points, wherein the at least one intended optical property comprises an intended residual astigmatism of the progressive power spectacle lens, wherein the design of the progressive power spectacle lens is implemented with the stipulation that

- the addition power or the degression power is at least partly provided by the spatially varying refractive index,

- the refractive index of the progressive power spectacle lens varies in space in such a way that the width of the intermediate corridor of the progressive power spectacle lens, at least in sections of the group

(a) horizontal section at half addition and horizontal section at 25% of the addition,
(b) horizontal section at half addition and horizontal section at 75% of the addition,
(c) horizontal section at half addition and horizontal section at 25% of the addition and horizontal section at 75% of the addition,
(d) horizontal section at the narrowest point of the intermediate corridor

or over the entire length of the intermediate corridor, is greater than the width of the intermediate corridor of a comparison progressive power spectacle lens with a spatially non-varying refractive index but the same distribution of the spherical equivalent in the case of the same arrangement of the comparison progressive power spectacle lens in front of the eye of the progressive power spectacle wearer, wherein the width of the intermediate corridor corresponds to the dimension transverse to a longitudinal direction of the intermediate corridor extending between the distance portion and near portion, within which the absolute value of the residual astigmatism lies below a predetermined limit value, which is selected within a range from the group specified below:

(a) the limit value lies in the range between 0.25 dpt and 1.0 dpt,
(b) the limit value lies in the range between 0.25 dpt and 0.75 dpt,
(c) the limit value lies in the range between 0.25 dpt and 0.6 dpt,
(d) the limit value lies in the range between 0.25 dpt and 0.5 dpt,
(e) the limit value is 0.5 dpt.

17. Computer-implemented method for designing a progressive power spectacle lens having addition power or degression power, for the purpose of using the design for the production of the progressive power spectacle lens, the progressive power spectacle lens having a front surface and a back surface, wherein the progressive power spectacle lens comprises

(a) a front surface embodied as a progressive surface with a front surface geometry and a back surface with a back surface geometry or
(b) a back surface embodied as a progressive surface with a back surface geometry and a front surface with a front surface geometry and

- a spatially varying refractive index, wherein the progressive power spectacle lens has a distribution of a spherical equivalent for the predetermined arrangement of the progressive power spectacle lens in front of the eye of the progressive power spectacle wearer, for whom the progressive power spectacle lens is intended, wherein

- optical properties of the progressive power spectacle lens are calculated by means of a ray tracing method at a plurality of evaluation points, at which visual rays pass through the progressive power spectacle lens, wherein

- at least one intended optical property for the progressive power spectacle lens is set at the respective evaluation point,

- a design for the progressive power spectacle lens is set, wherein the design comprises a representation of a local surface geometry of the progressive surface and a local refractive index of the progressive power spectacle lens in the respective visual beam path through the evaluation points, wherein

- the design of the progressive power spectacle lens is modified in view of an approximation of the at least one intended optical property of the progressive power spectacle lens, wherein the modification comprises modifying the representation of the local surface geometry of the progressive surface and the local refractive index of the progressive power spectacle lens in the respective visual beam path through the evaluation points, wherein the at least one intended optical property comprises an intended residual astigmatism of the progressive power spectacle lens, wherein the design of the progressive power spectacle lens is implemented with the stipulation that

- the refractive index of the progressive power spectacle lens varies in space in such a way that the maximum value of the residual astigmatism of the progressive power spectacle lens is less than the maximum value of the residual astigmatism of a comparison progressive power spectacle lens with a spatially non-varying refractive index but the same distribution of the spherical equivalent in the case of the same arrangement of the comparison progressive power spectacle lens in front of the eye of the progressive power spectacle wearer, wherein

- in case (a), the front surface geometry of the front surface, embodied as a progressive surface, of the progressive power spectacle lens is modified in relation to a front surface geometry of a front surface, embodied as a progressive surface, of the comparison progressive power spectacle lens and the back surface geometry of the back surface of the progressive power spectacle lens is identical to a back surface geometry of a back surface of the comparison progressive power spectacle lens and

- in case (b), the back surface geometry of the back surface, embodied as a progressive surface, of the progressive power spectacle lens is modified in relation to a back surface geometry of a back surface, embodied as a progressive surface, of the comparison progressive power spectacle lens and the front surface geometry of the front surface of the progressive power spectacle lens is identical to a front surface geometry of a front surface of the comparison progressive power spectacle lens.

18. Computer-implemented method for designing a progressive power spectacle lens, for the purpose of using the design for the production of the progressive power spectacle lens, the progressive power spectacle lens having a front surface, a back surface and a spatially varying refractive index, wherein

the front surface is embodied as a progressive surface and/or the back surface is embodied as a progressive surface, wherein

- optical properties of the progressive power spectacle lens are calculated by means of a ray tracing method at a plurality of evaluation points, at which visual rays pass through the progressive power spectacle lens,

wherein

- at least one intended optical property for the progressive power spectacle lens is set at the respective evaluation point,
- a design for the progressive power spectacle lens is set, wherein the design comprises a representation of a local surface geometry of the progressive surface and a local refractive index of the progressive power spectacle lens in the respective visual beam path through the evaluation points, wherein
- the design of the progressive power spectacle lens is modified in view of an approximation of the at least one intended optical property of the progressive power spectacle lens, wherein the modification comprises modifying the representation of the local surface geometry of the progressive surface and the local refractive index of the progressive power spectacle lens in the respective visual beam path through the evaluation points, wherein the at least one intended optical property comprises an intended residual astigmatism of the progressive power spectacle lens, wherein
- the progressive power spectacle lens comprises an intermediate corridor and a principal line of sight, and the refractive index of the progressive power spectacle lens varies in space in such a way that for a predetermined residual astigmatism value $A_{Rest,Grenz}$ of the group

(a) the residual astigmatism value $A_{Rest,Grenz}$ lies in the range between 0.25 dpt and 1.5 dpt,
(b) the residual astigmatism value $A_{Rest,Grenz}$ lies in the range between 0.25 dpt and 1.0 dpt,
(c) the residual astigmatism value $A_{Rest,Grenz}$ lies in the range between 0.25 dpt and 0.75 dpt,
(d) the residual astigmatism value $A_{Rest,Grenz}$ lies in the range between 0.25 dpt and 0.6 dpt,
(e) the residual astigmatism value $A_{Rest,Grenz}$ lies in the range between 0.25 dpt and 0.5 dpt,
(f) the residual astigmatism value $A_{Rest,Grenz}$ is 0.5 dpt on a horizontal section at the narrowest point of the intermediate corridor or for a horizontal section through the point on the principal line of sight at which the half addition is achieved, the following relationship applies within a region with a horizontal distance of 10 mm on both sides of the principal line of sight:

$$B > c \times \frac{A_{Rest,Grenz}}{grad\ W}$$

where grad W describes the power gradient of the spherical equivalent of the progressive power spectacle lens at the narrowest point of the intermediate corridor on the principal line of sight or in a point on the principal line of sight at which the half addition is achieved, B describes the width of the region in the progressive power spectacle lens in which the residual astigmatism is $A_{Rest} \leq A_{Rest,Grenz}$, where c is a constant selected from the group:

(a)

$$1.0 < c,$$

(b)

$$1.1 < c,$$

(c)

$$1.2 < c,$$

(d)

$$1.3 < c.$$

19. Method according to any of Claims 16 to 18, **characterized in that** the modification of the design of the progressive power spectacle lens is implemented in view of a minimization of a target function

$$F = \sum_{m} P_m \sum_{n} W_n \left( T_n - A_n \right)^2$$

where $P_m$ represents the weighting at the evaluation point m, $W_n$ represents the weighting of the optical property n, $T_n$ represents the intended value of the optical property n at the respective evaluation point m and $A_n$ represents the actual value of the optical property n at the evaluation point m.

20. Method according to any of Claims 16 to 19, **characterized in that** an intended residual astigmatism is predetermined for at least one evaluation point, said intended residual astigmatism being less than the theoretically achievable residual astigmatism at the at least one corresponding evaluation point on a comparison progressive power spectacle lens with the same distribution of the spherical equivalent and the same arrangement of the comparison progressive power spectacle lens in front of the eye of the progressive power spectacle wearer but with a spatially non-varying refractive index, and **in that** modifying the representation of the local surface geometry of the progressive surface and of the local refractive index of the progressive power spectacle lens in the respective visual beam path through the evaluation points is only terminated if the residual astigmatism at the at least one evaluation point, achieved for the designed progressive power spectacle lens, is less than the theoretically achievable residual astigmatism at the at least one corresponding evaluation point on the comparison progressive power spectacle lens.

21. Method according to any of Claims 16 to 20, **characterized in that** designing the progressive power spectacle lens results in a progressive power spectacle lens corresponding to a product according to any of Claims 1 to 15 or **in that** the progressive power spectacle lens is designed with the stipulation that a progressive power spectacle lens corresponding to a product according to any of Claims 1 to 15 should be produced.

22. Computer program having program code for carrying out all method steps according to any of Claims 16 to 21 when the computer program is loaded on a computer and/or executed on a computer.

23. Computer-readable medium comprising a computer program according to Claim 22.

**24.** Method for producing a progressive power spectacle lens, comprising a method according to any of Claims 16 to 21 and manufacturing of the progressive power spectacle lens according to the design.

**25.** Method according to Claim 24, **characterized in that** the progressive power spectacle lens is manufactured using an additive method.

**26.** Computer comprising a processor and comprising a memory in which a computer program according to Claim 22 is stored, said computer being configured to execute a method according to any of Claims 16 to 21.

**Revendications**

**1.** Produit comprenant un verre de lunettes progressif ou une représentation du verre de lunettes progressif qui se trouve sur un support de données sous la forme de données lisibles par ordinateur et qui comprend des instructions pour une fabrication par un procédé additif, dans lequel le verre de lunettes progressif présente

(a) une surface avant réalisée sous forme de surface progressive, pourvue d'une géométrie de surface avant, et une surface arrière pourvue d'une géométrie de surface arrière, ou
(b) une surface arrière réalisée sous forme de surface progressive, pourvue d'une géométrie de surface arrière, et une surface avant pourvue d'une géométrie de surface avant, et

- un indice de réfraction variable dans l'espace, **caractérisé en ce que**
- le produit comprend en outre une représentation, se trouvant sur un support de données, d'un agencement prédéterminé du verre de lunettes progressif devant un œil d'un porteur de lunettes à verres progressifs à qui le verre de lunettes progressif est destiné, **en ce que**
- le verre de lunettes progressif présente une distribution d'un équivalent sphérique pour l'agencement prédéterminé du verre de lunettes progressif devant l'œil du porteur de lunettes à verres progressifs à qui le verre de lunettes progressif est destiné, **en ce que**
- le produit présente en outre

(i) une représentation, se trouvant sur un support de données, d'une distribution d'astigmatisme résiduel pour l'agencement prédéterminé du verre de lunettes progressif devant l'œil du porteur de lunettes à verres progressifs à qui le verre de lunettes progressif est destiné, et/ou
(ii) une représentation, se trouvant sur un support de données, d'une distribution de puissance astigmatique, nécessaire à une correction complète, pour l'agencement prédéterminé du verre de lunettes progressif devant l'œil du porteur de lunettes à verres progressifs à qui le verre de lunettes progressif est destiné, et/ou
(iii) une représentation, se trouvant sur un support de données, d'une prescription et d'un modèle de distance à l'objet pour l'agencement prédéterminé du verre de lunettes progressif devant l'œil d'un porteur de lunettes à verres progressifs à qui le verre de lunettes progressif est destiné, et/ou
(iv) une représentation, se trouvant sur un support de données, d'une distribution de l'équivalent sphérique pour l'agencement prédéterminé du verre de lunettes progressif devant l'œil du porteur de lunettes à verres progressifs à qui le verre de lunettes progressif est destiné, et **en ce que**

l'indice de réfraction du verre de lunettes progressif varie dans l'espace de telle sorte que la valeur maximale de l'astigmatisme résiduel du verre de lunettes progressif est inférieure à la valeur maximale de l'astigmatisme résiduel d'un verre de lunettes progressif comparatif ayant un indice de réfraction non variable dans l'espace mais une distribution identique de l'équivalent sphérique pour le même agencement du verre de lunettes progressif comparatif devant l'œil du porteur de lunettes à verres progressifs, dans lequel la valeur maximale de l'astigmatisme résiduel du verre de lunettes progressif comparatif est située au même endroit que la valeur maximale de l'astigmatisme résiduel du verre de lunettes progressif, dans lequel
- dans le cas (a), la géométrie de surface avant de la surface avant, réalisée sous forme de surface progressive, du verre de lunettes progressif est réalisée de manière modifiée par rapport à une géométrie de surface avant d'une surface avant, réalisée sous forme de surface progressive, du verre de lunettes progressif comparatif, et la géométrie de surface arrière de la surface arrière du verre de lunettes progressif est réalisée de manière identique à une géométrie de surface arrière d'une surface arrière du verre de lunettes progressif comparatif, et
- dans le cas (b), la géométrie de surface arrière de la surface arrière, réalisée sous forme de surface progressive, du verre de lunettes progressif est réalisée de manière modifiée par rapport à une géométrie de surface arrière d'une surface arrière, réalisée sous forme de surface progressive, du verre de lunettes progressif comparatif, et la géométrie de surface avant de la surface avant du verre de lunettes progressif est réalisée de manière identique à une géométrie de surface avant d'une surface avant du verre de lunettes progressif comparatif.

2. Produit selon la revendication 1, **caractérisé en ce qu'**au moins l'une des surfaces de forme libre ne présente pas de symétrie ponctuelle et pas de symétrie axiale, ou **en ce qu'**au moins l'une des surfaces de forme libre ne présente pas de symétrie ponctuelle et pas de symétrie axiale et pas de symétrie de révolution et pas de symétrie par rapport à un plan de symétrie.

3. Produit selon l'une quelconque des revendications 1 ou 2, **caractérisé en ce que** le verre de lunettes progressif présente un canal de progression, et **en ce que**

- la surface avant réalisée sous forme de surface de forme libre est configurée de telle sorte que la courbure moyenne dans le canal de progression est maximale, et/ou
- la surface arrière réalisée sous forme de surface de forme libre est configurée de telle sorte que la courbure moyenne dans le canal de progression est minimale.

4. Produit selon l'une quelconque des revendications 1 à 3, **caractérisé en ce que**

- le produit comprend en outre une représentation, se trouvant sur un support de données, d'un agencement prédéterminé du verre de lunettes progressif devant un œil d'un porteur de lunettes à verres progressifs à qui le verre de lunettes progressif est destiné, **en ce que**
- le verre de lunettes progressif présente une distribution d'un équivalent sphérique pour l'agencement prédéterminé du verre de lunettes progressif devant l'œil du porteur de lunettes à verres progressifs à qui le verre de lunettes progressif est destiné, **en ce que**
- le verre de lunettes progressif présente un canal de progression ayant une largeur, et **en ce que** l'indice de réfraction du verre de lunettes progressif varie dans l'espace de telle sorte que la largeur du canal progressif du verre de lunettes progressif est supérieure, au moins en coupe ou sur toute la longueur du canal de progression, à la largeur du canal de progression d'un verre de lunettes progressif comparatif ayant la même distribution de l'équivalent sphérique pour le même agencement du verre de lunettes progressif comparatif devant l'œil du porteur de lunettes à verres progressifs, mais avec un indice de réfraction invariable dans l'espace.

5. Produit selon la revendication 4, **caractérisé en ce que** ladite au moins une coupe est une variante sélectionnée dans le groupe suivant

- coupe horizontale,
- coupe à mi-addition,
- coupe horizontale à mi-addition,
- coupe horizontale à mi-addition et coupe horizontale à 25 % de l'addition,
- coupe horizontale à mi-addition et coupe horizontale à 75 % de l'addition,
- coupe horizontale à mi-addition et coupe horizontale à 25 % de l'addition et coupe horizontale à 75 % de l'addition.

6. Produit selon la revendication 4 ou 5, **caractérisé en ce que**

- le produit présente en outre

(i) une représentation, se trouvant sur un support de données, d'une distribution d'astigmatisme résiduel pour l'agencement prédéterminé du verre de lunettes progressif devant l'œil du porteur de lunettes à verres progressifs à qui le verre de lunettes progressif est destiné, et/ou
(ii) une représentation, se trouvant sur un support de données, d'une distribution de puissance astigmatique, nécessaire à une correction complète, pour l'agencement prédéterminé du verre de lunettes progressif devant l'œil du porteur de lunettes à verres progressifs à qui le verre de lunettes progressif est destiné, et/ou
(iii) une représentation, se trouvant sur un support de données, d'une prescription et d'un modèle de distance à l'objet pour l'agencement prédéterminé du verre de lunettes progressif devant l'œil d'un porteur de lunettes à verres progressifs à qui le verre de lunettes progressif est destiné, et/ou

(iv) une représentation, se trouvant sur un support de données, d'une distribution de l'équivalent sphérique pour l'agencement prédéterminé du verre de lunettes progressif devant l'œil du porteur de lunettes à verres progressifs à qui le verre de lunettes progressif est destiné, **en ce que**

- le verre de lunettes progressif présente une partie de vision de loin et une partie de vision de près, et **en ce que**
- la largeur du canal de progression correspond à la dimension transversalement à une direction longitudinale du canal de progression s'étendant entre la partie de vision de loin et la partie de vision de près, dimension à l'intérieur de laquelle la valeur de l'astigmatisme résiduel est inférieure à une valeur limite prédéterminée qui est sélectionnée dans une plage du groupe indiqué ci-dessous :

(a) la valeur limite se situe dans la plage comprise entre 0,25 dpt et 1,5 dpt,
(b) la valeur limite se situe dans la plage comprise entre 0,25 dpt et 1,0 dpt,
(c) la valeur limite se situe dans la plage comprise entre 0,25 dpt et 0,75 dpt,
(d) la valeur limite se situe dans la plage comprise entre 0,25 dpt et 0,6 dpt,
(e) la valeur limite se situe dans la plage comprise entre 0,25 dpt et 0,5 dpt,
(f) la valeur limite est égale à 0,5 dpt.

7.  Produit selon l'une quelconque des revendications précédentes, **caractérisé en ce que**

- le produit comprend en outre une représentation, se trouvant sur un support de données, d'un agencement prédéterminé du verre de lunettes progressif devant un œil d'un porteur de lunettes à verres progressifs à qui le verre de lunettes progressif est destiné, **en ce que**
- le verre de lunettes progressif présente une distribution d'un équivalent sphérique (W) pour l'agencement prédéterminé du verre de lunettes progressif devant l'œil du porteur de lunettes progressives à qui le verre de lunettes progressif est destiné, **en ce que**
- le produit présente en outre

(i) une représentation, se trouvant sur un support de données, d'une distribution d'astigmatisme résiduel pour l'agencement prédéterminé du verre de lunettes progressif devant l'œil du porteur de lunettes à verres progressifs à qui le verre de lunettes progressif est destiné, et/ou
(ii) une représentation, se trouvant sur un support de données, d'une distribution de puissance astigmatique, nécessaire à une correction complète, pour l'agencement prédéterminé du verre de lunettes progressif devant l'œil du porteur de lunettes à verres progressifs à qui le verre de lunettes progressif est destiné, et/ou
(iii) une représentation, se trouvant sur un support de données, d'une prescription et d'un modèle de distance à l'objet pour l'agencement prédéterminé du verre de lunettes progressif devant l'œil d'un porteur de lunettes à verres progressifs à qui le verre de lunettes progressif est destiné, et/ou
(iv) une représentation, se trouvant sur un support de données, d'une distribution de l'équivalent sphérique pour l'agencement prédéterminé du verre de lunettes progressif devant l'œil du porteur de lunettes à verres progressifs à qui le verre de lunettes progressif est destiné, et **en ce que**

- le verre de lunettes progressif présente un canal de progression et une ligne de visée principale, et **en ce que** l'indice de réfraction du verre de lunettes progressif varie dans l'espace de telle sorte que pour une valeur d'astigmatisme résiduel $A_{Rest,Grenz}$ prédéfinie du groupe suivant

(a) la valeur d'astigmatisme résiduel $A_{Rest,Grenz}$ se situe dans la plage comprise entre 0,25 dpt et 1,5 dpt,
(b) la valeur d'astigmatisme résiduel $A_{Rest,Grenz}$ se situe dans la plage comprise entre 0,25 dpt et 1,0 dpt,
(c) la valeur d'astigmatisme résiduel $A_{Rest,Grenz}$ se situe dans la plage comprise entre 0,25 dpt et 0,75 dpt,
(d) la valeur d'astigmatisme résiduel $A_{Rest,Grenz}$ se situe dans la plage comprise entre 0,25 dpt et 0,6 dpt,
(e) la valeur d'astigmatisme résiduel $A_{Rest,Grenz}$ se situe dans la plage comprise entre 0,25 dpt et 0,5 dpt,
(f) la valeur d'astigmatisme résiduel $A_{Rest,Grenz}$ est égale à 0,5 dpt

sur une coupe horizontale à l'endroit le plus étroit du canal de progression ou pour une coupe horizontale à travers le point sur la ligne de visée principale où la mi-addition est atteinte, à l'intérieur d'une zone ayant une distance horizontale de 10 mm des deux côtés de la ligne de visée principale, la relation suivante s'applique :

$$B > c \times \frac{A_{Rest,Grenz}}{grad\ W}$$

dans lequel grad W est le gradient de puissance de l'équivalent sphérique du verre de lunettes progressif à l'endroit le plus étroit du canal de progression sur la ligne de visée principale ou en un point sur la ligne de visée principale où la mi-addition est atteinte, B est la largeur de la zone dans le verre de lunettes progressif dans laquelle l'astigmatisme résiduel est $A_{Rest} \leq A_{Rest,Grenz}$, c étant une constante sélectionnée dans le groupe suivant :

(a)

$$1,0 < c$$

(b)

$$1,1 < c$$

(c)

$$1,2 < c$$

(d)

$$1,3 < c.$$

**8.** Produit comprenant un verre de lunettes progressif ou une représentation du verre de lunettes progressif qui se trouve sur un support de données sous la forme de données lisibles par ordinateur et qui comprend des instructions pour une fabrication par un procédé additif, dans lequel le verre de lunettes progressif présente

- une surface avant et une surface arrière, et
- un indice de réfraction variable dans l'espace, dans lequel
- la surface avant est réalisée sous forme de surface progressive et/ou la surface arrière est réalisée sous forme de surface progressive,
dans lequel
- la surface avant réalisée sous forme de surface progressive est réalisée sous forme de surface de forme libre, et/ou la surface arrière réalisée sous forme de surface progressive est réalisée sous forme de surface de forme libre,
**caractérisé en ce que**
- le produit comprend en outre une représentation, se trouvant sur un support de données, d'un agencement prédéterminé du verre de lunettes progressif devant un œil d'un porteur de lunettes à verres progressifs à qui le verre de lunettes progressif est destiné, **en ce que**
- le verre de lunettes progressif présente une distribution d'un équivalent sphérique (W) pour l'agencement prédéterminé du verre de lunettes progressif devant l'œil du porteur de lunettes progressives à qui le verre de lunettes progressif est destiné, **en ce que**
- le produit présente en outre

(i) une représentation, se trouvant sur un support de données, d'une distribution d'astigmatisme résiduel pour l'agencement prédéterminé du verre de lunettes progressif devant l'œil du porteur de lunettes à verres progressifs à qui le verre de lunettes progressif est destiné, et/ou
(ii) une représentation, se trouvant sur un support de données, d'une distribution de puissance astigmatique, nécessaire à une correction complète, pour l'agencement prédéterminé du verre de lunettes progressif devant l'œil du porteur de lunettes à verres progressifs à qui le verre de lunettes progressif est destiné, et/ou
(iii) une représentation, se trouvant sur un support de données, d'une prescription et d'un modèle de distance à l'objet pour l'agencement prédéterminé du verre de lunettes progressif devant l'œil d'un porteur de lunettes à verres progressifs à qui le verre de lunettes progressif est destiné, et/ou
(iv) une représentation, se trouvant sur un support de données, d'une distribution de l'équivalent sphérique pour l'agencement prédéterminé du verre de lunettes progressif devant l'œil du porteur de lunettes à verres progressifs à qui le verre de lunettes progressif est destiné, et **en ce que**

- le verre de lunettes progressif présente un canal de progression et une ligne de visée principale, et **en ce que**

l'indice de réfraction du verre de lunettes progressif varie dans l'espace de telle sorte que pour une valeur d'astigmatisme résiduel $A_{Rest,Grenz}$ prédéfinie du groupe suivant

(a) la valeur d'astigmatisme résiduel $A_{Rest,Grenz}$ se situe dans la plage comprise entre 0,25 dpt et 1,5 dpt,
(b) la valeur d'astigmatisme résiduel $A_{Rest,Grenz}$ se situe dans la plage comprise entre 0,25 dpt et 1,0 dpt,
(c) la valeur d'astigmatisme résiduel $A_{Rest,Grenz}$ se situe dans la plage comprise entre 0,25 dpt et 0,75 dpt,
(d) la valeur d'astigmatisme résiduel $A_{Rest,Grenz}$ se situe dans la plage comprise entre 0,25 dpt et 0,6 dpt,
(e) la valeur d'astigmatisme résiduel $A_{Rest,Grenz}$ se situe dans la plage comprise entre 0,25 dpt et 0,5 dpt,
(f) la valeur d'astigmatisme résiduel $A_{Rest,Grenz}$ est égale à 0,5 dpt

sur une coupe horizontale à l'endroit le plus étroit du canal de progression ou pour une coupe horizontale à travers le point sur la ligne de visée principale où la mi-addition est atteinte, à l'intérieur d'une zone ayant une distance horizontale de 10 mm des deux côtés de la ligne de visée principale, la relation suivante s'applique :

$$B > c \times \frac{A_{Rest,Grenz}}{grad\ W}$$

dans lequel grad W est le gradient de puissance de l'équivalent sphérique du verre de lunettes progressif à l'endroit le plus étroit du canal de progression sur la ligne de visée principale ou en un point sur la ligne de visée principale où la mi-addition est atteinte, B est la largeur de la zone dans le verre de lunettes progressif dans laquelle l'astigmatisme résiduel est $A_{Rest} \leq A_{Rest,Grenz}$, c étant une constante sélectionnée dans le groupe suivant :

(a)

$$1,0 < c$$

(b)

$$1,1 < c$$

(c)

$$1,2 < c$$

(d)

$$1,3 < c.$$

**9.** Produit selon la revendication 8, **caractérisé en ce qu'**au moins l'une des surfaces de forme libre ne présente pas de symétrie ponctuelle et pas de symétrie axiale, ou **en ce qu'**au moins l'une des surfaces de forme libre ne présente pas de symétrie ponctuelle et pas de symétrie axiale et pas de symétrie de révolution et pas de symétrie par rapport à un plan de symétrie.

**10.** Produit selon l'une quelconque des revendications 8 ou 9, **caractérisé en ce que** le verre de lunettes progressif présente un canal de progression, et **en ce que**

- la surface avant réalisée sous forme de surface de forme libre est configurée de telle sorte que la courbure moyenne dans le canal de progression est maximale, et/ou
- la surface arrière réalisée sous forme de surface de forme libre est configurée de telle sorte que la courbure moyenne dans le canal de progression est minimale.

**11.** Produit selon l'une quelconque des revendications 8 à 10, **caractérisé en ce que**

- le produit comprend en outre une représentation, se trouvant sur un support de données, d'un agencement prédéterminé du verre de lunettes progressif devant un œil d'un porteur de lunettes à verres progressifs à qui le verre de lunettes progressif est destiné, **en ce que**

- le verre de lunettes progressif présente une distribution d'un équivalent sphérique pour l'agencement prédéterminé du verre de lunettes progressif devant l'œil du porteur de lunettes à verres progressifs à qui le verre de lunettes progressif est destiné, **en ce que**

- le verre de lunettes progressif présente un canal de progression ayant une largeur, et **en ce que** l'indice de réfraction du verre de lunettes progressif varie dans l'espace de telle sorte que la largeur du canal progressif du verre de lunettes progressif est supérieure, au moins en coupe ou sur toute la longueur du canal de progression, à la largeur du canal de progression d'un verre de lunettes progressif comparatif ayant la même distribution de l'équivalent sphérique pour le même agencement du verre de lunettes progressif comparatif devant l'œil du porteur de lunettes à verres progressifs, mais avec un indice de réfraction invariable dans l'espace.

12. Produit selon la revendication 11, **caractérisé en ce que** ladite au moins une coupe est une variante sélectionnée dans le groupe suivant

- coupe horizontale,
- coupe à mi-addition,
- coupe horizontale à mi-addition,
- coupe horizontale à mi-addition et coupe horizontale à 25 % de l'addition,
- coupe horizontale à mi-addition et coupe horizontale à 75 % de l'addition,
- coupe horizontale à mi-addition et coupe horizontale à 25 % de l'addition et coupe horizontale à 75 % de l'addition.

13. Produit selon la revendication 11 ou 12, **caractérisé en ce que**

- le produit présente en outre

(i) une représentation, se trouvant sur un support de données, d'une distribution d'astigmatisme résiduel pour l'agencement prédéterminé du verre de lunettes progressif devant l'œil du porteur de lunettes à verres progressifs à qui le verre de lunettes progressif est destiné, et/ou

(ii) une représentation, se trouvant sur un support de données, d'une distribution de puissance astigmatique, nécessaire à une correction complète, pour l'agencement prédéterminé du verre de lunettes progressif devant l'œil du porteur de lunettes à verres progressifs à qui le verre de lunettes progressif est destiné, et/ou

(iii) une représentation, se trouvant sur un support de données, d'une prescription et d'un modèle de distance à l'objet pour l'agencement prédéterminé du verre de lunettes progressif devant l'œil d'un porteur de lunettes à verres progressifs à qui le verre de lunettes progressif est destiné, et/ou

(iv) une représentation, se trouvant sur un support de données, d'une distribution de l'équivalent sphérique pour l'agencement prédéterminé du verre de lunettes progressif devant l'œil du porteur de lunettes à verres progressifs à qui le verre de lunettes progressif est destiné, **en ce que**

- le verre de lunettes progressif présente une partie de vision de loin et une partie de vision de près, et **en ce que**

- la largeur du canal de progression correspond à la dimension transversalement à une direction longitudinale du canal de progression s'étendant entre la partie de vision de loin et la partie de vision de près, dimension à l'intérieur de laquelle la valeur de l'astigmatisme résiduel est inférieure à une valeur limite prédéterminée qui est sélectionnée dans une plage du groupe indiqué ci-dessous :

(a) la valeur limite se situe dans la plage comprise entre 0,25 dpt et 1,5 dpt,
(b) la valeur limite se situe dans la plage comprise entre 0,25 dpt et 1,0 dpt,
(c) la valeur limite se situe dans la plage comprise entre 0,25 dpt et 0,75 dpt,
(d) la valeur limite se situe dans la plage comprise entre 0,25 dpt et 0,6 dpt,
(e) la valeur limite se situe dans la plage comprise entre 0,25 dpt et 0,5 dpt,
(f) la valeur limite est égale à 0,5 dpt.

14. Produit selon l'une quelconque des revendications 8 à 13, **caractérisé en ce que**

- le produit comprend en outre une représentation, se trouvant sur un support de données, d'un agencement prédéterminé du verre de lunettes progressif devant un œil d'un porteur de lunettes à verres progressifs à qui le verre de lunettes progressif est destiné, **en ce que**

- le verre de lunettes progressif présente une distribution d'un équivalent sphérique pour l'agencement prédéterminé du verre de lunettes progressif devant l'œil du porteur de lunettes à verres progressifs à qui le verre de lunettes progressif est destiné, **en ce que**
- le produit présente en outre

(i) une représentation, se trouvant sur un support de données, d'une distribution d'astigmatisme résiduel pour l'agencement prédéterminé du verre de lunettes progressif devant l'œil du porteur de lunettes à verres progressifs à qui le verre de lunettes progressif est destiné, et/ou
(ii) une représentation, se trouvant sur un support de données, d'une distribution de puissance astigmatique, nécessaire à une correction complète, pour l'agencement prédéterminé du verre de lunettes progressif devant l'œil du porteur de lunettes à verres progressifs à qui le verre de lunettes progressif est destiné, et/ou
(iii) une représentation, se trouvant sur un support de données, d'une prescription et d'un modèle de distance à l'objet pour l'agencement prédéterminé du verre de lunettes progressif devant l'œil d'un porteur de lunettes à verres progressifs à qui le verre de lunettes progressif est destiné, et/ou
(iv) une représentation, se trouvant sur un support de données, d'une distribution de l'équivalent sphérique pour l'agencement prédéterminé du verre de lunettes progressif devant l'œil du porteur de lunettes à verres progressifs à qui le verre de lunettes progressif est destiné, et **en ce que**

- l'indice de réfraction du verre de lunettes progressif varie dans l'espace de telle sorte que la valeur maximale de l'astigmatisme résiduel du verre de lunettes progressif est inférieure à la valeur maximale de l'astigmatisme résiduel d'un verre de lunettes progressif comparatif ayant la même distribution de l'équivalent sphérique pour un même agencement du verre de lunettes progressif comparatif devant l'œil du porteur de lunettes à verres progressifs mais avec un indice de réfraction qui ne varie pas dans l'espace.

**15.** Produit selon l'une quelconque des revendications 8 à 14, **caractérisé en ce que**

- le verre de lunettes progressif est composé d'un substrat ne comprenant pas de couches individuelles, présentant une surface avant et une surface arrière, ainsi que l'indice de réfraction variable dans l'espace, et d'un revêtement de surface avant comprenant une ou plusieurs couches individuelles sur la surface avant du substrat, et/ou d'un revêtement de surface arrière comprenant une ou plusieurs couches individuelles sur la surface arrière du substrat, et
**en ce que**
- une différence entre l'équivalent sphérique, mesuré en chaque point sur la surface avant du verre de lunettes progressif avec le revêtement de surface avant et/ou le revêtement de surface arrière, et l'équivalent sphérique, mesuré en chaque point correspondant sur la surface avant d'un verre de lunettes progressif comparatif sans revêtement de surface avant et sans revêtement de surface arrière mais avec un substrat identique, est inférieure à une valeur sélectionnée dans le groupe suivant :

(a) la valeur de différence est inférieure à 0,001 dpt,
(b) la valeur de différence est inférieure à 0,002 dpt,
(c) la valeur de différence est inférieure à 0,003 dpt,
(d) la valeur de différence est inférieure à 0,004 dpt.

**16.** Procédé mis en œuvre par ordinateur, permettant de concevoir un verre de lunettes progressif présentant une addition de près ou un effet dégressif dans le but d'utiliser l'ébauche pour fabriquer un verre de lunettes progressif, dans lequel le verre de lunettes progressif présente une surface avant et une surface arrière et un indice de réfraction variable dans l'espace, dans lequel la surface avant est réalisée sous forme de surface progressive et/ou la surface arrière est réalisée sous forme de surface progressive, dans lequel le verre de lunettes progressif présente une distribution d'un équivalent sphérique pour l'agencement prédéterminé du verre de lunettes progressif devant l'œil du porteur de lunettes à verres progressifs à qui le verre de lunettes progressif est destiné, dans lequel le verre de lunettes progressif présente un canal de progression ayant une largeur, dans lequel

- au moyen d'un procédé de calcul de faisceau, des propriétés optiques du verre de lunettes progressif sont calculées en une pluralité de points d'évaluation, à travers lesquels les faisceaux visuels traversent le verre de lunettes progressif, dans lequel
- au moins une propriété optique de consigne est fixée pour le verre de lunettes progressif au point d'évaluation respectif,
- une ébauche pour le verre de lunettes progressif est fixée, l'ébauche comprenant une représentation d'une géométrie de surface locale de la surface progressive et un indice de réfraction local du verre de lunettes progressif dans le trajet de faisceau visuel respectif à travers les points d'évaluation, dans lequel

- l'ébauche du verre de lunettes progressif est modifiée en vue d'une approximation de ladite au moins une propriété optique de consigne du verre de lunettes progressif, dans lequel la modification comprend une modification de la représentation de la géométrie de surface locale de la surface progressive et de l'indice de réfraction local du verre de lunettes progressif dans le trajet de faisceau visuel respectif à travers les points d'évaluation, dans lequel ladite au moins une propriété optique de consigne comprend un astigmatisme résiduel de consigne du verre de lunettes progressif, l'ébauche du verre de lunettes progressif étant réalisée à condition que

- l'addition de près ou l'effet dégressif soit fourni(e) au moins en partie par l'indice de réfraction variable dans l'espace,

- l'indice de réfraction du verre de lunettes progressif varie dans l'espace de telle sorte que la largeur du canal de progression du verre de lunettes progressif est au moins dans des coupes du groupe

(a) coupe horizontale à mi-addition et coupe horizontale à 25 % de l'addition,
(b) coupe horizontale à mi-addition et coupe horizontale à 75 % de l'addition,
(c) coupe horizontale à mi-addition et coupe horizontale à 25 % de l'addition et coupe horizontale à 75 % de l'addition,
(d) coupe horizontale à l'endroit le plus étroit du canal de progression

ou sur toute la longueur du canal de progression est supérieure à la largeur du canal de progression d'un verre de lunettes progressif comparatif ayant un indice de réfraction invariable dans l'espace mais ayant la même distribution de l'équivalent sphérique pour le même agencement du verre de lunettes progressif comparatif devant l'œil du porteur de lunettes à verres progressifs,

dans lequel la largeur du canal de progression correspond à la dimension transversalement à une direction longitudinale du canal de progression qui s'étend entre la partie de vision de loin et la partie de vision de près, dimension à l'intérieur de laquelle la valeur de l'astigmatisme résiduel est inférieure à une valeur limite prédéterminée qui est sélectionnée dans une plage du groupe indiqué ci-dessous :

(a) la valeur limite se situe dans la plage comprise entre 0,25 dpt et 1,0 dpt,
(b) la valeur limite se situe dans la plage comprise entre 0,25 dpt et 0,75 dpt,
(c) la valeur limite se situe dans la plage comprise entre 0,25 dpt et 0,6 dpt,
(d) la valeur limite se situe dans la plage comprise entre 0,25 dpt et 0,5 dpt,
(e) la valeur limite est égale à 0,5 dpt.

**17.** Procédé mis en œuvre par ordinateur, permettant de concevoir un verre de lunettes progressif présentant une addition de près ou un effet dégressif dans le but d'utiliser l'ébauche pour fabriquer un verre de lunettes progressif, dans lequel le verre de lunettes progressif présente une surface avant et une surface arrière, dans lequel le verre de lunettes progressif présente

(a) une surface avant réalisée sous forme de surface progressive, pourvue d'une géométrie de surface avant, et une surface arrière pourvue d'une géométrie de surface arrière, ou
(b) une surface arrière réalisé sous forme de surface progressive, pourvue d'une géométrie de surface arrière, et une surface avant pourvue d'une géométrie de surface avant, et

- un indice de réfraction variable dans l'espace, dans lequel le verre de lunettes progressif présente une distribution d'un équivalent sphérique pour l'agencement prédéterminé du verre de lunettes progressif devant l'œil du porteur de lunettes progressives à qui le verre de lunettes progressif est destiné, dans lequel
- au moyen d'un procédé de calcul de faisceau, des propriétés optiques du verre de lunettes progressif sont calculées en une pluralité de points d'évaluation, à travers lesquels les faisceaux visuels traversent le verre de lunettes progressif, dans lequel
- au moins une propriété optique de consigne est fixée pour le verre de lunettes progressif au point d'évaluation respectif,
- une ébauche pour le verre de lunettes progressif est fixée, l'ébauche comprenant une représentation d'une géométrie de surface locale de la surface progressive et un indice de réfraction local du verre de lunettes progressif dans le trajet de faisceau visuel respectif à travers les points d'évaluation, dans lequel
- l'ébauche du verre de lunettes progressif est modifiée en vue d'une approximation de ladite au moins une propriété optique de consigne du verre de lunettes progressif, dans lequel la modification comprend une modification de la représentation de la géométrie de surface locale de la surface progressive et de l'indice de réfraction local du verre de lunettes progressif dans le trajet de faisceau visuel respectif à travers les points d'évaluation, dans lequel ladite au moins une propriété optique de consigne comprend un astigmatisme résiduel de consigne du verre de lunettes progressif, l'ébauche du verre de lunettes progressif étant réalisée à condition que

- l'indice de réfraction du verre de lunettes progressif varie dans l'espace de telle sorte que la valeur maximale de l'astigmatisme résiduel du verre de lunettes progressif est inférieure à la valeur maximale de l'astigmatisme résiduel d'un verre de lunettes progressif comparatif ayant un indice de réfraction invariable dans l'espace mais ayant la même distribution de l'équivalent sphérique pour un même agencement du verre de lunettes progressif comparatif devant l'œil du porteur de lunettes à verres progressifs, dans lequel

- dans le cas (a), la géométrie de surface avant de la surface avant, réalisée sous forme de surface progressive, du verre de lunettes progressif est modifiée par rapport à une géométrie de surface avant d'une surface avant, réalisée sous forme de surface progressive, du verre de lunettes progressif comparatif, et la géométrie de surface arrière de la surface arrière du verre de lunettes progressif est identique à une géométrie de surface arrière d'une surface arrière du verre de lunettes progressif comparatif, et

- dans le cas (b), la géométrie de surface arrière de la surface arrière, réalisée sous forme de surface progressive, du verre de lunettes progressif est modifiée par rapport à une géométrie de surface arrière d'une surface arrière, réalisée sous forme de surface progressive, du verre de lunettes progressif comparatif, et la géométrie de surface avant de la surface avant du verre de lunettes progressif est identique à une géométrie de surface avant d'une surface avant du verre de lunettes progressif comparatif.

18. Procédé mis en œuvre par ordinateur, permettant de concevoir un verre de lunettes progressif dans le but d'utiliser l'ébauche pour fabriquer un verre de lunettes progressif, dans lequel le verre de lunettes progressif présente une surface avant, une surface arrière et un indice de réfraction variable dans l'espace, dans lequel

- la surface avant est réalisée sous forme de surface progressive et/ou la surface arrière est réalisée sous forme de surface progressive, dans lequel

- au moyen d'un procédé de calcul de faisceau, des propriétés optiques du verre de lunettes progressif sont calculées en une pluralité de points d'évaluation, à travers lesquels les faisceaux visuels traversent le verre de lunettes progressif, dans lequel

- au moins une propriété optique de consigne est fixée pour le verre de lunettes progressif au point d'évaluation respectif,

- une ébauche pour le verre de lunettes progressif est fixée, l'ébauche comprenant une représentation d'une géométrie de surface locale de la surface progressive et un indice de réfraction local du verre de lunettes progressif dans le trajet de faisceau visuel respectif à travers les points d'évaluation, dans lequel

- l'ébauche du verre de lunettes progressif est modifiée en vue d'une approximation de ladite au moins une propriété optique de consigne du verre de lunettes progressif, dans lequel la modification comprend une modification de la représentation de la géométrie de surface locale de la surface progressive et de l'indice de réfraction local du verre de lunettes progressif dans le trajet de faisceau visuel respectif à travers les points d'évaluation, dans lequel ladite au moins une propriété optique de consigne comprend un astigmatisme résiduel de consigne du verre de lunettes progressif, dans lequel

- le verre de lunettes progressif présente un canal de progression et une ligne de visée principale, et l'indice de réfraction du verre de lunettes progressif varie dans l'espace de telle sorte que pour une valeur d'astigmatisme résiduel $A_{Rest,Grenz}$ prédéfinie du groupe suivant

(a) la valeur d'astigmatisme résiduel $A_{Rest,Grenz}$ se situe dans la plage comprise entre 0,25 dpt et 1,5 dpt,
(b) la valeur d'astigmatisme résiduel $A_{Rest,Grenz}$ se situe dans la plage comprise entre 0,25 dpt et 1,0 dpt,
(c) la valeur d'astigmatisme résiduel $A_{Rest,Grenz}$ se situe dans la plage comprise entre 0,25 dpt et 0,75 dpt,
(d) la valeur d'astigmatisme résiduel $A_{Rest,Grenz}$ se situe dans la plage comprise entre 0,25 dpt et 0,6 dpt,
(e) la valeur d'astigmatisme résiduel $A_{Rest,Grenz}$ se situe dans la plage comprise entre 0,25 dpt et 0,5 dpt,
(f) la valeur d'astigmatisme résiduel $A_{Rest,Grenz}$ est égale à 0,5 dpt

sur une coupe horizontale à l'endroit le plus étroit du canal de progression ou pour une coupe horizontale à travers le point sur la ligne de visée principale où la mi-addition est atteinte, à l'intérieur d'une zone ayant une distance horizontale de 10 mm des deux côtés de la ligne de visée principale, la relation suivante s'applique :

$$B > c \times \frac{A_{Rest,Grenz}}{grad\ W}$$

dans lequel grad W est le gradient de puissance de l'équivalent sphérique du verre de lunettes progressif à l'endroit le plus étroit du canal de progression sur la ligne de visée principale ou en un point sur la ligne de visée principale où la mi-addition est atteinte, B est la largeur de la zone dans le verre de lunettes progressif dans laquelle l'astigmatisme résiduel est $A_{Rest} \leq A_{rest,Grenz}$, c étant tune constante sélectionnée dans le groupe suivant :

(a)

$$1,0 < c$$

(b)

$$1,1 < c$$

(c)

$$1,2 < c$$

(d)

$$1,3 < c.$$

**19.** Procédé selon l'une quelconque des revendications 16 à 18, **caractérisé en ce que** la modification de l'ébauche du verre de lunettes progressif est effectuée en vue de minimiser une fonction cible

$$F = \sum_m P_m \sum_n W_n \left( T_n - A_n \right)^2$$

dans lequel $P_m$ est la pondération au point d'évaluation m, $W_n$ est la pondération de la propriété optique n, $T_n$ est la valeur de consigne de la propriété optique n au point d'évaluation respectif m, et $A_n$ est la valeur réelle de la propriété optique n au point d'évaluation m.

**20.** Procédé selon l'une quelconque des revendications 16 à 19, **caractérisé en ce que** pour au moins un point d'évaluation, un astigmatisme résiduel de consigne est prédéfini qui est inférieur à l'astigmatisme résiduel théoriquement pouvant être atteint audit au moins un point d'évaluation correspondant sur un verre de lunettes progressif comparatif ayant la même distribution de l'équivalent sphérique et le même agencement du verre de lunettes progressif comparatif devant l'œil du porteur de lunettes à verres progressifs mais un indice de réfraction invariable dans l'espace, et **en ce que** la modification de la représentation de la géométrie de surface locale de la surface progressive et de l'indice de réfraction local du verre de lunettes progressif dans le trajet de faisceau visuel respectif à travers les points d'évaluation n'est abandonnée que si l'astigmatisme résiduel atteint pour le verre de lunettes progressif conçu est inférieur audit au moins un point d'évaluation à l'astigmatisme résiduel pouvant être atteint en théorie audit au moins un point d'évaluation sur le verre de lunettes progressif comparatif.

**21.** Procédé selon l'une quelconque des revendications 16 à 20, **caractérisé en ce que** lors de la conception du verre de lunettes progressif, le résultat est un verre de lunettes progressif selon un produit selon l'une quelconque des revendications 1 à 15, ou **en ce que** la conception du verre de lunettes progressif est effectuée à condition de produire un verre de lunettes progressif selon un produit selon l'une quelconque des revendications 1 à 15.

**22.** Programme informatique comprenant du code programme pour exécuter toutes les étapes de procédé selon l'une quelconque des revendications 16 à 21, si le programme informatique est chargé sur un ordinateur et/ou exécuté dans un ordinateur.

**23.** Support lisible par ordinateur, comprenant un programme informatique selon la revendication 22.

**24.** Procédé permettant de fabriquer un verre de lunettes progressif, comprenant un procédé selon l'une quelconque des revendications 16 à 21 et la production du verre de lunettes progressif selon l'ébauche.

**25.** Procédé selon la revendication 24, **caractérisé en ce que** la production du verre de lunettes progressif est effectuée par un procédé additif.

**26.** Ordinateur, comprenant un processeur et une mémoire, dans lequel un programme informatique selon la revendication 22 est stocké et qui est conçu pour exécuter un procédé selon l'une quelconque des revendications 16 à 21.

Fig. 1a

Fig. 1b

Flaeohenastigmatismus [Dpt]

Fig. 1c

Fig. 2a

Fig. 2b

Flaechenastigmatismus [Dpt] bei konstantem n = 1,600

Fig. 2c

56

Fig. 3

Fig. 4a

Fig. 4b

Fig. 5a

Fig. 5b

| | X | 0 | 2 | 4 | 6 | 8 | 10 | 12 | 14 | 16 | 18 | 20 |
|---|---|---|---|---|---|---|---|---|---|---|---|---|
| Y | | | | | | | | | | | | |
| 26 | | 3,1912 | 3,2086 | 3,2609 | 3,3481 | 3,4702 | 3,6269 | 3,8176 | 4,0419 | | | |
| 24 | | 2,7257 | 2,7430 | 2,7952 | 2,8822 | 3,0040 | 3,1602 | 3,3502 | 3,5732 | 3,8284 | 4,1145 | |
| 22 | | 2,2971 | 2,3144 | 2,3665 | 2,4535 | 2,5754 | 2,7316 | 2,9216 | 3,1446 | 3,4000 | 3,6870 | 4,0048 |
| 20 | | 1,9050 | 1,9223 | 1,9746 | 2,0618 | 2,1840 | 2,3408 | 2,5315 | 2,7555 | 3,0123 | 3,3015 | 3,6226 |
| 18 | | 1,5490 | 1,5665 | 1,6190 | 1,7068 | 1,8297 | 1,9874 | 2,1794 | 2,4052 | 2,6646 | 2,9572 | 3,2829 |
| 16 | | 1,2290 | 1,2467 | 1,2997 | 1,3881 | 1,5121 | 1,6712 | 1,8651 | 2,0935 | 2,3563 | 2,6533 | 2,9845 |
| 14 | | 0,9451 | 0,9630 | 1,0166 | 1,1061 | 1,2313 | 1,3922 | 1,5886 | 1,8202 | 2,0871 | 2,3893 | 2,7269 |
| 12 | | 0,6977 | 0,7158 | 0,7701 | 0,8608 | 0,9877 | 1,1508 | 1,3500 | 1,5854 | 1,8570 | 2,1649 | 2,5096 |
| 10 | | 0,4869 | 0,5053 | 0,5605 | 0,6524 | 0,7813 | 0,9469 | 1,1495 | 1,3891 | 1,6658 | 1,9800 | 2,3320 |
| 8 | | 0,3133 | 0,3320 | 0,3880 | 0,4815 | 0,6125 | 0,7810 | 0,9873 | 1,2314 | 1,5136 | 1,8343 | 2,1940 |
| 6 | | 0,1773 | 0,1963 | 0,2533 | 0,3484 | 0,4817 | 0,6533 | 0,8635 | 1,1123 | 1,4003 | 1,7277 | 2,0952 |
| 4 | | 0,0794 | 0,0987 | 0,1567 | 0,2535 | 0,3893 | 0,5641 | 0,7783 | 1,0321 | 1,3259 | 1,6602 | 2,0355 |
| 2 | | 0,0201 | 0,0398 | 0,0988 | 0,1974 | 0,3357 | 0,5139 | 0,7322 | 0,9911 | 1,2908 | 1,6320 | 2,0152 |
| 0 | | 0,0001 | 0,0201 | 0,0803 | 0,1807 | 0,3216 | 0,5031 | 0,7257 | 0,9896 | 1,2953 | 1,6434 | 2,0345 |
| -2 | | 0,0200 | 0,0404 | 0,1016 | 0,2039 | 0,3474 | 0,5324 | 0,7593 | 1,0282 | 1,3399 | 1,6948 | 2,0939 |
| -4 | | 0,0806 | 0,1013 | 0,1637 | 0,2678 | 0,4140 | 0,6025 | 0,8336 | 1,1076 | 1,4252 | 1,7870 | 2,1939 |
| -6 | | 0,1826 | 0,2037 | 0,2672 | 0,3732 | 0,5221 | 0,7140 | 0,9494 | 1,2284 | 1,5519 | 1,9206 | 2,3353 |
| -8 | | 0,3268 | 0,3483 | 0,4129 | 0,5209 | 0,6725 | 0,8679 | 1,1075 | 1,3916 | 1,7210 | 2,0965 | 2,5189 |
| -10 | | 0,5140 | 0,5359 | 0,6016 | 0,7117 | 0,8659 | 1,0648 | 1,3086 | 1,5979 | 1,9332 | 2,3155 | 2,7457 |
| -12 | | 0,7452 | 0,7675 | 0,8345 | 0,9464 | 1,1032 | 1,3055 | 1,5536 | 1,8481 | 2,1895 | 2,5788 | 3,0168 |
| -14 | | 1,0211 | 1,0438 | 1,1120 | 1,2258 | 1,3853 | 1,5909 | 1,8434 | 2,1431 | 2,4909 | 2,8875 | 3,3338 |
| -16 | | 1,3430 | 1,3661 | 1,4355 | 1,5512 | 1,7132 | 1,9223 | 2,1792 | 2,4846 | 2,8391 | 3,2435 | 3,6986 |
| -18 | | 1,7122 | 1,7357 | 1,8062 | 1,9237 | 2,0884 | 2,3011 | 2,5627 | 2,8740 | 3,2358 | 3,6488 | 4,1138 |
| -20 | | 2,1301 | 2,1539 | 2,2253 | 2,3447 | 2,5122 | 2,7287 | 2,9952 | 3,3129 | 3,6825 | 4,1051 | 4,5814 |
| -22 | | 2,5976 | 2,6217 | 2,6941 | 2,8152 | 2,9854 | 3,2058 | 3,4775 | 3,8019 | 4,1801 | 4,6133 | 5,1027 |
| -24 | | 3,1159 | 3,1402 | 3,2136 | 3,3363 | 3,5091 | 3,7333 | 4,0103 | 4,3416 | 4,7290 | 5,1742 | |
| -26 | | 3,6862 | 3,7108 | 3,7850 | 3,9093 | 4,0844 | 4,3120 | 4,5940 | 4,9322 | | | |

**Fig. 6a**

| X \ Y | 0 | 2 | 4 | 6 | 8 | 10 | 12 | 14 | 16 | 18 | 20 |
|---|---|---|---|---|---|---|---|---|---|---|---|
| 26 | 4,4873 | 4,5072 | 4,5668 | 4,6660 | 4,8044 | 4,9815 | 5,1967 | 5,4492 | | | |
| 24 | 3,8230 | 3,8430 | 3,9031 | 4,0031 | 4,1426 | 4,3213 | 4,5387 | 4,7939 | 5,0863 | 5,4149 | |
| 22 | 3,2067 | 3,2269 | 3,2875 | 3,3883 | 3,5291 | 3,7096 | 3,9293 | 4,1877 | 4,4839 | 4,8173 | 5,1870 |
| 20 | 2,6430 | 2,6634 | 2,7245 | 2,8262 | 2,9684 | 3,1508 | 3,3730 | 3,6345 | 3,9348 | 4,2731 | 4,6488 |
| 18 | 2,1350 | 2,1555 | 2,2172 | 2,3198 | 2,4634 | 2,6477 | 2,8725 | 3,1372 | 3,4415 | 3,7847 | 4,1662 |
| 16 | 1,6841 | 1,7048 | 1,7670 | 1,8707 | 2,0156 | 2,2018 | 2,4290 | 2,6969 | 3,0050 | 3,3529 | 3,7400 |
| 14 | 1,2905 | 1,3114 | 1,3742 | 1,4787 | 1,6251 | 1,8131 | 2,0426 | 2,3134 | 2,6251 | 2,9773 | 3,3696 |
| 12 | 0,9533 | 0,9744 | 1,0376 | 1,1431 | 1,2907 | 1,4804 | 1,7121 | 1,9856 | 2,3006 | 2,6567 | 3,0537 |
| 10 | 0,6708 | 0,6920 | 0,7558 | 0,8621 | 1,0109 | 1,2022 | 1,4358 | 1,7117 | 2,0297 | 2,3893 | 2,7904 |
| 8 | 0,4408 | 0,4622 | 0,5265 | 0,6335 | 0,7834 | 0,9761 | 1,2115 | 1,4896 | 1,8101 | 2,1728 | 2,5775 |
| 6 | 0,2611 | 0,2827 | 0,3473 | 0,4550 | 0,6059 | 0,7999 | 1,0369 | 1,3168 | 1,6396 | 2,0050 | 2,4128 |
| 4 | 0,1292 | 0,1509 | 0,2159 | 0,3243 | 0,4760 | 0,6711 | 0,9095 | 1,1911 | 1,5158 | 1,8835 | 2,2941 |
| 2 | 0,0429 | 0,0646 | 0,1300 | 0,2389 | 0,3915 | 0,5876 | 0,8272 | 1,1103 | 1,4367 | 1,8065 | 2,2193 |
| 0 | 0,0000 | 0,0219 | 0,0876 | 0,1970 | 0,3503 | 0,5473 | 0,7880 | 1,0724 | 1,4004 | 1,7719 | 2,1869 |
| -2 | -0,0012 | 0,0208 | 0,0868 | 0,1967 | 0,3506 | 0,5485 | 0,7902 | 1,0758 | 1,4052 | 1,7783 | 2,1952 |
| -4 | 0,0377 | 0,0598 | 0,1261 | 0,2365 | 0,3910 | 0,5896 | 0,8323 | 1,1190 | 1,4497 | 1,8244 | 2,2431 |
| -6 | 0,1154 | 0,1376 | 0,2041 | 0,3149 | 0,4700 | 0,6694 | 0,9131 | 1,2009 | 1,5329 | 1,9091 | 2,3295 |
| -8 | 0,2307 | 0,2530 | 0,3197 | 0,4310 | 0,5867 | 0,7868 | 1,0314 | 1,3203 | 1,6536 | 2,0314 | 2,4537 |
| -10 | 0,3826 | 0,4049 | 0,4720 | 0,5836 | 0,7399 | 0,9409 | 1,1864 | 1,4765 | 1,8112 | 2,1906 | 2,6149 |
| -12 | 0,5702 | 0,5926 | 0,6599 | 0,7720 | 0,9290 | 1,1307 | 1,3773 | 1,6686 | 2,0049 | 2,3861 | 2,8127 |
| -14 | 0,7927 | 0,8153 | 0,8828 | 0,9954 | 1,1531 | 1,3557 | 1,6034 | 1,8962 | 2,2341 | 2,6175 | 3,0464 |
| -16 | 1,0495 | 1,0721 | 1,1400 | 1,2532 | 1,4116 | 2,0000 | 1,8642 | 2,1586 | 2,4985 | 2,8842 | 3,3159 |
| -18 | 1,3398 | 1,3626 | 1,4308 | 1,5446 | 1,7039 | 1,9088 | 2,1592 | 2,4555 | 2,7977 | 3,1861 | 3,6210 |
| -20 | 1,6631 | 1,6860 | 1,7547 | 1,8692 | 2,0295 | 2,2358 | 2,4881 | 2,7865 | 3,1314 | 3,5230 | 3,9617 |
| -22 | 2,0188 | 2,0419 | 2,1111 | 2,2264 | 2,3880 | 2,5959 | 2,8503 | 3,1514 | 3,4994 | 3,8948 | 4,3380 |
| -24 | 2,4062 | 2,4295 | 2,4993 | 2,6157 | 2,7788 | 2,9887 | 3,2457 | 3,5499 | 3,9018 | 4,3018 | |
| -26 | 2,8247 | 2,8482 | 2,9188 | 3,0364 | 3,2014 | 3,4137 | 3,6737 | 3,9818 | | | |

Fig. 6b

Fig. 7a

Fig. 7b

Flaechenastigmatismus [Dpt]

Fig. 7c

Fig. 8a

Fig. 8b

Flaechenastigmatismus [Dpt] bei konstantem n = 1.600

**Fig. 8c**

Fig. 9

Fig. 10a

71

Fig. 10b

Fig. 11a

Fig. 11b

| | X | 0 | 2 | 4 | 6 | 8 | 10 | 12 | 14 | 16 | 18 | 20 |
|---|---|---|---|---|---|---|---|---|---|---|---|---|
| Y | | | | | | | | | | | | |
| 20 | | 1,6118 | 1,6289 | 1,6802 | 1,7658 | 1,8860 | 2,0408 | 2,2305 | 2,4552 | | | |
| 18 | | 1,2747 | 1,2916 | 1,3427 | 1,4280 | 1,5476 | 1,7018 | 1,8907 | 2,1145 | 2,3736 | | |
| 16 | | 0,9732 | 0,9900 | 1,0409 | 1,1258 | 1,2450 | 1,3986 | 1,5868 | 1,8098 | 2,0681 | 2,3618 | |
| 14 | | 0,7068 | 0,7236 | 0,7743 | 0,8590 | 0,9778 | 1,1308 | 1,3184 | 1,5407 | 1,7982 | 2,0911 | 2,4198 |
| 12 | | 0,4753 | 0,4921 | 0,5426 | 0,6270 | 0,7455 | 0,8981 | 1,0852 | 1,3069 | 1,5636 | 1,8557 | 2,1837 |
| 10 | | 0,2783 | 0,2951 | 0,3455 | 0,4297 | 0,5478 | 0,7001 | 0,8867 | 1,1079 | 1,3641 | 1,6556 | 1,9831 |
| 8 | | 0,1155 | 0,1323 | 0,1826 | 0,2666 | 0,3845 | 0,5365 | 0,7228 | 0,9436 | 1,1994 | 1,4908 | 1,8182 |
| 6 | | -0,0132 | 0,0035 | 0,0537 | 0,1375 | 0,2552 | 0,4070 | 0,5931 | 0,8139 | 1,0697 | 1,3612 | 1,6889 |
| 4 | | -0,1082 | -0,0916 | -0,0414 | 0,0424 | 0,1601 | 0,3119 | 0,4982 | 0,7192 | 0,9754 | 1,2676 | 1,5960 |
| 2 | | -0,1697 | -0,1530 | -0,1028 | -0,0187 | 0,0992 | 0,2515 | 0,4383 | 0,6602 | 0,9175 | 1,2109 | 1,5406 |
| 0 | | -0,1978 | -0,1810 | -0,1303 | -0,0457 | 0,0731 | 0,2263 | 0,4144 | 0,6379 | 0,8971 | 1,1922 | 1,5238 |
| -2 | | -0,1922 | -0,1749 | -0,1231 | -0,0370 | 0,0835 | 0,2386 | 0,4288 | 0,6545 | 0,9162 | 1,2138 | 1,5477 |
| -4 | | -0,1520 | -0,1341 | -0,0804 | 0,0086 | 0,1322 | 0,2901 | 0,4832 | 0,7120 | 0,9767 | 1,2773 | 1,6141 |
| -6 | | -0,0759 | -0,0572 | -0,0013 | 0,0912 | 0,2189 | 0,3810 | 0,5782 | 0,8108 | 1,0790 | 1,3830 | 1,7229 |
| -8 | | 0,0375 | 0,0569 | 0,1151 | 0,2113 | 0,3437 | 0,5113 | 0,7137 | 0,9509 | 1,2231 | 1,5308 | 1,8743 |
| -10 | | 0,1896 | 0,2098 | 0,2703 | 0,3702 | 0,5077 | 0,6810 | 0,8894 | 1,1319 | 1,4091 | 1,7212 | 2,0688 |
| -12 | | 0,3821 | 0,4031 | 0,4658 | 0,5695 | 0,7118 | 0,8910 | 1,1054 | 1,3540 | 1,6368 | 1,9543 | 2,3068 |
| -14 | | 0,6165 | 0,6382 | 0,7033 | 0,8106 | 0,9578 | 1,1425 | 1,3630 | 1,6179 | 1,9070 | 2,2303 | 2,5881 |
| -16 | | 0,8944 | 0,9169 | 0,9842 | 1,0951 | 1,2468 | 1,4368 | 1,6633 | 1,9245 | 2,2200 | 2,5494 | |
| -18 | | 1,2174 | 1,2405 | 1,3096 | 1,4235 | 1,5794 | 1,7748 | 2,0071 | 2,2745 | 2,5761 | | |
| -20 | | 1,5870 | 1,6104 | 1,6805 | 1,7965 | 1,9562 | 2,1568 | 2,3952 | 2,6684 | | | |

Fig. 12a

| | X | 0 | 2 | 4 | 6 | 8 | 10 | 12 | 14 | 16 | 18 | 20 |
|---|---|---|---|---|---|---|---|---|---|---|---|---|
| Y | | | | | | | | | | | | |
| 20 | | 2,7057 | 2,7241 | 2,7791 | 2,8707 | 2,9986 | 3,1625 | 3,3620 | 3,5972 | | | |
| 18 | | 2,2603 | 2,2790 | 2,3348 | 2,4277 | 2,5570 | 2,7221 | 2,9226 | 3,1579 | 3,4278 | | |
| 16 | | 1,8478 | 1,8670 | 1,9243 | 2,0192 | 2,1511 | 2,3189 | 2,5217 | 2,7586 | 3,0295 | 3,3341 | |
| 14 | | 1,4648 | 1,4847 | 1,5441 | 1,6421 | 1,7777 | 1,9495 | 2,1560 | 2,3960 | 2,6690 | 2,9748 | 3,3137 |
| 12 | | 1,1096 | 1,1303 | 1,1923 | 1,2943 | 1,4348 | 1,6117 | 1,8232 | 2,0676 | 2,3440 | 2,6522 | 2,9922 |
| 10 | | 0,7816 | 0,8034 | 0,8684 | 0,9753 | 1,1216 | 1,3047 | 1,5222 | 1,7721 | 2,0531 | 2,3648 | 2,7073 |
| 8 | | 0,4826 | 0,5055 | 0,5740 | 0,6862 | 0,8391 | 1,0291 | 1,2533 | 1,5096 | 1,7961 | 2,1123 | 2,4581 |
| 6 | | 0,2157 | 0,2399 | 0,3119 | 0,4298 | 0,5896 | 0,7868 | 1,0182 | 1,2813 | 1,5740 | 1,8951 | 2,2447 |
| 4 | | -0,0145 | 0,0108 | 0,0864 | 0,2098 | 0,3764 | 0,5809 | 0,8194 | 1,0893 | 1,3882 | 1,7145 | 2,0681 |
| 2 | | -0,2030 | -0,1765 | -0,0976 | 0,0311 | 0,2041 | 0,4155 | 0,6606 | 0,9367 | 1,2413 | 1,5725 | 1,9298 |
| 0 | | -0,3444 | -0,3169 | -0,2349 | -0,1016 | 0,0772 | 0,2945 | 0,5454 | 0,8266 | 1,1357 | 1,4707 | 1,8310 |
| -2 | | -0,4341 | -0,4057 | -0,3214 | -0,1846 | -0,0015 | 0,2204 | 0,4756 | 0,7605 | 1,0725 | 1,4098 | 1,7718 |
| -4 | | -0,4691 | -0,4403 | -0,3548 | -0,2163 | -0,0310 | 0,1935 | 0,4512 | 0,7382 | 1,0516 | 1,3896 | 1,7520 |
| -6 | | -0,4494 | -0,4206 | -0,3351 | -0,1967 | -0,0113 | 0,2136 | 0,4720 | 0,7593 | 1,0725 | 1,4099 | 1,7715 |
| -8 | | -0,3768 | -0,3482 | -0,2638 | -0,1269 | 0,0567 | 0,2802 | 0,5373 | 0,8232 | 1,1348 | 1,4704 | 1,8299 |
| -10 | | -0,2544 | -0,2263 | -0,1435 | -0,0092 | 0,1713 | 0,3919 | 0,6460 | 0,9288 | 1,2374 | 1,5703 | 1,9267 |
| -12 | | -0,0859 | -0,0586 | 0,0222 | 0,1531 | 0,3297 | 0,5460 | 0,7959 | 1,0744 | 1,3790 | 1,7083 | 2,0612 |
| -14 | | 0,1244 | 0,1508 | 0,2290 | 0,3560 | 0,5280 | 0,7396 | 0,9847 | 1,2583 | 1,5585 | 1,8838 | 2,2330 |
| -16 | | 0,3729 | 0,3983 | 0,4734 | 0,5960 | 0,7631 | 0,9699 | 1,2101 | 1,4791 | 1,7747 | 2,0961 | |
| -18 | | 0,6566 | 0,6808 | 0,7528 | 0,8709 | 1,0330 | 1,2350 | 1,4708 | 1,7355 | 2,0273 | | |
| -20 | | 0,9729 | 0,9962 | 1,0655 | 1,1796 | 1,3370 | 1,5344 | 1,7661 | 2,0274 | | | |

Fig. 12b

Fig. 13a

Fig. 13b

Fig. 14a

Fig. 14b

Fig. 15

**Fig. 16a**

**Fig. 16b**

Fig. 17a

Fig. 17b

| X | -22 | -20 | -18 | -16 | -14 | -12 | -10 | -8 | -6 | -4 | -2 | 0 | 2 | 4 | 6 | 8 | 10 | 12 | 14 | 16 | 18 | 20 | 22 |
|---|---|---|---|---|---|---|---|---|---|---|---|---|---|---|---|---|---|---|---|---|---|---|---|
| Y | | | | | | | | | | | | | | | | | | | | | | | |
| 24 | | | | | | | | | | | | 2,9314 | | | | | | | | | | | |
| 22 | | | | | | 2,8026 | 2,6737 | 2,5794 | 2,5195 | 2,4941 | 2,5030 | 2,5454 | 2,6243 | 2,7368 | | | | | | | | | |
| 20 | | | | | 2,7611 | 2,5634 | 2,4004 | 2,2720 | 2,1782 | 2,1187 | 2,0933 | 2,1022 | 2,1454 | 2,2229 | 2,3349 | 2,4814 | 2,6627 | | | | | | |
| 18 | | | | | 2,6252 | 2,3934 | 2,1966 | 2,0344 | 1,9066 | 1,9131 | 1,7538 | 1,7285 | 1,7375 | 1,7805 | 1,8577 | 1,9591 | 2,1150 | 2,2956 | 2,5110 | | | | |
| 16 | | | | 2,5584 | 2,2925 | 2,0617 | 1,8557 | 1,7042 | 1,5769 | 1,4838 | 1,4247 | 1,3995 | 1,4085 | 1,4513 | 1,5281 | 1,6390 | 1,7843 | 1,9641 | 2,1787 | 2,4283 | | | |
| 14 | | | | 2,5605 | 2,2604 | 1,9955 | 1,7655 | 1,5702 | 1,4093 | 1,2825 | 1,1897 | 1,1309 | 1,1058 | 1,1145 | 1,1572 | 1,2337 | 1,3442 | 1,4889 | 1,6680 | 1,8817 | 2,1305 | 2,4150 | |
| 12 | | | 2,6319 | 2,2970 | 1,9977 | 1,7337 | 1,5045 | 1,3098 | 1,1494 | 1,0230 | 0,9306 | 0,8719 | 0,8459 | 0,8555 | 0,8979 | 0,9740 | 1,0841 | 1,2282 | 1,4067 | 1,6198 | 1,8580 | 2,1518 | 2,4719 |
| 10 | | | 2,4028 | 2,0585 | 1,7700 | 1,5067 | 1,2782 | 1,0840 | 0,9240 | 0,7981 | 0,7060 | 0,6475 | 0,6224 | 0,6309 | 0,6731 | 0,7489 | 0,8586 | 1,0022 | 1,1802 | 1,3928 | 1,6406 | 1,9242 | 2,2441 |
| 8 | 2,5791 | 2,2089 | 1,8751 | 1,5771 | 1,3143 | 1,0853 | 0,8926 | 0,7329 | 0,6073 | 0,5155 | 0,4572 | 0,4321 | 0,4405 | 0,4824 | 0,5580 | 0,6673 | 0,8105 | 0,9881 | 1,2005 | 1,4484 | 1,7322 | 2,0526 | 2,4101 |
| 6 | 2,4204 | 2,0503 | 1,7167 | 1,4188 | 1,1562 | 0,9285 | 0,7351 | 0,5758 | 0,4505 | 0,3590 | 0,3008 | 0,2757 | 0,2839 | 0,3256 | 0,4010 | 0,5100 | 0,6530 | 0,8305 | 1,0432 | 1,2916 | 1,5762 | 1,8976 | 2,2563 |
| 4 | 2,2975 | 1,9271 | 1,5932 | 1,2951 | 1,0324 | 0,8047 | 0,6115 | 0,4525 | 0,3274 | 0,2360 | 0,1778 | 0,1528 | 0,1609 | 0,2025 | 0,2777 | 0,3856 | 0,5297 | 0,7077 | 0,9123 | 1,1710 | 1,4572 | 1,7804 | 2,1410 |
| 2 | 2,2105 | 1,8394 | 1,5048 | 1,2052 | 0,9430 | 0,7150 | 0,5217 | 0,3526 | 0,2376 | 0,1463 | 0,0882 | 0,0632 | 0,0714 | 0,1128 | 0,1880 | 0,2972 | 0,4411 | 0,6204 | 0,8358 | 1,0878 | 1,3766 | 1,7024 | 2,0655 |
| 0 | 2,1600 | 1,7877 | 1,4520 | 1,1524 | 0,8885 | 0,6598 | 0,4659 | 0,3065 | 0,1812 | 0,0897 | 0,0316 | 0,0067 | 0,0150 | 0,0565 | 0,1318 | 0,2419 | 0,3876 | 0,5693 | 0,7877 | 1,0430 | 1,3354 | 1,6547 | 2,0312 |
| -2 | 2,1475 | 1,7737 | 1,4367 | 1,1358 | 0,8705 | 0,6407 | 0,4457 | 0,2853 | 0,1591 | 0,0668 | 0,0083 | 0,0168 | 0,0083 | 0,0337 | 0,1103 | 0,2224 | 0,3710 | 0,5562 | 0,7785 | 1,0378 | 1,3342 | 1,6675 | 2,0377 |
| -4 | 2,1745 | 1,7993 | 1,4607 | 1,1582 | 0,8913 | 0,6595 | 0,4527 | 0,3004 | 0,1723 | 0,0785 | 0,0187 | 0,0070 | 0,0017 | 0,0452 | 0,1243 | 0,2400 | 0,3925 | 0,5823 | 0,8091 | 1,0727 | 1,3732 | 1,7105 | 2,0847 |
| -6 | 2,2424 | 1,8555 | 1,5251 | 1,2205 | 0,9513 | 0,7172 | 0,5178 | 0,3529 | 0,2222 | 0,1257 | 0,0640 | 0,0373 | 0,0464 | 0,0919 | 0,1745 | 0,2947 | 0,4524 | 0,5473 | 0,8790 | 1,1473 | 1,4523 | 1,7939 | 2,1723 |
| -8 | 2,3521 | 1,9732 | 1,6305 | 1,3236 | 1,0517 | 0,8145 | 0,6121 | 0,4438 | 0,3096 | 0,2099 | 0,1455 | 0,1174 | 0,1269 | 0,1748 | 0,2614 | 0,3867 | 0,5500 | 0,7507 | 0,9879 | 1,2613 | 1,5710 | 1,9174 | 2,3006 |
| -10 | | 2,1235 | 1,7783 | 1,4683 | 1,1931 | 0,9525 | 0,7453 | 0,5742 | 0,4358 | 0,3320 | 0,2644 | 0,2348 | 0,2445 | 0,2947 | 0,3854 | 0,5159 | 0,6852 | 0,8920 | 1,1352 | 1,4141 | 1,7293 | 2,0810 | |
| -12 | | 2,3169 | 1,9586 | 1,6552 | 1,3763 | 1,1318 | 0,9214 | 0,7449 | 0,6018 | 0,4933 | 0,4222 | 0,3908 | 0,4007 | 0,4530 | 0,5474 | 0,6828 | 0,8580 | 1,0712 | 1,3205 | 1,6057 | 1,9269 | 2,2848 | |
| -14 | | | 2,2018 | 1,8845 | 1,6016 | 1,3527 | 1,1377 | 0,9564 | 0,8083 | 0,6950 | 0,6203 | 0,5872 | 0,5972 | 0,5512 | 0,7487 | 0,8887 | 1,0695 | 1,2889 | 1,5449 | 1,8367 | 2,1645 | | |
| -16 | | | | 2,1555 | 1,8691 | 1,6155 | 1,3956 | 1,2092 | 1,0561 | 0,9383 | 0,8602 | 0,8256 | 0,8357 | 0,8910 | 0,9910 | 1,1348 | 1,3207 | 1,5452 | 1,8088 | 2,1076 | | | |
| -18 | | | | | 2,1791 | 1,9205 | 1,6955 | 1,5038 | 1,3459 | 1,2243 | 1,1436 | 1,1078 | 1,1179 | 1,1740 | 1,2757 | 1,4225 | 1,6127 | 1,8437 | 2,1129 | | | | |
| -20 | | | | | | 2,2684 | 2,0378 | 1,8409 | 1,6788 | 1,5542 | 1,4718 | 1,4353 | 1,4453 | 1,5017 | 1,6043 | 1,7531 | 1,9467 | 2,1826 | | | | | |
| -22 | | | | | | | | 2,2219 | 2,0559 | 1,9292 | 1,8457 | 1,8089 | 1,8188 | 1,8753 | 1,9783 | 2,1283 | | | | | | | |
| -24 | | | | | | | | | | | | 2,2290 | | | | | | | | | | | |

**Fig. 18a**

EP 3 598 214 B1

| X \ Y | -22 | -20 | -18 | -16 | -14 | -12 | -10 | -8 | -6 | -4 | -2 | 0 | 2 | 4 | 6 | 8 | 10 | 12 | 14 | 16 | 18 | 20 | 22 |
|---|---|---|---|---|---|---|---|---|---|---|---|---|---|---|---|---|---|---|---|---|---|---|---|
| 24 | | | | | | | | | | | | 3,1026 | | | | | | | | | | | |
| 22 | | | | | | | | 2,8724 | 2,7320 | 2,6330 | 2,5738 | 2,5534 | 2,5715 | 2,6284 | 2,7245 | 2,8513 | | | | | | | |
| 20 | | | | | | 2,7827 | 2,5634 | 2,3882 | 2,2544 | 2,1599 | 2,1033 | 2,0839 | 2,1013 | 2,1557 | 2,2475 | 2,3778 | 2,5486 | 2,7623 | | | | | |
| 18 | | | | | 2,6118 | 2,3574 | 2,1477 | 1,9794 | 1,8501 | 1,7581 | 1,7028 | 1,6838 | 1,7010 | 1,7542 | 1,8436 | 1,9697 | 2,1337 | 2,3379 | 2,5866 | | | | |
| 16 | | | | 2,5386 | 2,2475 | 2,0029 | 1,7995 | 1,6345 | 1,5053 | 1,4143 | 1,3585 | 1,3395 | 1,3570 | 1,4107 | 1,5003 | 1,6254 | 1,7853 | 1,9843 | 2,2224 | 2,5050 | | | |
| 14 | | | 2,5589 | 2,2289 | 1,9474 | 1,7083 | 1,5071 | 1,3416 | 1,2111 | 1,1165 | 1,0590 | 1,0393 | 1,0576 | 1,1134 | 1,2056 | 1,3329 | 1,4945 | 1,6904 | 1,9229 | 2,1960 | 2,5158 | | |
| 12 | | 2,6704 | 2,2981 | 1,9774 | 1,7012 | 1,4537 | 1,2609 | 1,0914 | 0,9552 | 0,8573 | 0,7958 | 0,7762 | 0,7958 | 0,8547 | 0,9513 | 1,0833 | 1,2487 | 1,4453 | 1,6771 | 1,9445 | 2,2548 | 2,6151 | |
| 10 | | 2,4540 | 2,0905 | 1,7756 | 1,5013 | 1,2622 | 1,0551 | 0,8797 | 0,7381 | 0,6338 | 0,5698 | 0,5481 | 0,5590 | 0,6316 | 0,7336 | 0,8718 | 1,0431 | 1,2450 | 1,4772 | 1,7426 | 2,0458 | 2,3977 | |
| 8 | 2,6982 | 2,2875 | 1,9300 | 1,6175 | 1,3426 | 1,1001 | 0,8874 | 0,7051 | 0,5566 | 0,4455 | 0,3787 | 0,3558 | 0,3871 | 0,4444 | 0,5521 | 0,6971 | 0,8751 | 1,0826 | 1,3182 | 1,5840 | 1,8854 | 2,2300 | 2,6265 |
| 6 | 2,5712 | 2,1661 | 1,8117 | 1,4996 | 1,2227 | 0,9760 | 0,7574 | 0,5683 | 0,4131 | 0,2985 | 0,2263 | 0,2021 | 0,2256 | 0,2954 | 0,4083 | 0,5598 | 0,7444 | 0,9576 | 1,1972 | 1,4549 | 1,7656 | 2,1058 | 2,4974 |
| 4 | 2,4881 | 2,0854 | 1,7331 | 1,4200 | 1,1405 | 0,8895 | 0,6656 | 0,4705 | 0,3096 | 0,1895 | 0,1154 | 0,0902 | 0,1147 | 0,1873 | 0,3047 | 0,4616 | 0,6518 | 0,8599 | 1,1134 | 1,3834 | 1,6848 | 2,0246 | 2,4114 |
| 2 | 2,4452 | 2,0457 | 1,6921 | 1,3775 | 1,0952 | 0,8406 | 0,6122 | 0,4125 | 0,2477 | 0,1244 | 0,0483 | 0,0225 | 0,0478 | 0,1225 | 0,2431 | 0,4039 | 0,5982 | 0,8199 | 1,0664 | 1,3387 | 1,6414 | 1,9812 | 2,3652 |
| 0 | 2,4431 | 2,0421 | 1,6871 | 1,3705 | 1,0858 | 0,8284 | 0,5971 | 0,3948 | 0,2278 | 0,1030 | 0,0260 | 0,0000 | 0,0258 | 0,1019 | 0,2244 | 0,3873 | 0,5837 | 0,8075 | 1,0559 | 1,3300 | 1,6343 | 1,9750 | 2,3559 |
| -2 | 2,4768 | 2,0735 | 1,7162 | 1,3975 | 1,1107 | 0,8515 | 0,6189 | 0,4160 | 0,2489 | 0,1242 | 0,0475 | 0,0218 | 0,0481 | 0,1245 | 0,2475 | 0,4107 | 0,6073 | 0,8314 | 1,0805 | 1,3560 | 1,6618 | 2,0041 | 2,3905 |
| -4 | 2,5457 | 2,1385 | 1,7779 | 1,4565 | 1,1679 | 0,9078 | 0,6755 | 0,4738 | 0,3083 | 0,1853 | 0,1098 | 0,0850 | 0,1116 | 0,1879 | 0,3099 | 0,4718 | 0,6668 | 0,8899 | 1,1388 | 1,4150 | 1,7224 | 2,0668 | 2,4559 |
| -6 | 2,6487 | 2,2358 | 1,8706 | 1,5459 | 1,2554 | 0,9950 | 0,7638 | 0,5646 | 0,4020 | 0,2816 | 0,2033 | 0,1847 | 0,2116 | 0,2872 | 0,4074 | 0,5668 | 0,7592 | 0,9802 | 1,2284 | 1,5051 | 1,8142 | 2,1616 | 2,5549 |
| -8 | 2,7847 | 2,3644 | 1,9930 | 1,6640 | 1,3710 | 1,1103 | 0,8807 | 0,6842 | 0,5251 | 0,4081 | 0,3373 | 0,3154 | 0,3426 | 0,4172 | 0,5353 | 0,6916 | 0,8810 | 1,0999 | 1,3472 | 1,6248 | 1,9364 | 2,2881 | 2,6872 |
| -10 | | 2,5236 | 2,1444 | 1,8096 | 1,5131 | 1,2512 | 1,0227 | 0,8290 | 0,6733 | 0,5597 | 0,4917 | 0,4714 | 0,4990 | 0,5727 | 0,6886 | 0,8422 | 1,0291 | 1,2454 | 1,4937 | 1,7731 | 2,0888 | 2,4457 | |
| -12 | | 2,7138 | 2,3248 | 1,9821 | 1,6803 | 1,4159 | 1,1873 | 0,9955 | 0,8429 | 07325 | 0,6672 | 0,6484 | 0,6763 | 0,7490 | 0,8633 | 1,0151 | 1,2007 | 1,4178 | 1,6667 | 1,9499 | 2,2719 | 2,6382 | |
| -14 | | | 2,5353 | 2,1822 | 1,8725 | 1,6032 | 1,3729 | 1,1818 | 1,0314 | 0,9238 | 0,8607 | 0,8431 | 0,8710 | 0,9430 | 1,0554 | 1,2078 | 1,3940 | 1,6132 | 1,8562 | 2,1560 | 2,4872 | | |
| -16 | | | | 2,4118 | 2,0911 | 1,8140 | 1,5793 | 1,3870 | 1,2375 | 1,1317 | 1,0702 | 1,0535 | 1,0814 | 1,1531 | 1,2668 | 1,4196 | 1,6088 | 1,8331 | 2,0935 | 2,3935 | | | |
| -18 | | | | | 2,3388 | 2,0507 | 1,8086 | 1,6122 | 1,4514 | 1,3558 | 1,2951 | 1,2788 | 1,3070 | 1,3794 | 1,4948 | 1,6513 | 1,8465 | 2,0796 | 2,3516 | | | | |
| -20 | | | | | | 2,3168 | 2,0542 | 1,8606 | 1,7054 | 1,5978 | 1,5364 | 1,5204 | 1,5495 | 1,6238 | 1,7432 | 1,9060 | 2,1107 | 2,3553 | | | | | |
| -22 | | | | | | | | 2,1364 | 1,9740 | 1,8618 | 1,7982 | 1,7820 | 1,8128 | 1,8908 | 2,0161 | 2,1882 | | | | | | | |
| -24 | | | | | | | | | | | | 2,0697 | | | | | | | | | | | |

**Fig. 18b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8904986 A1
- WO 9913361 A1
- US 2010238400 A1
- WO 10109154 A1
- WO 0155752 A1
- DE 102008041869 A1
- EP 2177943 A1
- EP 0347917 A1
- WO 2011093929 A1
- EP 2115527 B1
- DE 102015205721 A1
- EP 2383603 B1
- EP 0857993 B2
- EP 16195139

**In der Beschreibung aufgeführte Nicht-Patentliteratur**

- **YUKI SHITANOKI et al.** Application of Graded-Index for Astigmatism Reduction in Progressive Addition Lens. *Applied Physics Express*, 01 March 2009, vol. 2, 032401
- 3., komplett überarbeitete und erweiterte Auflage. **ALBERT J. AUGUSTIN**. Augenheilkunde. Springer, 2007, 1272
- **HEINZ DIEPES** ; **RALF BLENDOWSKE**. Optik und Technik der Brille. Optische Fachveröffentlichung GmbH, 2002, 482
- **WERNER KÖPPEN**. Konzeption und Entwicklung von Progressivgläsern. *Deutsche Optiker Zeitung DOZ*, October 1995, 42-46
- **NACH HEINZ DIEPES** ; **RALF BLENDOWSKE**. *Optik und Technik der Brille*, 2005, 256